(19) Europäisches Patentamt
European Patent Office
Office européen des brevets

(11) EP 3 568 444 B1

(12) EUROPEAN PATENT SPECIFICATION

(45) Date of publication and mention of the grant of the patent:
**05.07.2023 Bulletin 2023/27**

(21) Application number: **18700806.5**

(22) Date of filing: **10.01.2018**

(51) International Patent Classification (IPC):
***C09D 11/037*** *(2014.01)* ***B41M 3/14*** *(2006.01)*
***C09D 11/50*** *(2014.01)*

(52) Cooperative Patent Classification (CPC):
**C09D 11/037; B41M 3/14; B42D 25/373; C09D 11/50**

(86) International application number:
**PCT/GB2018/050062**

(87) International publication number:
**WO 2018/130827 (19.07.2018 Gazette 2018/29)**

(54) **INK CONTAINING A SECURITY ELEMENT**

TINTE MIT EINEM SICHERHEITSELEMENT

ENCRE CONTENANT UN ÉLÉMENT DE SÉCURITÉ

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **10.01.2017 GB 201700420**

(43) Date of publication of application:
**20.11.2019 Bulletin 2019/47**

(73) Proprietor: **The Royal Mint Limited**
**Pontyclun CF72 8YT (GB)**

(72) Inventors:
- **MARTIN, Ciarán Joseph**
**Llantrisant**
**Pontyclun CF72 8YT (GB)**
- **JAMES, David Mathew**
**Llantrisant**
**Pontyclun CF27 8YT (GB)**
- **ROGERS, Sarah**
**Llantrisant**
**Pontyclun CF72 8YT (GB)**

(74) Representative: **Haseltine Lake Kempner LLP**
**One Portwall Square**
**Portwall Lane**
**Bristol BS1 6BH (GB)**

(56) References cited:

| | |
|---|---|
| EP-A1- 0 253 543 | WO-A1-2009/096492 |
| WO-A2-01/39135 | WO-A2-2014/181127 |
| US-A1- 2007 190 298 | US-A1- 2007 281 140 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 568 444 B1

## Description

The present application relates to inks containing a security element, e.g. luminescent particles. The ink can be used in authenticating objects, for example metallic objects, such as precious metal items.

The authentication of metal objects has been an ongoing project for many industries, such as the minting industry, aerospace and automotive industries. Some technologies have been developed that can enable authentication of a metal object. One such technology involves plating, either by electroplating or electroless plating, to co-deposit a metal layer with luminescent particles therein. While these technologies are successful, they involve either electrical equipment (in the case of electroplating) or sacrificial species (in the case of electroless plating) to effect deposition. However, it may be desirable, in some circumstances, to avoid using electrical equipment and sacrificial species. Plating techniques are also very effective in coating whole objects or substantial parts of objects, but this is not always desirable. Electroplating is also limited to plating metallic objects, but in some circumstances, it may be desirable to plate non-metallic objects. Electroless plating is more suitable for coating non-metallic objects, but there is no way of plating without a sacrificial species. It would be desirable to develop a technique that could be used equally to authenticate metal and non-metal objects, while avoiding plating.

Precious metals, such as gold, silver and platinum, are important commodities and people can buy and sell them as part of an investment portfolio. While much effort is put into ensuring a trustworthy supply chain from the creator of the precious metal bars to the consumer, fake metal bars still sometimes find their way into the system. As an example, it has been found that rogue individuals can intercept the supply chain, obtain precious metal bars, remove a portion of the bar (e.g. by drilling), fill this with lower value metals of similar density, and cover up the drilled portion, so it matches the colour and lustre of the rest of the bar. Sometimes the density and the appearance of the forged bars match authentic bars so closely that it is difficult, purely by visual inspection and weighing the bars, to determine the difference, even by an experienced professional in the industry. With these types of forgery, often the only way to determine if a precious metal bar has been tampered with is to cut it into segments. This is time consuming, and can result in a loss of the precious metal due to cutting, and the damage of authentic bars, if they are falsely suspected of being fake.

There is a need to try to limit the forgery in precious metal supply chains and provide ways to detect forged items that are cost-effective and easy to implement, and ideally avoid one or more of the problems mentioned above. Whatever technique is used should ideally avoid any damage to a metal bar or loss of precious metal, and the metal bar should present a precious metal exterior surface, with any coating ideally indistinguishable from the underlying substrate.

The tamper detection in other fields is also important, and ideally the technique should be widely applicable to a variety of objects of different shapes.

EP 0253543 discloses a coating composition which comprises a mixture of a finely particulate lustrous metallic component, a luminescent material and an inert component in an amount sufficient that the composition is substantially homogenous.

US 2007/281140 discloses a reflective feature, e.g., a reflective security feature or a reflective decorative feature, preferably disposed on a substrate, the feature comprising a reflective layer comprising nanoparticles and a colorant, which preferably modifies a spectrum of light, e.g., a visible spectrum, a UV spectrum or an IR spectrum that is reflected by the reflective layer.

US 2007/190298 discloses a reflective security feature comprising metallic particles.

WO 02/39135 discloses a printing ink which comprises at least one film forming binder and a plurality of at least one type of electrically conductive micro-wires, wherein the mean length of said type of micro-wires is in a range of between 3 to 250 $\mu$m.

WO 2009/096492 discloses a flake body which contains metal oxide as a main component by a sol-gel method, and includes an oxide matrix composed of the metal oxide, a fluorescent dye dispersed in the oxide matrix and an organic acid.

WO 2014/181127 provides for a method for plating articles, the method comprising providing a plating solution comprising a liquid medium, a precursor species suitable for forming a metallic layer on the articles, and a plurality of luminescent particles suspended in the liquid medium, at least some of which have a diameter of 10 $\mu$m or less; and plating the articles within the plating solution, such that the precursor species forms the metallic layer on the articles and the luminescent particles are deposited within the metallic layer while it is formed.

## Summary

In an aspect, there is provided a method for forming a layer on an item, the method comprising:

depositing on the item an ink containing a security element and a species for forming a metal matrix to form the layer, which comprises a metal matrix having embedded therein the security element, wherein the species for forming

a metal matrix comprises a metal compound of a first metal, wherein the ink further comprises a liquid carrier, and wherein the metal compound is dissolved in the liquid carrier;
wherein the metal compound is deposited on the item and then the liquid carrier is removed, and
wherein decomposition of the metal compound is effected by raising the temperature of the ink after deposition on the item to produce the metal matrix comprising the first metal in elemental or alloyed form.

In an aspect, there is provided an ink composition comprising:

a liquid carrier,
a security element, and
a species for forming a metal matrix, which is:
a metal compound dissolved in the liquid carrier, the metal compound being convertible to a metal matrix comprising the metal of the metal complex in elemental or alloyed form wherein the metal compound is thermally decomposable, such that, on decomposition, it produces the metal matrix comprising the metal of the metal compound in elemental or alloyed form. The security element may be dispersed, e.g. suspended or dissolved in the liquid carrier. The security element may be in solid form and suspended in the liquid carrier. In an embodiment, the security element may be in liquid form and dispersed in the liquid carrier. The security element may be detectable spectroscopically after formation of the metal matrix.

Herein is also disclosed, a method for forming a layer on an item, the method comprising:

(i) depositing on the item an ink comprising a liquid carrier, the liquid carrier having therein a security element and a metal compound
(ii) effecting conversion of the metal of the metal compound to a metal matrix comprising the metal in elemental or alloyed form, with the metal matrix having embedded therein the security element. The metal compound and/or security element may be in solid or liquid form and dispersed in the liquid carrier. The metal compound may be in solid form and suspended in the liquid carrier, and optionally the security element is in solid form and suspended in the liquid carrier. The metal compound may be dissolved in the liquid carrier, and optionally the security element is in solid form and suspended in the liquid carrier.

Herein is also disclosed, an ink composition comprising

a liquid carrier,
a security element, contained within the liquid carrier and
a metal compound dispersed in the liquid carrier, the metal complex being convertible to a metal matrix comprising the metal of the metal complex in elemental or alloyed form. The metal compound may be in solid or liquid form and dispersed in the liquid carrier. The metal compound may be in solid form and suspended in the liquid carrier. The metal compound may be dissolved in the liquid carrier.

Here is also disclosed an item having thereon
a printed layer comprising a metal matrix having embedded therein a security element.
The present inventors have developed an ink for authenticating an item, which may be a metal item or a non-metal item.
Herein is also disclosed, a method for forming a layer on an item, the method comprising:
depositing on the item an ink containing luminescent particles and a species for forming a metal matrix to form the layer, which comprises a metal matrix having embedded therein the luminescent particles.
Herein is also disclosed, an ink composition comprising:

a liquid carrier,
luminescent particles, which are suspended in the liquid carrier and
a species for forming a metal matrix.

Herein is also disclosed, a method for forming a layer on an item, the method comprising:

(i) depositing on the item an ink comprising a liquid carrier, the liquid carrier having suspended therein luminescent particles and dispersed therein (e.g. dissolved or suspended therein) a metal compound
(ii) effecting conversion of the metal of the metal compound to a metal matrix comprising the metal in elemental or alloyed form, with the metal matrix having embedded therein the luminescent particles.

Herein is also disclosed, an ink composition comprising

a liquid carrier,
luminescent particles, which are suspended in the liquid carrier and
a metal compound dispersed in (e.g. dissolved or suspended in) the liquid carrier, the metal complex being convertible to a metal matrix comprising the metal of the metal complex in elemental or alloyed form.

Herein is also disclosed, an item having thereon
a printed layer comprising a metal matrix having embedded therein luminescent particles.
The present inventors have developed an ink for authenticating an item, which may be a metal item or a non-metal item.
The ink can be applied to the item in any suitable way, e.g. by printing it onto the item. The printed ink has been found to produce a layer comprising the security element, e.g. luminescent particles, embedded in the ink. Importantly, the security element has (e.g. the luminescent particles) have been found to be embedded such that they are detectable, with at least some of the particles being partially embedded such that they have exposed portion extending above the surface of the metal matrix formed around them. The metal matrix itself can be very similar to the material of the underlying item, the metal matrix is formed from a metal compound dissolved in a liquid carrier, and presents a very smooth, homogenous layer. The ink and methods described herein may therefore be used to authenticate items, such that a portion of the items have an invisible (at least to the naked eye) authenticated portion. Additionally, the inks have been found to be durable and the metal matrix forms a substantial bond with the items below.
The present inventors have also found that the application of inks as described herein, with or without the luminescent particles, to items, e.g. items used in the minting industry, can be an effective alternative to plating such items.
Herein is disclosed, a method for forming a layer on an item, the method comprising: depositing on the item an ink containing a species for forming a metal matrix and optionally forming the layer comprising a metal matrix on the item. Herein is also disclosed, a method for forming a layer on an item, the method comprising:
depositing on the item an ink containing a species for forming a metal matrix to form the layer comprising a metal matrix having embedded therein the luminescent particles. The ink may or may not further contain luminescent particles, and if the ink contains luminescent particles and the metal matrix formed on the item, the luminescent particles are embedded in the metal matrix. The item may be selected bar, ingot, disc, coin, round or grain and/or comprise a second metal, as described herein.
Herein is disclosed, an ink composition comprising:

a liquid carrier, and
a species for forming a metal matrix.

Herein is disclosed, a method for forming a layer on an item, the method comprising:

(i) depositing on the item an ink comprising a liquid carrier, the liquid carrier having dispersed therein (e.g. dissolved or suspended therein) a metal compound
effecting conversion of the metal of the metal compound to a metal matrix comprising the metal in elemental or alloyed form. The ink may further comprise luminescent particles suspended in the liquid carrier, and, if so, the metal matrix may have embedded therein the luminescent particles. The item may be selected bar, ingot, disc, coin, round or grain and/or comprise a second metal, as described herein.

Herein is also disclosed an item having thereon
a printed layer comprising a metal matrix. The metal matrix may or may not have embedded therein luminescent particles. The item may be selected bar, ingot, disc, coin, round or grain and/or comprise a second metal, as described herein. The item may be producible in accordance with a method described herein.

## Brief Description of the Figures

Figure 1 illustrates two alumina test slides screen printed with an ink as described herein The right-hand slide was printed with a square block of gold ink containing luminescent particles. The left-hand slide was printed with a more intricate wire pattern of gold ink containing luminescent particles.

Figure 2 illustrates items (in this case gold coin blanks) printed with an ink as described herein using the same

patterns for printing the items in Figure 1 (The left-hand coin blank was printed with a square block of gold ink containing luminescent particles. The right-hand coin blank was printed with a more intricate wire pattern of gold ink containing luminescent particles.

Figure 3 illustrates a hand-held detector detecting the luminescent particles on the printed coin blank of Figure 2 (on the left hand side).

Fig. 4 shows a scanning electron micrograph image taken of the printed coin blank of Figure 2 (right hand side) at relatively low magnification. In this Figure, lines from printing ink can clearly be visualised as can black particulates from added carbon black.

Figure 5 shows a scanning electron micrograph (SEM) image of the printed coin blank of Figure 2 (right hand side) at higher magnification than Figure 4.

Figure 6 shows an accompanying energy dispersive X-ray (EDX) spectroscopy spectra of the same printed coin blank as Figure 5. It shows only the presence of gold and carbon on the surface of the coin blank.

Figure 7 shows a second EDX spectrum of the same printed coin blank as Figure 5 located on one suspected additive particle, i.e. the particle shown in the SEM spectrum of Figure. 8. The EDX spectrum confirms presence as significant deviations from purely gold spectra are present in the EDX spectra.

Figure 8, as mentioned, shows an SEM image of the same printed coin blank as Figure 5.

Figure 9A shows a silver MOD ink as described in Example 2 on brass plated steel.

Figure 9B shows the detection of luminescent particles on the item of Figure 9A using a hand-held detector.

Figure 9C is an electron micrograph showing the ink-substrate interface of the item of Figure 9A.

Figure 9D is an EDX spectrum of the substrate of the item of 9A showing cupronickel (from the point shown in Figure 9C marked ’Spectrum 1’).

Figure 9E is an electron micrograph showing ink substrate interface of the item of Figure 9A.

Figure 9F is an EDX spectrum of the coating of the item of 9A showing silver as the predominant element (from the point shown in Figure 9E marked ’Spectrum 2’).

Figure 9G is a higher magnification electron micrograph than Figure 9E, although on the same item, and focussed on the silver coating.

Figure 9H is an EDX spectrum from the point marked ’Spectrum 1’ on Figure 9G; with the higher magnification, this reveals the presence of luminescent particles.

Figure 10A shows a silver MOD ink as described in Example 2 on copper plated steel.

Figure 10B and 10C show, respectively, positive and negative responses using a hand-held detector to detect the luminescent particles.

Figures 10D shows an electron micrograph showing ink-substrate interface of the item of Figure 10A.

Figure 10E is an EDX spectrum of the substrate of the item of 10A showing copper as the predominant element (from the point shown in Figure 10D marked ’Spectrum 1’).

Figures 10F shows an electron micrograph showing ink-substrate interface of the item of Figure 10A.

Figure 10G is an EDX spectrum of the coating of the item of 10A showing silver as the predominant element (from the point shown in Figure 10F marked ’Spectrum 2’).

Figure 10H is a higher magnification electron micrograph than Figure 10F, but again focussed on the silver coating. Figure 10I is an EDX spectrum from the point marked 'Spectrum 2' on Figure 10H; with the higher magnification, this reveals the presence of luminescent particles.

Figure 11A shows silver MOD ink (C2040712D5) on 12 micron polyester film. The film is backing for a hot stamping foil. SEM images were not attempted as likelihood is PET film would be damaged during imaging.

Figure 11B shows a positive response using a hand-held detector to detect the luminescent particles in the ink on the polyester film of Figure 11A.

Figure 12A shows a copper nanoparticle ink on a glass substrate.

Figure 12B shows a positive response using a hand-held detector to detect the luminescent particles in the ink on the glass substrate of Figure 12A.

Figure 13A shows a copper nanoparticle ink on a cupronickel 75/25 substrate.

Figure 13B shows a positive response using a hand-held detector to detect the luminescent particles in the ink on the cupronickel 75/25 substrate of Figure 13A.

Figures 13C shows an electron micrograph showing ink-substrate interface of the item of Figure 13A.

Figure 13D is an EDX spectrum of the substrate of the item of 13A showing copper and nickel as the predominant elements, i.e. the elements forming the cupronickel alloy (from the point shown in Figure 13C marked 'Spectrum 2').

Figures 13E shows an electron micrograph showing ink-substrate interface of the item of Figure 13A.

Figure 13F is an EDX spectrum of the coating of the item of 13A showing copper as the predominant (from the point shown in Figure 13E marked 'Spectrum 1').

Figure 14A shows a copper nanoparticle ink on an alumina slide.

Figure 14B shows a positive response using a hand-held detector to detect the luminescent particles in the ink on the alumina slide of Figure 14A.

Figure 15A shows the reactive silver ink on a brass substrate, with a detector showing a positive result for the detection of luminescent particles in the ink.

Figure 15B shows the reactive silver ink on a brass substrate (i.e. the same item as shown in Figure 15A), with a detector showing a negative result for the detection of luminescent particles from a part of the brass substrate not having the ink on its surface.

## Detailed Description

The various aspects and optional and preferred features will be described below. Any optional or preferred feature may be combined with any aspect or any other optional or preferred feature unless otherwise indicated.

In an aspect, there is provided a method for forming a layer on an item, the method comprising:

depositing on the item an ink containing a security element and a species for forming a metal matrix to form the layer, which comprises the metal matrix having embedded therein the security element, wherein the species for forming a metal matrix comprises a metal compound of a first metal, wherein the ink further comprises a liquid carrier, and wherein the metal compound is dissolved in the liquid carrier;
wherein the metal compound is deposited on the item and then the liquid carrier is removed, and
wherein decomposition of the metal compound is effected by raising the temperature of the ink after deposition on the item to produce the metal matrix comprising the first metal in elemental or alloyed form.

Herein is also disclosed, a method for forming a layer on an item, the method comprising:
depositing on the item an ink containing luminescent particles and a species for forming a metal matrix to form the layer,

which comprises the metal matrix having embedded therein the luminescent particles.

The metal of the metal matrix maybe defined as a first metal herein.

***Liquid Carrier***

The ink preferably comprises a liquid carrier. The security element, e.g. the luminescent particles, are preferably suspended in the liquid carrier and the species for forming a metal matrix is dissolved in the liquid carrier (e.g. if a metal compound or complex, as described below).

The liquid carrier may be aqueous, and may or may not include an organic solvent. The liquid carrier may comprise an organic solvent, and may or may not include water. The solvents can be polar or non-polar. The organic solvent may be selected from amines, amides, alcohols, water, ketones, unsaturated hydrocarbons, saturated hydrocarbons, mineral acids organic acids and bases. The organic solvent may be selected from alcohols, amines, amides, ketones, ethers, aldehydes and alkenes.

The organic solvent may be selected from alcohols (e.g. alkanols, e.g. selected from 2-Octanol, Benzyl alcohol, 4-hydroxy-3methoxy benzaldehyde, isodecanol and butylcarbitol)), terpene alcohols (e.g. selected from alpha-terpineol and beta-terpineol), ethers (e.g. diethylether and cineol), esters (e.g. selected from 2,2,4 trimethylpentanediol-1,3-monoisobutyrate, butyl carbitol acetate, butyl oxalate, dibutyl phthalate, dibutyl benzoate, butyl cellosolve acetate, ethylene glycol diacetate, ethylene glycol diacetate) amides (e.g. selected from N-methyl-2-pyrrolidone, N,N-dimethyl formamide, N,N-dimethyl acetamide), aromatics (e.g. xylenes), substituted aromatics (e.g. selected from nitrobenzene and o-nitrotoluene), terpenes (e.g. selected from alpha-pinene, beta-pinene, dipentene and dipentene oxide) and oils (e.g. selected from rosemary, lavender, fennel, sassafras, wintergreen, anise oils, camphor, and turpentines). The organic solvent may be selected from acetone, tetrahydrofuran, toluene, xylene, ethanol, methanol, 2-butanone, diethylene glycol, ethylene glycol, hexylene glycol, N,N, -dimethylacetamide (DMAc), diethyleneglycol butylether (DEGBE), ethanolamine and N-methyl pyrrolidone and terpeneol.

***Species for forming a metal matrix***

The species for forming a metal matrix is a precursor compound for forming a metal matrix, such as a metal compound or a metal complex, as described below. The metal of the metal matrix maybe defined as a first metal herein.

The first metal may be selected from a transition metal. The first metal may be selected from Group 3, Group 4, Group 5, Group 6, Group 7, Group 8, Group 9, Group 10, Group 11, Group 12, Group 13 and Group 14 of the periodic table, and alloys of any one or more thereof. The first metal may be selected from scandium, titanium, vanadium, chromium, manganese, iron, cobalt, nickel, copper, zinc, yttrium, zirconium, niobium, molybdenum, technetium, ruthenium, rhodium, palladium, silver, cadmium, hafnium, tantalum, tungsten, rhenium, osmium, iridium, platinum, gold, mercury and aluminium, and alloys of one or more thereof. Optionally, the first metal is a precious metal selected from gold, silver, platinum, palladium, ruthenium, osmium, rhenium, rhodium and iridium, and alloys of one or more thereof. Optionally, the first metal is selected from silver, nickel, platinum, gold, palladium, copper and ruthenium.

To produce an alloy, the species for forming a metal matrix may comprise a plurality of first metals. For example, the species for forming a metal matrix may comprise a plurality of first metals, e.g. gold and palladium, e.g. in the form of a gold compound and a palladium compound, which together will form an alloy of gold and palladium, sometimes termed white gold.

The metal matrix formed in the method and/or on the item may comprise at least 80wt% of the first metal in elemental or alloyed form, optionally at least 85wt% of the first metal in elemental or alloyed form, at least 90wt% of the first metal in elemental or alloyed form, at least 95wt% of the first metal in elemental or alloyed form, at least 98wt% of the first metal in elemental or alloyed form, at least 99wt% of the first metal in elemental or alloyed form. The metal matrix may consist of the first metal in elemental or alloyed form.

Typically, in the metal compound or complex used as the species for forming a metal matrix, the components that are not the first metal would not be incorporated into the metal matrix to any great extent, if at all, on its formation. That said, in an embodiment, the species for forming a metal matrix may contain a detectable chemical species, e.g. in a ligand or compound as described herein, other than the first metal, which may be incorporated into the metal matrix on its formation.

***Precursor compound***

The species for forming a metal matrix may be a precursor compound, i.e. a compound containing the first metal in ionic form (as a cation). The species for forming a metal matrix may be a metal complex. The metal complex may be defined as a complex containing a metal in ionic form with one or more ligands coordinated thereto. The metal complex may comprise a metal, an anionic ligand and a coordinating ligand, which may be neutral in charge. The one

or more ligands may be mono-, bi- or multidentate. The one or more ligands may be such that they decompose thermally photochemically, or chemically (e.g. in the presence of catalyst, i.e. catalytically), and optionally the one or more ligands decompose to one or more gases.

Preferably, the metal complex is stable at room temperature, e.g. a temperature of from 20 °C to 30 °C, but decomposes at elevated temperature, e.g. at 80 °C or above, to form a metallic matrix comprising the first metal in elemental or alloyed form. Such inks are sometimes termed metal-organic decomposition inks, particularly if they decompose at temperatures of about 200 °C or above. If they decompose at a relatively low temperature, e.g. below 200 °C, they are sometimes termed reactive organometallic inks.

The one or more ligands may be selected from a β-diketonate, a ketoiminate, an amidinate, an alkoxide, a phosphane, a carboxylate and an amine. The one or more ligands may include a ligand selected from a β-diketonate, a ketoiminate, an amidinate, an alkoxide, a phosphane, a carboxylate and an amine, and optionally a further ligand that is capable of forming a π-bond with the metal, such as an alkene, including, but not limited to a cycloalkane, such as cyclooctadiene, e.g. 1 ,4-cyclooctadiene or a silane having an alkene group, e.g. a silane of the formula $SiR_a,R_b,R_c,R_d$, wherein at least one of $R_a$, $R_b$, $R_c$ and $R_d$ is an alkene, e.g. $-(CH_2)_n-(CH=CH_2)$, where n is 0 or an integer of 1 or more, and the remaining groups are a hydrocarbon, e.g. an alkane, or a siloxane, at least some of the side-chains of which comprise an alkene, e.g. $-(CH_2)_n-(CH=CH_2)$, where n is 0 or an integer of 1 or more.

The β-diketonate may be of the formula (I):

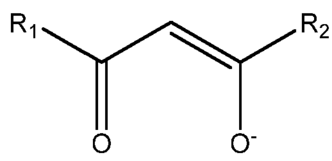

formula (I)

wherein each of $R_1$ and $R_2$ is independently selected from a hydrocarbon, a fluorocarbon and a hydrofluorocarbon, and optionally contain from 1 to 10 carbon atoms, optionally from 1 to 5 carbons, optionally from $CH_3$, $CH_2CH_3$, $CF_3$, $CF_2CF_3$, $CH_2CF_3$. In an embodiment, $R_1$ and $R_2$ are each $CH_3$. In an embodiment, $R_1$ is $CH_3$ and $R_2$ is $CF_3$. In an embodiment, $R_1$ and $R_2$ are each $CF_3$ (which may be termed hexafluroacetylacetonate or hfac).

The ketoiminate may be of the formula (II)

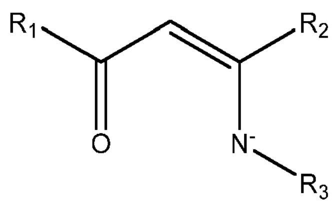

formula (II)

wherein each of $R_1$, $R_2$ and $R_3$ is independently selected from a hydrocarbon, a polyether, a fluorocarbon, a hydrofluorocarbon, each of which may optionally contain from 1 to 10 carbon atoms, optionally from 1 to 5 carbons, optionally from $CH_3$, $CH_2CH_3$, $CF_3$, $CF_2CF_3$, $CH_2CF_3$. In an embodiment, $R_1$ and $R_2$ are each $CH_3$, and $R_3$ may be selected from a polyether and an alkyl, e.g. a C1-C10 alkyl, e.g. methyl or ethyl. In an embodiment, $R_1$ is $CH_3$ and $R_2$ is $CF_3$, and $R_3$ may be selected from a polyether and an alkyl, e.g. a C1-C10 alkyl, e.g. methyl or ethyl.. In an embodiment, $R_1$ and $R_2$ are each $CF_3$, and $R_3$ may be selected from a polyether and an alkyl, e.g. a C1-C10 alkyl, e.g. methyl or ethyl.

The amidinate may be of the formula (III)

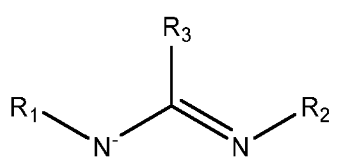

formula (III)

wherein each of $R_1$, $R_2$ and $R_3$ is independently selected from hydrogen, a hydrocarbon, a polyether, a fluorocarbon, a hydrofluorocarbon, each of which may optionally contain from 1 to 10 carbon atoms, optionally from 1 to 5 carbons, optionally from $CH_3$, $CH_2CH_3$, $CF_3$, $CF_2CF_3$, $CH_2CF_3$, and optionally at least one of $R_1$, $R_2$ and $R_3$, optionally at least $R_1$ and $R_2$ are each selected from a hydrocarbon, a polyether, a fluorocarbon, a hydrofluorocarbon, each of which may

optionally contain from 1 to 10 carbon atoms, optionally from 1 to 5 carbons, optionally from $CH_3$, $CH_2CH_3$, $CF_3$, $CF_2CF_3$, $CH_2CF_3$. In an embodiment, $R_1$, $R_2$ and $R_3$ are each a hydrocarbon, optionally selected from an alkyl group, an aryl group, an alkylaryl group, and an arylalkyl group, and the hydrocarbon may contain from 1 to 10 carbon atoms, optionally from 1 to 6 carbon atoms, optionally 1 to 5 carbon atoms, optionally 1, 2 or 3 carbon atoms, optionally methyl, ethyl and propyl, which may be n-propyl i-propyl. In an embodiment, $R_1$, $R_2$ and $R_3$ are each independent selected from methyl, ethyl and propyl, which may be n-propyl i-propyl. In an embodiment, $R_1$ and $R_2$ are each independent selected from methyl, ethyl and propyl, which may be n-propyl or i-propyl and $R_3$ is methyl. In an embodiment, $R_1$ and $R_2$ are each $CH_3$, and $R_3$ may be selected from a polyether and an alkyl, e.g. a C1-C10 alkyl, e.g. methyl or ethyl. In an embodiment, $R_1$ is $CH_3$ and $R_2$ is $CF_3$, and $R_3$ may be selected from a polyether and an alkyl, e.g. a C1-C10 alkyl, e.g. methyl or ethyl.. In an embodiment, $R_1$ and $R_2$ are each $CF_3$, and $R_3$ may be selected from a polyether and an alkyl, e.g. a C1-C10 alkyl, e.g. methyl or ethyl.

The alkoxide may be of the formula (IV)

$-O-R_4$ formula (IV)

wherein $R_4$ is an optionally substituted hydrocarbon, and optionally the hydrocarbon is an optionally substituted alkyl, and optionally an alkyl group having an oxygen atom or a nitrogen in alpha or beta position relative to 'O' in $-O-R_4$, and is optionally of the formula (V) or (VI)

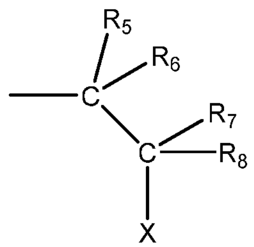

formula (V)

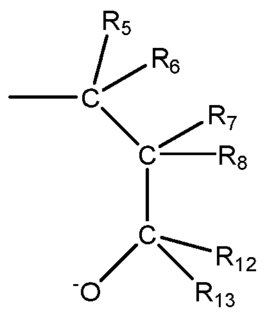

formula (VI)

wherein, in formula (V) $R_5$, $R_6$, $R_7$, $R_8$ are each selected from hydrogen and an optionally substituted hydrocarbon group, e.g. an optionally substituted alkyl group, and the hydrocarbon group may have from 1 to 10 carbons, optionally 1 to 5 carbons, optionally 1, 2, 3 or 4 carbons, and

-X is selected from $-NR_9R_{10}$, $OR_{11}$, wherein $R_9$, $R_{10}$, $R_{11}$ are each independently selected from an optionally substituted hydrocarbon, which may be an an optionally substituted alkyl, and optionally the hydrocarbon has have from 1 to 10 carbons, optionally 1 to 5 carbons, optionally 1, 2, 3 or 4 carbons. In an embodiment, in formula (V), $R_7$, $R_8$ are each hydrogen, $R_5$ and $R_6$ are selected from hydrogen and an optionally substituted hydrocarbon group, e.g. an optionally substituted alkyl group, and the hydrocarbon group may have from 1 to 10 carbons, optionally 1 to 5 carbons, optionally 1, 2, 3 or 4 carbons, and -X is selected from $-NR_9R_{10}$ and $OR_{11}$, wherein $R_9$, $R_{10}$, $R_{11}$ are each independently selected from an optionally substituted hydrocarbon, which may be an an optionally substituted alkyl, and optionally the hydrocarbon has have from 1 to 10 carbons, optionally 1 to 5 carbons, optionally 1, 2, 3 or 4 carbons,

wherein, in formula (VI) $R_5$, $R_6$, $R_7$, $R_8$ $R_{12}$, $R_{13}$ are each selected from hydrogen and an optionally substituted hydrocarbon group, e.g. an optionally substituted alkyl group, and the hydrocarbon group may have from 1 to 10 carbons, optionally 1 to 5 carbons, optionally 1, 2, 3 or 4 carbons.

In an embodiment, in formula (VI), $R_7$, $R_8$ are each hydrogen, $R_5$ and $R_6$ are selected from hydrogen and an optionally substituted hydrocarbon group, e.g. an optionally substituted alkyl group, and the hydrocarbon group may have from 1 to 10 carbons, optionally 1 to 5 carbons, optionally 1, 2, 3 or 4 carbons. In an embodiment $R_5$ and $R_6$ are each methyl, $R_7$, $R_8$ are each hydrogen, $R_{12}$ is Me and $R_{13}$ is hydrogen (which may be termed 2-methylpentane-2,4-bis(olate) or mpd).

In an embodiment, in formula (V), $R_5$, $R_6$, $R_7$, $R_8$ are each hydrogen, and X is $NMe_2$ (which may be termed 2-dimethylaminoethanolate or dmae). In an embodiment, $R_5$ is Me, $R_6$, $R_7$, $R_8$ are each hydrogen, and X is $NMe_2$ (which may be termed 1-dimethylaminopropan-2-olate or dmap). In an embodiment, in formula (V), $R_5$ is $-CH_2-NMe_2$, $R_6$, $R_7$, $R_8$ are each hydrogen, and X is $NMe_2$ (which may be termed 1,3-bis(dimethylamino)propan-2-olate or bis-dmap). In an embodiment, in formula (V), $R_5$, $R_6$, $R_7$, $R_8$ are each hydrogen, and X is OMe (which may be termed 2-methoxyethanolate or mee). In an embodiment, in formula (V), $R_5$ is Me, $R_6$, $R_7$, $R_8$ are each hydrogen, and X is OMe (which may be termed 1-methoxypropanol-2-olate). In an embodiment, in formula (V), $R_5$ and $R_6$ are each Me, $R_7$ and $R_8$ are each hydrogen, and X is OMe (which may be termed 1-methoxy-2-methyl-propanol-2-olate, mmp).

In an embodiment, in the alkoxide of the formula (IV)

$-O-R_4$ formula (IV)

$R_4$ is a tertiary carbon group, e.g. of the formula $C(R_xR_yR_z)$, wherein each of $R_x$, $R_y$, $R_z$ is an optionally substituted hydrocarbon, which may be an optionally substituted alkyl or aryl, and optionally the hydrocarbon contains from 1 to 10 carbons, optionally from 1 to 5 carbons, optionally 1, 2, 3 or 4 carbons, and optionally selected from methyl, ethyl and propyl, which may be n-propyl or i-propyl. Optionally $R_x$, $R_y$, $R_z$ are each selected from methyl and ethyl. Optionally $R_x$ and $R_y$ are each ethyl and $R_z$ is methyl (which may be termed 3-methyl-3-pentoxide, mp). In an embodiment R4 is of the formula $R_x$, $R_y$, $R_z$, wherein $R_x$ and $R_y$ are each an optionally substituted hydrocarbon, e.g. is an optionally substituted hydrocarbon, which may be an optionally substituted alkyl or aryl, and optionally the hydrocarbon contains from 1 to 10 carbons, optionally from 1 to 5 carbons, optionally 1, 2, 3 or 4 carbons, and optionally selected from methyl, ethyl and propyl, which may be n-propyl or i-propyl and $R_z$ is a heterocyclic group, e.g. an oxazole group, which may be of formula (VII)

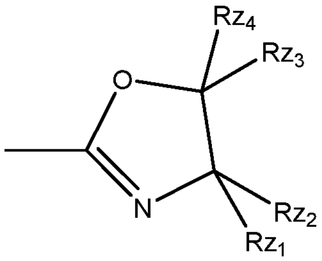

\- (formula VII)

wherein $R_{z1}$, $R_{z2}$, $R_{z3}$, $R_{z4}$ are each selected from h and an optionally substituted hydrocarbon, which may be an optionally substituted alkyl or aryl, and optionally the hydrocarbon contains from 1 to 10 carbons, optionally from 1 to 5 carbons, optionally 1, 2, 3 or 4 carbons, and optionally selected from methyl, ethyl and propyl, which may be n-propyl or i-propyl. In an embodiment, $R_x$, $R_y$ are each methyl and $R_z$ is of formula (VII), in which $R_{z1}$ and $R_{z2}$ are each methyl and $R_{z3}$ and $R_{z4}$ are each hydrogen (and this may be termed 2(4,4-dimethyl-4,5-dihydrooxazol-2-yl)propan-2-olate or dmop).

**Silver compounds**

The precursor compound may comprise a silver compound, i.e. a compound containing silver in ionic form. The silver compound may be selected from nitrates, nitrites, oxides, carbonates, oxalates, (pyrazolyl)borates, azides, fluoroborates, carboxylates, halogenocarbonates, hydroxycarbonates, aminocarboxylate, aromatic and nitro and/or fluoro-substituted carboxylates, beta diketonates, silver sulfonates.

The silver compound may be selected from silver nitrate (AgNOs), silver nitrite ($AgNO_2$), silver oxide (e.g. an oxide selected from $Ag_2O$ and AgO), silver carbonate ($Ag_2CO_3$), silver oxalate ($Ag_2C_2O_4$), silver trispyrazolylborate ($(Ag[N_2C_3H_3)_3]BH$, silver tris(dimethylpyrazolyl)borate ($Ag[((CH_3)_2N_2C_3H_3)_3]BH$), silver azide ($AgN_3$), silver tetrafluoroborate ($AgBF_4$), silver acetate ($AgO_2CCH_3$), silver propionate ($AgO_2CC_2H_5$), silver butanoate ($AgO_2CC_3H_7$), silver ethylbutyrate (AgO$_2$CCH(C2H5)C2H5), silver pivalate ($AgO_2CC(CH_3)_3$), silver cyclohexanebutyrate ($AgO_2C(CH_2)_3C_6H_{11}$), silver ethylhexanoate ($AgO_2CCH(C_2H_5)C_4H_9$), silver neodecanoate ($AgO_2CC_9H_{19}$), silver trif-

luoroacetate ($AgO_2CCF_3$), silver pentafluoropropionate ($AgO_2CC_2F_5$), silver heptafluorobutyrate ($AgO_2CC_3F_7$), silver trichloroacetate ($AgO_2CCCl_3$), silver 6,6,7,7,8,8,8-heptafluoro-2,2-dimethyl-3,5-octanedionate (AgFOD), silver lactate ($AgO_2CH(OH)CH_3$), silver citrate ($Ag_3C_6H_5O_7$), silver glycolate ($AgOOCCH(OH)CH_3$), silver glyconate, silver benzoate ($AgO_2CCH_2C_6H_5$), silver phenylacetate ($AgOOCCH_2C_6H_5$), silver nitrophenylacetate ($AgOOCCH_2C_6H_4NO_2$), silver dinitrophenylacetate ($AgOOCCH_2C_6H_3(NO_2)_2$), silver difluorophenylacetate ($AgOOCCH_2C_6H_3F_2$), silver 2-fluoro-5-nitrobenzoate ($AgOOCC_6H_3(NO_2)F$), silver acetylacetonate ($Ag[CH_3COCH=C(O-)CH_3]$), silver hexafluoroacetylacetonate (($Ag[CF_3COCH=C(O-)CF_3]$, silver trifluoroacetylacetonate ($Ag[CH_3COCH=C(O-)CF_3]$), silver sulfonates silver tosylate ($AgO_3SC_6H_4CH_3$) and silver triflate ($AgO_3SCF_3$).

The silver compound may be a complex salt of silver. The complex salt of silver may be selected from amines (e.g. a complex salt comprising a cation selected from $[Ag(RNH_2)_2]^+$, $Ag(R_2NH)_2]^+$ and$[Ag(R_3N)_2]^+$, wherein R is an aliphatic or aromatic group), N-heterocycles (e.g. a complex salt comprising a cation of the formula $[Ag(L)_x]^+$, wherein L is a heterocycle, e.g. selected from aziridine, pyrrol, indol, piperidine, pyridine, aliphatic substituted and amino substituted pyridines, imidazole, pyrimidine, piperazine, triazine, and triazoles), aminoalcohols (e.g. a complex salt comprising a cation of the formula $[Ag(L)_x]^+$, wherein L is ethanolamine), amino acids (e.g. a complex salt comprising a cation of the formula $[Ag(L)_x]^+$, wherein L is an amino acid, e.g. glycine), acid amides (e.g. a complex salt comprising a cation of the formula $[Ag(L)_x]^+$, wherein L is selected from formamides and acetamides), and nitriles (e.g. a complex salt comprising a cation of the formula $[Ag(L)_x]^+$, wherein L is an acetonitrile). The anion of the complex salt may be any suitable anion, e.g. a halide.

The silver compound can be utilized in an aqueous-based solvent or an organic solvent. Organic solvents may be used for ink-jet deposition. The silver compound may be selected from Ag-nitrate, Ag-neodecanoate, Ag-trifluoroacetate, Ag-acetate, Ag-lactate, Ag-cyclohexanebutyrate, Ag-carbonate, Ag-oxide, Ag-ethylhexanoate, Ag-acetylacetonate, Ag-ethylbutyrate, Ag-pentafluoropropionate, Ag-benzoate, Ag-citrate, Ag-heptafluorobutyrate, Ag-salicylate, Ag-decanoate and Ag-glycolate, and the liquid carrier may comprise an organic solvent.

The silver compound may be selected from Ag-nitrates, Ag-fluorides such as silver fluoride or silver hydrogen fluoride ($AgHF_2$), Ag-thiosulfate, Ag-trifluoroacetate and soluble diammine complexes of silver salts, and optionally the liquid carrier is aqueous.

The silver compound may be in a form, e.g. a solid form that can decompose at a low temperature, such as not greater than about 200°C, can also be used. For example, the silver compound may be selected from Ag-oxide, Ag-nitrite, Ag-carbonate, Ag-lactate, Ag-sulfite and Ag-citrate.

Optionally, the silver compound may be selected from alkene silver betadiketonates, $R_2(CH)_2Ag([R'COCH=C(O-)CR'']$ where R=methyl or ethyl and R', R''=CF3, C2F5, C3F7, CH3, CmH2m+i (m=2 to 4), or trialkylphosphine and triarylphosphine derivatives of silver carboxylates, silver beta diketonates or silver cyclopentadienides.

Optionally, the silver compound is of the formula [(hfac)(1,5-COD)Ag].

**Nickel compounds**

Optionally, the precursor compound may comprise a nickel compound. The nickel compound may comprise an inorganic salt, such as nickel nitrate ($Ni(NO_3)_2$, nickel sulfate ($NiSO_4$), nickel ammine complexes (i.e. complexes containing $[Ni(NH_3)_6]^{n+}$, where n is 2 or 3), nickel-tetrafluoroborate ($Ni(BF_4)_2$)), nickel alkoxides, nickel betadiketonates, nickel carboxylates, nickel fluorocarboxylates. The nickel compound may be selected from nickel oxalate ($NiC_2O_4$), nickel isopropoxide ($Ni(OC_3H_7)_2$, nickel methoxyethoxide ($Ni(OCH_2CH_2OCH_3)_2$, nickel acetylacetonate ($[(Ni(acac)_2]_3$ or $Ni(acac)_2(H_2O)_2$, nickel hexafluoroacetylacetonate ($Ni[CF_3COCHC(O^-)CF_3]_2$), nickel formate ($Ni(O_2CH)_2$), nickel acetate ($Ni(O_2CCH_3)_2$), nickel octanoate ($Ni(O_2CC_7H_{15})_2$), nickel ethyl hexanoate ($Ni(O_2CCH(C_2H_5)C_4H_9)_2$) and nickel-trifluoroacetate ($Ni(O_2CCF_3)_2$.

**Platinum compounds**

Optionally, the precursor compound may comprise a platinum compound. The platinum compound may be selected from platinates such as ammonium hexachloro platinate $(NH_4)_2PtCl_6$, and ammonium tetrachloro platinate $(NH_4)_2PtCl$; sodium and potassium salts of halogeno, pseudohalogeno or nitrito platinates such as potassium hexachloro platinate $K_2PtCl_6$, sodium tetrachloro platinate $Na_2PtCl_4$, potassium hexabromo platinate $K_2PtBr_6$, dihydrogen salts of hydroxo or halogeno platinates such as hexachloro platinic acid $H_2PtCl_6$, hexabromo platinic acid $H_2PtBr_6$, dihydrogen hexahydroxo platinate $H_2Pt(OH)_6$; diammine and tetraammine platinum compounds such as diammine platinum chloride $Pt(NH_3)_2Cl_2$, tetraammine platinum chloride $[Pt(NH_3)_4]Cl_2$, tetraammine platinum hydroxide $[Pt(NH_3)_4](OH)_2$, tetraammine platinum nitrite $[Pt(NH_3)\ ](NO_3)_2$, tetrammine platinum nitrate $Pt(NH_3)_4(NO_3)_2$, tetrammine platinum bicarbonate $[Pt(NH_3)_4](HCO_3)_2$, tetraammine platinum tetrachloroplatinate $[Pt(NH_3)4]PtCl_4$; platinum diketonates such as platinum (II) 2,4-pentanedionate $Pt(C_5H_7O_2)_2$; platinum nitrates such as dihydrogen hexahydroxo platinate $H_2Pt(OH)_6$ acidified

with nitric acid; other platinum salts such as Pt-sulfite and Pt-oxalate; and platinum salts comprising other N-donor ligands such as $[Pt(CN)_6]^{4+}$.

The platinum compound may be selected from Pt-carboxylates and mixed carboxylates, which may be present in the ink with an organic solvent as the liquid carrier. The platinum compound may be selected from Pt-formate, Pt-acetate, Pt-propionate, Pt-benzoate, Pt-stearate, Pt-neodecanoate. Other precursors useful in organic vehicles include aminoorgano platinum compounds including Pt(diaminopropane)(ethylhexanoate).

The platinum compound may be selected from: PtCl; Pt-nitrate solution; H2Pt(OH); H2PtCl6; and [Pt(NH3)4](N03)2, and the liquid carrier may be aqueous.

## Gold compounds

Optionally, the precursor compound may comprise a gold compound. The gold compound may be selected from Au-thiolates, Au-carboxylates such as Au-acetate $Au(O_2CCH_3)_3$; aminoorgano gold carboxylates such as imidazole gold ethylhexanoate; mixed gold carboxylates such as gold hydroxide acetate isobutyrate; Au-thiocarboxylates and Au-dithiocarboxylates, and the liquid carrier may comprise an organic solvent.

The gold compound may be selected from carboxylates, such as mixed carboxylates or mixed alkoxo metal carboxylates. These gold compounds decompose at temperatures that are relatively low, e.g. below 160 °C. The gold compound may be selected from gold acetate isobutyrate hydroxide, gold acetate neodecanoate hydroxide, gold acetate trifluoroacetate hydroxide, gold bis(trifluoroacetate) hydroxide and gold acetate pivalate hydroxide.

The gold compound may be selected from Au-azide and Au-isocyanide. The gold compound may be selected from:

dialkyl and monoalkyl gold carboxylates, such as $R_{3-n}Au(O2CR')_n$ (n=1 or 2) and R is selected from methyl and ethyl; R' is selected from CF3, C2F5, C3F7, CH3, $C_mH_{2m+ι}$ (m is from 2 to 9)

dialkyl and monoalkyl gold beta diketonates, such as $R_{3-n}Au$ $[R'COCH=C(O^-)CR'']_n$ (n is 1 or 2), R is selected from methyl and ethyl; R' and R" are each selected from $CF_3$, $C_2F_5$, $C_3F_7$, $CH_3$, $C_mH_{2m+1}$ (m is from 2 to 4)

dialkyl and monoalkyl gold alkoxides, such as $R_{3-n}Au(OR')_n$ (n is selected from 1 or 2) R is selected from methyl and ethyl; R' is selected from $CF_3$, $C_2F_5$, $C_3F_7$, $CH_3$, $C_mH_{2m+1}$ (m is from 2 to 4), $SiR_3''$ (R" is selected from methyl, ethyl, propyl, isopropyl, n-butyl, isobutyl and tert. butyl)phosphine gold complexes, such as $RAu(PR'_3)$, wherein R and R' are each independently selected from methyl, ethyl, propyl, isopropyl, n-butyl, isobutyl, tert. butyl.,$R_3Au(PR'_3)$, wherein R and R' are each independently selected from methyl, ethyl, propyl, isopropyl, n-butyl, isobutyl and tert. butyl.

Optionally, the gold compound is of the formula $[Au_2CCH_2(OCH_2CH_2)_2OCH_3(nBu_3P)$.

## Copper compounds

Optionally, the precursor compound may comprise a copper compound. The copper compound may be selected from Cu-formate and Cu-neodecanoate. The copper compound may be selected from Cu-nitrate and ammine complexes thereof; Cu-carboxylates including Cu-formate and Cu-acetate; and Cu beta-diketonates such as Cu-hexafluoroacetylacetonate and copper salts such as Cu-chloride, and the liquid carrier may be aqueous.

The copper compound may be selected from Cu-carboxylates and Cu-fluorocarboxylates, such as Cu- formate; Cu-ethylhexanoate; Cu-neodecanoate; Cu-methacrylate; Cu-trifluoroacetate; Cu-hexanoate; and copper beta-diketonates such as cyclooctadiene Cu hexafluoroacetylacetonate, and the liquid carrier may comprise an organic solvent.

The copper compound may be selected from copper I and copper II compounds. The copper compound may be selected from inorganic copper compound, a metal organic copper compound, and an organometallic copper compound. The copper compound may be selected from copper hydrides, copper amides, copper alkenes, copper allyls, copper carbonyls, copper metallocenes, copper cyclopentadienyls, copper arenes, copper carbonates, copper hydroxides, copper carboxylates, copper oxides, organo copper, copper beta-diketonates, copper alkoxides, copper beta-ketoiminates, copper halides, and copper alkyls.

## Palladium compounds

Optionally, the precursor compound may comprise a palladium compound. The palladium compound may be selected from Pd-carboxylates, including Pd-fluorocarboxylates such as Pd-acetate, Pd-propionate, Pd-ethylhexanoate, Pd-neodecanoate and Pd-trifluoroacetate as well as mixed carboxylates such as Pd(OOCH)(OAc), Pd(OAc)(ethylhexanoate), $Pd(ethylhexanoate)_2$, $Pd(OOCH)_{1.5}$ (ethyl $hexanoate)_{0.5}$, Pd(OOCH)(ethylhexanoate),

$Pd(OOCCH(OH)CH(OH)COOH)_m$ (ethylhexanoate), $Pd(OPr)_2$, Pd(OAc)(OPr), Pd-oxalate, $Pd(OOCCHO)_m(OOCCH2OH)_n$ = (Glyoxilic palladium glycolate) and Pd-alkoxides, and the liquid carrier may comprise an organic solvent.

The palladium compound may be selected from $[Pd(NH_3)\,](OH)_2$; Pd-nitrate $Pd(NO_3)_2$; Pd-oxalate $Pd(OCCO_2)_2$; Pd-chloride $PdCl_2$; Di- and tetraammine palladium chlorides, hydroxides or nitrates such as tetraammine palladium chloride $[Pd(NH_3)_4]Cl_2$, tetraammine palladium hydroxide $[Pd(NH_3)_4](OH)_2$, tetraammine palladium nitrate $[Pd(NH_3)\,](NO_3)_2$, diammine palladium nitrate $[Pd(NH_3)_2](NO_3)_2$ and tetraammine palladium tetrachloropalladate $[Pd(NH_3)_4][PdCl]$, and the liquid carrier may be aqueous.

The ink may comprise the first metal in an amount of from 0.5wt% to 30wt%, optionally from 0.5 wt% to 20wt%, optionally from 5wt% to 20 wt%.

***Security element***

A security element or security feature can be identified as any feature which makes an item substantively more difficult to replicate, thus making counterfeit production less attractive. There are many types of feature, but they can be broadly classed as overt, covert and forensic. The technology described could be utilised to produce any of these types of feature depending on whether it is utilised for a visual effect or depending on the detectable features formulated within the ink composition. Detectable features could be identified at point of use via visual inspection, or use of a detection tool such as an authenticator which would broadly be a small device designed to detect a feature via a relatively quick spectroscopic technique or nondestructive analytical technique. Also the features could be species which upon detailed analytical interrogation in a laboratory yield a result confirming the presence of, or absence of said particular species.

The security element may be a machine-readable security element and/or the security element may be in particulate form. The security element may be selected from luminescent particles, a thermochromic substance, a photochromic substance, an electrochromic substance, a magnetic substance, a raman-active substance and an RFID tag. Luminescent particles, such as inorganic phosphors and quantum dots, are described below. A thermochromic substance is a substance that changes colour with a change in temperature. A photochromic substance chances its colour with differing light conditions, e.g. darkening on the intensity of light increasing. An electrochromic substance changes its color when an electric current passes through it. A magnetic substance may be selected from a ferromagnetic substance (e.g. an element selected from iron, cobalt and nickel and compounds or alloys of containing any of these elements), a ferrimagnetic substance, and a paramagnetic substance. A raman-active substance is a substance that is detectable using raman spectroscopy (e.g. a species selected from polydiacetylenes, azo compounds (including monoazo, di-azo, azo metal salts), azomethine compounds, polycyclic compounds, phthalocyanine compounds, a perinone compound, a quinacridone compound, an indanthrone compound, a flavanthrone compound, a pyranthrone compound, a perylene compound, a thioindigo compound, a dioxazine compound, an isoindoline compound, a diketopyrrolopyrrole compound, a basic dye complex, a metal complex, and a ferricyanide). An RFID tag is a radio-frequency identification device.

***Luminescent particles***

Luminescent, or fluorescent, materials or particles (fluorescent particles are a subset of luminescent particles) described herein may absorb light at a first wavelength and then emit light at a second wavelength, which may be shorter ("anti-Stokes emission") or longer ("Stokes emission") than the first wavelength, or substantially the same as the first wavelength. The luminescent particles may absorb light in the infrared ("IR"), visible, or ultraviolet ("UV") range, for example in the range of 200 nm to 5 $\mu$m of the electromagnetic spectrum.

The luminescent particles may be or comprise a phosphor material. Phosphors materials are typically comprised of a host, typically comprised of a crystalline lattice, doped with luminescence centers comprised of trace amount of dopants, usually comprised of a transition metal, lanthanides, or actinides. A description of the design, synthesis, and optical characteristics of phosphors is provided in Chapter 6 of "Luminescence and the Solid State" by R.C. Ropp, second edition,.

The host may be selected from an aluminate, a borate, a gallate, a niobate, vanadate, a garnet, a pervoskite, an oxysulfide, and combinations thereof. The garnet may be selected from yttrium aluminum garnet (YAG), yttrium gallium garnet (YGG), yttrium iron garnet (YIG ), or gadolinium gallium garnet (GGG), gadolinium scandium gallium garnet (GSGG). The host may include an absorbing ion, e.g. an ion selected from chromium, iron, erbium, neodymium, ytterbium and combinations thereof. In an embodiment, the chromium is substituted in the host crystal lattice in an amount of at least 1 atomic percent based on a total number of ions of the host crystal lattice material that may be theoretically substituted. The host may include an emitting ion, for example an ion chosen from erbium, thulium, ytterbium, holmium, neodymium and combinations thereof.

In embodiments, the luminescent materials may comprise an inorganic phosphor, for example a garnet, for

example a phosphor selected from an yttrium aluminum garnet ("YAG") phosphor. The YAG phosphor may comprise yttrium aluminum garnet doped with a metal, for example a metal selected from a transition metal, a lanthanide, and an actinide. The YAG phosphor may comprise yttrium aluminum garnet doped with a metal selected from Ce, Nd, Tb, Sm, Dy, and Cr(IV).

The luminescent particles may comprise an organic luminescent material. The organic luminescent material may comprise one or more aromatic groups. The organic luminescent material may be selected from terphenyls, quarterphenyls, quinquephenyls, hexaphenyls, oxazoles, phenylfuran, oxadiazoles, stilbene, carbostyryl, coumarine, styrylbenzene, sulfaflavine, carbocyanin-iodide, fluorescein, fluororole, rhodamine, sulforhodamine, oxazine, carbazine, pyridine, hexacyanine, styryls; phthalocyanine, naphthalocyanine, hexadibenzocyanine, and dicarbocyanine, and derivatives thereof, e.g. salts and substituted variants thereof.

In embodiments of the present invention, the security element is in the form of particles and optionally at least some of the security element particles have a diameter of 10 μm or less, optionally 5 μm or less, optionally 3 μm or less, optionally 2 μm or less. In embodiments, at least some of the security element particles have a diameter of from 0.5 μm to 5 μm, optionally from 0.5 μm to 4 μm, optionally from 0.5 μm to 3 μm, optionally from 0.5 μm to 2 μm, optionally from 0.5 μm to 1.5 μm, optionally from 0.8 μm to 1.2 μm, optionally from 0.6 μm to 1 μm, optionally from 0.7 μm to 0.9 μm, optionally about 0.8 μm or 1 μm. They also allowe for a relatively stable suspension of the security element particles when in the ink.

In embodiments of the present invention, at least some of the luminescent particles, e.g. phosphor particles, have a diameter of 10 μm or less, optionally 5 μm or less, optionally 3 μm or less, optionally 2 μm or less. In embodiments, at least some of the luminescent particles have a diameter of from 0.5 μm to 5 μm, optionally from 0.5 μm to 4 μm, optionally from 0.5 μm to 3 μm, optionally from 0.5 μm to 2 μm, optionally from 0.5 μm to 1.5 μm, optionally from 0.8 μm to 1.2 μm, optionally from 0.6 μm to 1 μm, optionally from 0.7 μm to 0.9 μm, optionally about 0.8 μm or 1 μm. They also allowe for a relatively stable suspension of the luminescent particles when in the ink.

In an embodiment, a surfactant may be present in the ink.

The diameter (and correspondingly, determinations of the mean diameters) of a security element particle and/or any particle size distribution measurements may be measured using any suitable technique, including, but not limited to, scanning electron micrograph ("SEM"), and/or laser light scattering, for example in accordance with ASTM UOP856-07. The diameter of a security element particle may be the largest dimension measured across the particle. ASTM UOP856-07 is a well-known standardized method for determining the particle size distribution of powders and slurries using laser light scattering. This standard is commercially available from ASTM International. The laser light scattering measurements in accordance with this standard may be performed with a Microtrac (RTM) Model S3500 instrument commercially available from Microtrac Inc., or a Malvern (RTM) Instruments Mastersizer 3000. In embodiments, the security element particles may be characterised as described in ASTM F1877-05(2010). The particle size distribution measured in accordance with ASTM UOP856-07, e.g. for D50, D90 and D99, may be defined as the volume particle size distribution. The mean particle size, measured in accordance with ASTM UOP856-07, may be defined as the volumetric mean particle size.

The diameter (and correspondingly, determinations of the mean diameters) of a luminescent particle and/or any particle size distribution measurements may be measured using any suitable technique, including, but not limited to, scanning electron micrograph ("SEM"), and/or laser light scattering, for example in accordance with ASTM UOP856-07. The diameter of a luminescent particle may be the largest dimension measured across the particle. ASTM UOP856-07 is a well-known standardized method for determining the particle size distribution of powders and slurries using laser light scattering. This standard is commercially available from ASTM International. The laser light scattering measurements in accordance with this standard may be performed with a Microtrac (RTM) Model S3500 instrument commercially available from Microtrac Inc., or a Malvern (RTM) Instruments Mastersizer 3000. In embodiments, the luminescent particles may be characterised as described in ASTM F1877-05(2010). The particle size distribution measured in accordance with ASTM UOP856-07, e.g. for D50, D90 and D99, may be defined as the volume particle size distribution. The mean particle size, measured in accordance with ASTM UOP856-07, may be defined as the volumetric mean particle size.

Security element particles utilized in aspects described herein may have a mean diameter of 10 μm or less, optionally 5 μm or less, optionally 3 μm or less, optionally 2 μm or less. In embodiments, the luminescent particles may have a mean diameter of from 0.5 μm to 5 μm, e.g. 0.5 μm to 4 μm, e.g. 0.5 μm to 3 μm, e.g. 0.5 μm to 2 μm, optionally from 0.6 μm to 1.5 μm, optionally from 0.6 μm to 1.2 μm, optionally from 0.6 μm to 1 μm, optionally from 0.7 μm to 1.2 μm, optionally from 0.5 μm to 1.5 μm, optionally from 0.8 μm to 1.2 μm, optionally about 0.8 μm or about 1 μm. The mean diameter of the particles may be measured before or after the particles are incorporated into the ink.

Luminescent particles (e.g. phosphor particles) utilized in aspects described herein may have a mean diameter of 10 μm or less, optionally 5 μm or less, optionally 3 μm or less, optionally 2 μm or less. In embodiments, the luminescent particles (e.g. phosphor particles) may have a mean diameter of from 0.5 μm to 5 μm, e.g. 0.5 μm to 4 μm, e.g. 0.5 μm to 3 μm, e.g. 0.5 μm to 2 μm, optionally from 0.6 μm to 1.5 μm, optionally from 0.6 μm to 1.2 μm, optionally from 0.6

μm to 1 μm, optionally from 0.7 μm to 1.2 μm, optionally from 0.5 μm to 1.5 μm, optionally from 0.8 μm to 1.2 μm, optionally about 0.8 μm or about 1 μm. The mean diameter of the particles may be measured before or after the particles are incorporated into the ink.

Security element particles utilized in the aspects described herein may have a D50 distribution of 10 μm or less, optionally 5 μm or less, optionally 3 μm or less, optionally 2 μm or less. A D50 distribution is defined as 50% of the population of particles having sizes less than the D50 value, and 50% of the population of particles having sizes greater than the D50 value. In an embodiment, the security element particles have a D50 distribution, measured using laser light scattering, in accordance with ASTM UOP856-07, of 10 μm or less, optionally 7 μm or less, optionally 6 μm or less, optionally 5 μm or less, optionally 4 μm or less. In an embodiment, the security element particles have a D50 distribution, measured using laser light scattering, in accordance with ASTM UOP856-07, of from 0.1 μm to 5 μm, optionally from 0.3 μm to 5 μm, optionally from 0.4 μm to 5 μm, optionally from 0.5 μm to 5 μm, optionally from 0.8 μm to 5 μm, optionally from 0.9 μm to 5 μm, optionally from 0.5 μm to 4 μm, optionally from 0.5 μm to 3 μm, optionally from 0.5 μm to 1.5 μm, optionally from 0.8 μm to 1.2 μm, optionally about 1 μm.

Luminescent particles (e.g. phosphor particles) utilized in the aspects described herein may have a D50 distribution of 10 μm or less, optionally 5 μm or less, optionally 3 μm or less, optionally 2 μm or less. A D50 distribution is defined as 50% of the population of particles having sizes less than the D50 value, and 50% of the population of particles having sizes greater than the D50 value. In an embodiment, the luminescent particles (e.g. phosphor particles) have a D50 distribution, measured using laser light scattering, in accordance with ASTM UOP856-07, of 10 μm or less, optionally 7 μm or less, optionally 6 μm or less, optionally 5 μm or less, optionally 4 μm or less. In an embodiment, the luminescent particles have a D50 distribution, measured using laser light scattering, in accordance with ASTM UOP856-07, of from 0.1 μm to 5 μm, optionally from 0.3 μm to 5 μm, optionally from 0.4 μm to 5 μm, optionally from 0.5 μm to 5 μm, optionally from 0.8 μm to 5 μm, optionally from 0.9 μm to 5 μm, optionally from 0.5 μm to 4 μm, optionally from 0.5 μm to 3 μm, optionally from 0.5 μm to 1.5 μm, optionally from 0.8 μm to 1.2 μm, optionally about 1 μm.

D50 distribution of the particles may be measured before or after the particles are incorporated into the ink. D50 is sometimes termed $d_{50}$ in the art.

Security element particles utilized in the aspects described herein may have a D90 distribution of 10 μm or less, optionally 5 μm or less, optionally 3 μm or less, optionally 2 μm or less, optionally 1 μm or less. A D90 distribution is defined as 90% of the population of particles having sizes less than the D90 value, and 10% of the population of particles having sizes greater than the D90 value. The security element particles may have a D90 distribution of from 0.5 μm to 5 μm, optionally from 1 μm to 4 μm, optionally from 1 μm to 3 μm. The D90 distribution of the particles may be measured before or after the particles are incorporated into the ink. D90 is sometimes termed $d_{90}$ in the art.

Luminescent particles (e.g. phosphor particles) utilized in the aspects described herein may have a D90 distribution of 10 μm or less, optionally 5 μm or less, optionally 3 μm or less, optionally 2 μm or less, optionally 1 μm or less. A D90 distribution is defined as 90% of the population of particles having sizes less than the D90 value, and 10% of the population of particles having sizes greater than the D90 value. The luminescent particles may have a D90 distribution of from 0.5 μm to 5 μm, optionally from 1 μm to 4 μm, optionally from 1 μm to 3 μm. The D90 distribution of the particles may be measured before or after the particles are incorporated into the ink. D90 is sometimes termed $d_{90}$ in the art.

In embodiments, the security element particles (e.g. luminescent particles, e.g. phosphor particles), for example in the ink and/or in the items described herein, lack or substantially lack particles having a diameter of 10 μm or more, optionally 8 μm or more, optionally 7 μm or more, optionally 5 μm or more, optionally 4 μm or more, optionally 3 μm or more. "Substantially lack" may indicate 5 wt% of the particles or less, optionally 2 wt% or less, optionally 1 wt% or less have the stated diameter. Optionally, the particles may have a D99 distribution of 10 μm or less, optionally 8 μm or less, optionally 7 μm or less, optionally 5 μm or more, optionally 4 μm or less, optionally 3 μm or less. A D99 distribution is defined as 99% of the population of particles having sizes less than the D99 value, and 1% of the population of particles having sizes greater than the D99 value. Optionally, the particles may have a D99 of from 10 μm to 3 μm, optionally from 7 μm to 3 μm, optionally from 5 μm to 3 μm.

In embodiments, the security element particles (e.g. luminescent particles, e.g. phosphor particles) may have a density of at least 2 $kg/dm^3$, optionally at least 3 $kg/dm^3$, optionally at least 4 $kg/dm^3$, optionally at least 5 $kg/dm^3$. In embodiments, luminescent particles (e.g. phosphor particles) may have a density of from least 2 $kg/dm^3$ to 9 $kg/dm^3$, optionally from 3 $kg/dm^3$ to 9 $kg/dm^3$, optionally from 4 $kg/dm^3$ to 9 $kg/dm^3$, optionally from 4.5 $kg/dm^3$ to 9 $kg/dm^3$, optionally from 5 $kg/dm^3$ to 9 $kg/dm^3$.

The security element particles (e.g. the luminescent particles, e.g. phosphor particles) may be present in the ink in an amount of at least 0.05wt%, optionally at least 0.1wt%, optionally at least 0.5wt%. The luminescent particles may be present in the ink in an amount of from 0.05wt% to 30 wt%, optionally from 0.1wt% to 20 wt%, optionally from 0.5wt% to 20 wt%, optionally from 0.5wt% to 15 wt%, optionally from 0.5wt% to 10 wt%, optionally from 0.5wt% to 5 wt%, optionally from 0.5wt% to 3wt%, optionally from 0.5 wt% to 2wt%.

In an embodiment, the luminescent material may comprise quantum dots. Quantum dots are particles of a

semiconductor material that display quantum confinement. Quantum dots are typically comprise particles of a semiconductor crystallite with the particle size being below the Bohr radius of the semiconductor material. Quantum dots have energy levels, the gaps between which are dependent on the material of the quantum dot and its size, and hence the emission of the quantum dots (after excitement by incident radiation, for example, the emission being the transition of the quantum dot from a higher energy state to a lower energy state) can be tuned to a desired electromagnetic frequency. The quantum dots may emit in the infrared region of the electromagnetic spectrum.

At least some of the quantum dots may have a diameter of 100 nm or less, optionally 50 nm or less, optionally 20 nm or less. At least some of the quantum dots may have a diameter of from 1 nm to 100 nm, optionally from 1 nm to 50 nm, optionally from 1 nm to 20 nm, optionally from 1 nm to 10 nm, optionally from 1 nm to 5 nm or optionally from 5 nm to 10 nm. At least some of the quantum dots may have a diameter of from 5 nm to 100 nm, optionally from 5 nm to 50 nm, optionally from 5 nm to 20 nm. The quantum dots may have a diameter of from 20 nm to 100 nm, optionally 20 nm to 50 nm.

In certain embodiments, the quantum dots have a quantum yield of more than 10%. More typically, the quantum yield is more than 20%. More typically, the quantum yield is more than 40%. "Quantum yield" is a direct measure of the light-emitting efficiency of a fluorophore. It can be quantified as the ratio between the photon emitted and the photons absorbed to produce the excited state from which the emission originates. The quantum dots are typically stable fluorophores, the quantum yields of which remain substantially unchanged when bound to a multifunctional scaffold.

In certain embodiments, the quantum dots have a fluorescence lifetime of more than 5ns, more than 20ns, more than 40ns. "Fluorescence lifetime" refers to the average time a fluorophore remains in the excited state, typically ranging from femtoseconds to nanoseconds.

The quantum dots may comprise: a semiconductor material selected from a Group 12-14 compound, a Group 12-15 compound, a Group 13-16 compound, a Group 15-5 compound, a Group 14-16 compound, a Group 11-13-16 compound, a Group 12-14-16 compound, and a Group 12-14-15 compound. A "Group 12-16 compound" refers to a compound formed by an element selected from Group 12 and an element selected from Group 16 of the Periodic Table. Examples of Group IIB-VIA compounds include, but are not limited to, ZnS, ZnSe, ZnTe, CdS, CdSe, CdTe, HgS, HgSe and HgTe. Further examples of the semiconductor quantum dots include, but are not limited to: AIN, AIP, AlAs, AlSb, GaN, GaP, GaAs, GaSb, GaSe, InN, InP, InAs, InSb, TIN, TIP, TIAs, TISb, PbS, PbSe, PbTe, and mixtures thereof.

The semiconductor quantum dots may be in the form of a core/shell structure, in which the above-mentioned semiconductor material forms a core that is passivated with a different semiconductor material. Passivating the surface of the core quantum dot can result in an increase in the quantum yield of the fluorescence emission, depending on the nature of the passivation coating. Typical shell materials include ZnS and CdS. These quantum dots of the core/shell structure can also be represented by, for example, CdSe/ZnS, CdTe/ZnS and CdTe/ZnS.

The quantum dots may comprise a metallic material. Examples of the metallic quantum dots include, but are not limited to: a noble metal selected from gold (Au), silver (Ag) and copper (Cu).

The security element (e.g. security element particles, e.g. luminescent particles) and species for forming a metal matrix may be mixed by mixing them together, e.g. in the liquid carrier, with mechanical agitation, e.g. by stirring or shaking them. In an embodiment, the security element (e.g. the luminescent particles) and species for forming a metal matrix may be mixed, e.g. in the liquid carrier, by using a high shear mixing device, e.g. a roll mill, e.g. a three roll mill.

The ink (before or after the addition of the luminescent particles to the ink) may have a dynamic viscosity of from 0.5 mPa.s to 60 mPa.s, optionally from 0.5 mPa.s to 50 mPa.s, optionally from 1 mPa.s to 50 mPa.s, optionally from 2 mPa.s to 50 mPa.s, optionally from 3 mPa.s to 50 mPa.s, optionally from 4 mPa.s to 50 mPa.s, optionally from 5 mPa.s to 50 mPa.s, optionally from 5 mPa.s to 40 mPa.s, optionally from 5 mPa.s to 30 mPa.s, optionally from 5 mPa.s to 20 mPa.s, or optionally from 20mPa.s to 50 mPa.s. It has been found that inks within this range are particularly suitable for application to object and may be applied to object using printing techniques such as ink-jet printing and also have been found to mix particularly well with the luminescent particles. Unless otherwise stated, the viscosity is dynamic viscosity, measured at 20 °C, using a suitable viscometer, which may, for example be a falling-ball viscometer, and measurement may be according to DIN 53015 standard or ISO 12058-1:1997. Commercially available viscometers may be used, such as Lovis 2000 M/ME rolling ball viscometer, available from Anton Paar.

$$[1\ mPa.s = 1\ kg/\ m^{-1}s^{-1}]$$

***Item***

The method may involve first forming the item into a desired form, e.g. a bar, ingot , disc (which may be a coin blank), round or grain and then depositing the ink and forming the metal matrix as described herein. The method may involve first casting or blanking the item, into a desired form, e.g. a bar, ingot, disc, coin, round or grain and then depositing the ink and forming the layer comprising the metal matrix having embedded therein the security element (e.g. the

luminescent particles). Coin includes a coin blank or a coin having an image stamped on at least one face thereof. Casting may involve forming the item from molten metal in a mould and removing the item from the mould once the metal (e.g. the second metal as described herein) has cooled and solidified. Blanking may involve forming the item in a stamping and/or cutting process, e.g. from a sheet of metal (e.g. the second metal as described herein), and may be such that the item is punched from the sheet of metal (e.g. the second metal as described herein). The item formed in the blanking process may have two opposing flat or substantially flat (i.e. unpatterned) faces. The method may involve first forming the item, which may be in the form of a disc (which may be a coin blank), e.g. in a coin blanking process, and then carrying out the plating as described herein. A coin blanking process may be a process in which a disc is cut, punched or otherwise removed from a sheet, e.g. comprising the second metal. The coin blanking process may involve passing a sheet, e.g. of the first metal, through a blanking press, which punches discs from the sheet, the discs being the coin blanks. The coin blanks may then be annealed, e.g. in a furnace (up to 950 °C, e.g. at temperatures of from 800 °C to 950 °C), to soften the material (e.g. the second metal) of the coin blank. Each coin blank may be annealed before or after plating the layer comprising the first metal on the coin blank. Minting may involve stamping a pattern on a face of the item, which may be carried out after the formation of the item in a casting or blanking process. The deposition of the ink and formation of the layer comprising the first metal may be carried out after the formation of the item in a casting or minting process, and before or after (but preferably before) stamping any pattern on the item.

There is also provided a method of making a patterned item, wherein the method comprises deposting the ink on the item and then forming the layer comprising the metal item, and, after producing the item or plurality of items, stamping a pattern onto at least one surface or face of each of the item or items having thereon the metal matrix. This may be termed minting, as described above. The pattern may be in the layer comprising the metal matrix. The item before having the ink deposited thereon and the metal matrix formed thereon may be in the form of a disc, e.g. a coin blank having two opposing flat or substantially flat (i.e. unpatterned) faces, and then, after plating, the item may be stamped (coined) with a pattern (e.g. for a coin blank, on one or both of the opposing faces, e.g. to form a coin).

Preferably, the forming the metal matrix on the item does not reduce the purity (in weight%) of the metal, e.g. precious metal, in the item, as a whole, including the layer of the first metal, by more than 0.5 %, optionally by more than 0.4%, optionally by more than 0.3%, optionally by more than 0.2%, optionally by more than 0.1%, optionally by more than 0.05%, optionally by more than 0.01%.

The item after forming the metal matrix having embedded therein the security element (e.g. the luminescent particles) may or may not be further shaped, e.g. stamped or struck.

The item (before or after having the ink deposited thereon or metal matrix formed thereon) may be of any shape or size. They may have a surface selected from a flat surface and a curved surface (e.g. a concave or a convex surface). The items may be in the form of discs. The discs may be circular or of some other regular shape. The regular shape may, for example, be a shape having n sides, where n is 3 or more, and optionally n is selected from 3 to 15, optionally from 3 to 10, optionally from 3 to 12. If the items have regular shapes, the sides of the shapes may be straight or curved. The discs may be apertured or non-apertured. The disc may comprise an aperture, which may be located in a central portion of the face of the disc, and optionally extend the entire way through the disc. Optionally, the aperture may, for example, be for receiving a further smaller disc in the production of a bimetallic coin. The discs may have a thickness that is substantially the same across their entire face (or cross-section).

The item (before or after having the ink deposited thereon or metal matrix formed thereon) may be in the form of a bar or ingot. For example, the item may be in the form of a bar or ingot that has been cast or minted into a particular form and/or may comprise, consist essentially of or consist of a precious metal selected from gold, silver, platinum, palladium, ruthenium, osmium, rhenium, rhodium and iridium. The bar may have a trapezoid cross section, e.g. an isosceles trapezoid or a rectangle, and the corners of the trapezoid may be sharp or rounded. The trapezoid may have two approximately parallel sides, with one of the parallel sides being shorter than the other, and the two further sides linking the parallel sides. An isosceles trapezoid may be defined as a trapezoid in which the base angles (i.e. the angles two sides make with the base, i.e. the longer of the parallel sides) are the same as each other or approximately the same (e.g. within 5° of one another).

The item (before or after having the ink deposited thereon or metal matrix formed thereon), which may be in the form of a bar, ingot, disc, coin, round or grain, and/or the item may contain at least 0.5 g of the second metal, optionally at least 1 g of the second metal, optionally at least 2 g of the second metal, optionally at least 5 g of the second metal, optionally at least 8 g of the second metal, optionally at least 10 g of the second metal, optionally at least 20 g of the second metal, optionally at least 30 g of the second metal, optionally at least 40 g of the second metal, optionally at least 50 g of the second metal, optionally at least 80 g of the second metal, optionally at least 90 g of the second metal, optionally at least 100 g of the second metal, optionally at least 150 g of the second metal, optionally at least 180 g of the second metal, optionally at least 200 g of the second metal, optionally at least 240 g of the second metal, optionally at least 250 g of the second metal, optionally at least 300 g of the second metal, optionally at least 400 g of the second metal, optionally at least 450 g of the second metal, optionally at least 500g of the second metal, optionally at least 800 g of the second metal, optionally at least 1 kg of the second metal, optionally at least 1.5 kg of the second metal, optionally

at least 2 kg of the second metal, optionally at least 2.5 kg of the second metal, optionally at least 3 kg of the second metal, optionally at least 3.5 kg of the second metal, optionally at least 4 kg of the second metal, optionally at least 4.5 kg of the second metal, optionally at least 5 kg of the second metal, optionally at least 5.5 kg of the second metal, optionally at least 6 kg of the second metal. The item (before or after having the ink deposited thereon or metal matrix formed thereon), which may be in the form of a bar, ingot, disc, coin, round or grain, may contain from 40 g to 60 g of the second metal, optionally about 50 g of the second metal, optionally from 90 g to 110 of the second metal, optionally about 100 g of the second metal, optionally from 140 g to 160 g of the second metal, optionally about 150 g of the second metal, optionally from 240 g to 260 g of the second metal, optionally about 250 g of the second metal, optionally from 480 g to 520 g of the second metal, optionally from 490 g to 510 g of the second metal, optionally about 500 g of the second metal, optionally from 980 g to 1020 g of the second metal, optionally from 990 g to 1010 g of the second metal optionally about 1kg of the second metal, optionally from 1990 g to 2010 g of the second metal optionally about 2kg of the second metal, optionally from 2990 g to 3010 g of the second metal optionally about 3kg of the second metal, optionally from 3990 g to 4010 g of the second metal optionally about 4kg of the second metal, optionally from 4990 g to 5010 g of the second metal, optionally about 5kg of the second metal, optionally from 5990 g to 6010 g of the second metal optionally about 6kg of the second metal.

The item (before or after having the ink deposited thereon or metal matrix formed thereon), which may be in the form of a bar, which may be a gold bar, may contain at least 0.5 g of gold, optionally at least 1 g of gold, optionally at least 2 g of gold, optionally at least 5 g of gold, optionally at least 8 g of gold, optionally at least 10 g of gold, optionally at least 20 g of gold, optionally at least 30 g of gold, optionally at least 40 g of gold, optionally at least 50 g of gold, optionally at least 80 g of gold, optionally at least 90 g of gold, optionally at least 100 g of gold, optionally at least 150 g of gold, optionally at least 180 g of gold, optionally at least 200 g of gold, optionally at least 240 g of gold, optionally at least 250 g of gold, optionally at least 300 g of gold, optionally at least 400 g of gold, optionally at least 450 g of gold, optionally at least 500g of gold. The item (before or after having the ink deposited thereon or metal matrix formed thereon) may be in the form of a bar, which may be a gold bar, which may contain from 40 g to 60 g of gold, optionally about 50 g of gold, optionally from 90 g to 110 of gold, optionally about 100 g of gold, optionally from 140 g to 160 g of gold, optionally about 150 g of gold, optionally from 240 g to 260 g of gold, optionally about 250 g of gold, optionally from 480 g to 520 g of gold, optionally from 490 g to 510 g of gold, optionally about 500 g of gold, optionally from 980 g to 1020 g of gold, optionally from 990 g to 1010 g of gold, optionally about 1kg of gold.

The item (before or after having the ink deposited thereon or metal matrix formed thereon), which may be in the form of a bar, which may be a gold bar, may contain about 1 kg to 20 kg of gold, optionally 5 kg to 20 kg of gold, optionally 8 kg to 15 kg of gold, optionally 10 kg to 14 kg of gold, optionally 10.9 kg (350 troy ounces) to 13.4 kg (430 troy ounces). The gold may have a fineness of at least 900 parts per thousand (by weight) fine gold, optionally at least 920 parts per thousand (by weight) fine gold, optionally at least 940 parts per thousand (by weight) fine gold, optionally at least 950 parts per thousand (by weight) fine gold, optionally at least 960 parts per thousand (by weight) fine gold, optionally at least 970 parts per thousand (by weight) fine gold, optionally at least 980 parts per thousand (by weight) fine gold, optionally at least 990 parts per thousand (by weight) fine gold, optionally at least 995 parts per thousand (by weight) fine gold.

The dimensions of the bar, which may be a gold bar and/or may be trapezoid, e.g. isosceles trapezoid, in cross section may be:

in length (i.e. its longest dimension) from 150 mm to 500 mm, optionally 200 mm to 400 mm, optionally 225 mm to 375 mm, optionally 250 mm to 350 mm, optionally 210 mm to 290 mm,
and/or in width (i.e. a direction perpendicular to its length, and, if an isosceles trapezoid, the dimension across the shortest parallel side): 25 to 115 mm, optionally 35 to 105 mm, optionally 45 mm to 95 mm, optionally 55 to 85 mm; and/or
in height (i.e. in a direction perpendicular to its length and width, and, if an isosceles trapezoid, the dimension from one parallel side to the other): 5 mm to 100 mm, optionally 10 mm to 60 mm, optionally 20 mm to 55 mm, optionally 25 mm to 45 mm.

The item (before or after having the ink deposited thereon or metal matrix formed thereon), which may be in the form of a bar, which may be a silver bar, may contain at least 0.5 g of silver, optionally at least 1 g of silver, optionally at least 2 g of silver, optionally at least 5 g of silver, optionally at least 8 g of silver, optionally at least 10 g of silver, optionally at least 20 g of silver, optionally at least 30 g of silver, optionally at least 40 g of silver, optionally at least 50 g of silver, optionally at least 80 g of silver, optionally at least 90 g of silver, optionally at least 100 g of silver, optionally at least 150 g of silver, optionally at least 180 g of silver, optionally at least 200 g of silver, optionally at least 240 g of silver, optionally at least 250 g of silver, optionally at least 300 g of silver, optionally at least 400 g of silver, optionally at least 450 g of silver, optionally at least 500g of silver. The item (before or after having the ink deposited thereon or metal matrix formed thereon) may be in the form of a bar, which may be a silver bar, which may contain from 40 g to 60 g of

silver, optionally about 50 g of silver, optionally from 90 g to 110 of silver, optionally about 100 g of silver, optionally from 140 g to 160 g of silver, optionally about 150 g of silver, optionally from 240 g to 260 g of silver, optionally about 250 g of silver, optionally from 480 g to 520 g of silver, optionally from 490 g to 510 g of silver, optionally about 500 g of silver, optionally from 980 g to 1020 g of silver, optionally from 990 g to 1010 g of silver optionally about 1kg of silver.

The item (before or after having the ink deposited thereon or metal matrix formed thereon), which may be in the form of a bar, which may be a silver bar, may contain about 1 kg to 60 kg of silver, optionally 5 kg to 55 kg of silver, optionally 10 kg to 50 kg of silver, optionally 15 kg to 45 kg of silver, optionally 20 kg to 40 kg of silver, optionally 23.3 kg (750 troy ounces) to 34.2 kg (1100 troy ounces). The silver may have a fineness of at least 900 parts per thousand (by weight) silver, optionally at least 920 parts per thousand (by weight) silver, optionally at least 940 parts per thousand (by weight) silver, optionally at least 950 parts per thousand (by weight) silver, optionally at least 960 parts per thousand (by weight) silver, optionally at least 970 parts per thousand (by weight) silver, optionally at least 980 parts per thousand (by weight) silver, optionally at least 990 parts per thousand (by weight) silver, optionally at least 995 parts per thousand (by weight) silver, optionally at least 997 parts per thousand (by weight) silver, optionally at least 999 parts per thousand (by weight) silver.

The dimensions of the bar, which may be a silver bar and/or may be trapezoid, e.g. isosceles trapezoid, in cross section may be:

in length (i.e. its longest dimension) from 100 mm to 500 mm, optionally 200 mm to 400 mm, optionally 225 mm to 375 mm, optionally 250 mm to 350 mm,

and/or in width (i.e. a direction perpendicular to its length, and, if an isosceles trapezoid, the dimension across the shortest parallel side): 50 to 200 mm, optionally 75 to 175 mm, optionally 100 mm to 160 mm, optionally 110 to 150 mm; and/or

in height (i.e. in a direction perpendicular to its length and width, and, if an isosceles trapezoid, the dimension from one parallel side to the other): 10 mm to 200 mm, optionally 20 mm to 150 mm, optionally 40 mm to 120 mm, optionally 70 mm to 110 mm, optionally 60 mm to 100 mm.

The item (before or after having the ink deposited thereon or metal matrix formed thereon), which may be in the form of a bar, may contain at least 0.5 g of platinum, optionally at least 1 g of platinum, optionally at least 2 g of platinum, optionally at least 5 g of platinum, optionally at least 8 g of platinum, optionally at least 10 g of platinum, optionally at least 20 g of platinum, optionally at least 30 g of platinum, optionally at least 40 g of platinum, optionally at least 50 g of platinum, optionally at least 80 g of platinum, optionally at least 90 g of platinum, optionally at least 100 g of platinum, optionally at least 150 g of platinum, optionally at least 180 g of platinum, optionally at least 200 g of platinum, optionally at least 240 g of platinum, optionally at least 250 g of platinum, optionally at least 300 g of platinum, optionally at least 400 g of platinum, optionally at least 450 g of platinum, optionally at least 500g of platinum, optionally at least 800g of platinum, optionally at least 1kg of platinum, optionally at least 1.5 kg of platinum, optionally at least 2 kg of platinum, optionally at least 2.5 kg of platinum, optionally at least 3 kg of platinum, optionally at least 3.5 kg of platinum, optionally at least 4 kg of platinum, optionally at least 4.5 kg of platinum, optionally at least 5 kg of platinum, optionally at least 5.5 kg of platinum, optionally at least 6 kg of platinum. The item (before or after having the ink deposited thereon or metal matrix formed thereon), which may be in the form of a bar, which may be a platinum bar, may contain from 40 g to 60 g of platinum, optionally about 50 g of platinum, optionally from 90 g to 110 of platinum, optionally about 100 g of platinum, optionally from 140 g to 160 g of platinum, optionally about 150 g of platinum, optionally from 240 g to 260 g of platinum, optionally about 250 g of platinum, optionally from 480 g to 520 g of platinum, optionally from 490 g to 510 g of platinum, optionally about 500 g of platinum, optionally from 980 g to 1020 g of platinum, optionally from 990 g to 1010 g of platinum optionally about 1kg of platinum, optionally from 1990 g to 2010 g of platinum optionally about 2kg of platinum, optionally from 2990 g to 3010 g of platinum optionally about 3kg of platinum, optionally from 3990 g to 4010 g of platinum optionally about 4kg of platinum, optionally from 4990 g to 5010 g of platinum, optionally about 5kg of platinum, optionally from 5990 g to 6010 g of platinum optionally about 6kg of platinum.

The item (before or after having the ink deposited thereon or metal matrix formed thereon), which may be in the form of a bar, may contain at least 0.5 g of palladium, optionally at least 1 g of palladium, optionally at least 2 g of palladium, optionally at least 5 g of palladium, optionally at least 8 g of palladium, optionally at least 10 g of palladium, optionally at least 20 g of palladium, optionally at least 30 g of palladium, optionally at least 40 g of palladium, optionally at least 50 g of palladium, optionally at least 80 g of palladium, optionally at least 90 g of palladium, optionally at least 100 g of palladium, optionally at least 150 g of palladium, optionally at least 180 g of palladium, optionally at least 200 g of palladium, optionally at least 240 g of palladium, optionally at least 250 g of palladium, optionally at least 300 g of palladium, optionally at least 400 g of palladium, optionally at least 450 g of palladium, optionally at least 500g of palladium, optionally at least 800g of palladium, optionally at least 1kg of palladium, optionally at least 1.5 kg of palladium, optionally at least 2 kg of palladium, optionally at least 2.5 kg of palladium, optionally at least 3 kg of palladium, optionally at least 3.5 kg of palladium, optionally at least 4 kg of palladium, optionally at least 4.5 kg of palladium, optionally at

least 5 kg of palladium, optionally at least 5.5 kg of palladium, optionally at least 6 kg of palladium. The item (before or after having the ink deposited thereon or metal matrix formed thereon), which may be in the form of a bar, which may be a palladium bar, may contain from 40 g to 60 g of palladium, optionally about 50 g of palladium, optionally from 90 g to 110 of palladium, optionally about 100 g of palladium, optionally from 140 g to 160 g of palladium, optionally about 150 g of palladium, optionally from 240 g to 260 g of palladium, optionally about 250 g of palladium, optionally from 480 g to 520 g of palladium, optionally from 490 g to 510 g of palladium, optionally about 500 g of palladium, optionally from 980 g to 1020 g of palladium, optionally from 990 g to 1010 g of palladium optionally about 1kg of palladium, optionally from 1990 g to 2010 g of palladium optionally about 2kg of palladium, optionally from 2990 g to 3010 g of palladium optionally about 3kg of palladium, optionally from 3990 g to 4010 g of palladium optionally about 4kg of palladium, optionally from 4990 g to 5010 g of palladium, optionally about 5kg of palladium, optionally from 5990 g to 6010 g of palladium optionally about 6kg of palladium.

The item (before or after having the ink deposited thereon or metal matrix formed thereon) may have one or more features selected from a flat surface, a curved surface, a protrusion, an indent, an aperture, which may extend all or part of the way through the item, a convex surface, a concave surface, ridges and valleys. The item may be in the form of a hollow cylinder, e.g. for cutting into a plurality of rings for use as jewellery.

The item (before or after having the ink deposited thereon or metal matrix formed thereon) may be spherical or substantially spherical, and may, before or after having the ink deposited thereon or metal matrix formed thereon, be suitable for use as ball bearings.

The item, before and/or after having the ink deposited thereon or metal matrix formed thereon, is suitable for use as a component of a mechanical or electrical item, including, but not limited to any moving parts, any structural parts, electrically conductive parts, and/or any housing of the mechanical or electrical item. Mechanical or electrical items include, but are not limited to, watches, vehicles and aircraft.

The item (before or after having the ink deposited thereon or metal matrix formed thereon) may comprise, consist essentially of, or consist of one or more second metal(s). The one or more second metal(s) may be in elemental form or in the form of an alloy, e.g. an alloy of one of more metals selected from copper, zinc, nickel, and tin.The alloy may be selected from cupronickel, alnico, amalgam, brass, bronze, duralumin, gunmetal, nitinol, steel, sterling silver and white gold. In an embodiment the one or more second metal(s) comprise a metal selected from Groups 3 to 14 of the Period Table, optionally from Groups 3 to 12 of the Periodic Table, and wherein the metal is in alloy or elemental form. In an embodiment, the second metal comprises a metal selected from iron, aluminium, copper, titanium, zinc, silver, gold, platinum, and wherein the metal is in alloy or elemental form. In embodiments, the one or more second metal(s) comprise iron. In embodiments, the one or more second metal(s) comprise steel. If the items consist essentially of the second metal(s), the metal(s) may constitute at least 95 wt% (weight-weight percentage) of the item, optionally at least 98 wt% of the item, optionally at least 99 wt% of the item, optionally at least 99.5 wt% of the item.

The item (before or after having the ink deposited thereon or metal matrix formed thereon) may comprise a core, which may comprise a metal or a non-metal, having one or more layers thereon, and the one or more layers may comprise a metal(s) different to that of the core and/or other layers.

The item may be in the form of a piece of jewellery or a component thereof. The piece of jewellery may be selected from an earring, a necklace, a ring for the finger or toe, a cufflink, a bracelet, an armlet (i.e. a bracelet for the upper arm), a watch, a hairpin, a choker, a tore, a brooch and a pin badge. The component may be selected from a finding, a locket, a medallion, and a pendant. The finding may be selected from a clasp, an earwire, a ring blank, a bail, a metal loop (e.g. for attaching pendants to necklaces), a jump ring, a pin (e.g. for a brooch), a pin stem, a back, e.g. a butterfly back, for an earring.

The item may be an item for use in an industry selected from pharmaceutical, medical, veterinary, aeronautical, marine, financial, luxury goods and cosmetic industries. The item may be electrical, mechanical, structural, or cosmetic in nature.

The item may be a packaging or a component of packaging. The item may, for example, be an item for packaging a product, or a component of an item for packaging a product, e.g. product selected from a pharmaceutical product, medical product, veterinary product, aeronautical product, marine product, financial product, a luxury good and a cosmetic product. The item may, for example, be an item for packaging a pharmaceutical product, medical product, veterinary product, e.g. a receptacle or closure therefor. The item may, for example, be an item selected from a bottle, vial, pen, syringe and a dose container, and a closure for any of these items. The item may, for example, be a crimp seal or a crimp seal cap for a receptacle. A crimp seal is a seal that is can be used on a glass container, and the seal may be formed from metal and crimped around the opening of the glass container.

Tthe item may be a watch or a watch component.

The item may be selected from luxury goods, including, but not limited to, goods selected from pens, cutlery, such as forks, knives and spoons, watches, glasses, and sunglasses, and components thereof, e.g. logos for placing on the side of the goods and metal fastenings, such as screws.

The item may be a casing, a packaging or component thereof, for goods, such as luxury goods, including, but

not limited to, goods selected from watches, glasses, and sunglasses.

The item may be a badge, e.g. a badge showing a logo or emblem, which may be affixed to an item, including, but not limited to, items selected from handbags, luggage or passport holders, purses, prams, furniture, clasps for purses and handbags and items of clothing.

The item may be selected from a bracket, a stud and a hinge (for example those used on luggage, furniture, clothing or homeware).

The item may be a fixture, e.g. for use on clothing and/or on accessories such as handbags, furniture and homeware products. The item may be selected from a zip, a hook and an eye, and a hoop (for example those used in clothes and homeware products such as curtains and pillows). The item may be a metal embellishment, which may, for example be a fastener, for clothing, furniture or other fabric items; for example, the item is a rivet, which may be for fastening two layers of fabric together, for example for use in jeans.

The item may be a staple (for example industrial staples used in packaging goods).

The item may be selected from screws, tacks and nails, such as round headed screws, spherical headed tacks and spherical headed nails.

The item may be a metal item or other non-metal item for use as a tag or token (e.g. to be incorporated within a label for clothing/luxury goods).

The item may be a component for a mobile phone, a laptop, a computer, a tablet and any other electronic consumer goods. In an embodiment, the item is a microchip or a SIM card, or a component thereof.

The item may be a selected from a security foil, a tamper proof foil, blister foil packaging, for example for medication, and labels, e.g. for medication authentication.

The item may be a lock or a key.

The item may be a receptacle or a part of a receptacle, e.g. closure for a receptacle, e.g. a bottle top, e.g. a bottle top that can be screwed onto a bottle, e.g. a bottle containing a beverage, such as an alcoholic beverage, e.g. a spirit, wine or beer. The receptacle or the part of a receptacle may be metallic. The receptacle may be a pressurised canister, e.g. an aerosol canister, e.g. for use in a medical device, e.g. an inhaler.

The item, before or after being deposited with the ink comprising the first metal may have been coated with a layer of another metal, which may be the same as or different from the first metal, and may or may not contain a security element (e.g. security element particles), which may or may not be the same as the security element (e.g. security element particles) in the ink comprising the first metal.

The item, before or after being deposited with the ink comprising the first metal may have been coated with a layer of another metal, which may be the same as or different from the first metal, and may or may not contain luminescent particles, which may or may not be the same as the luminescent particles in the ink comprising the first metal.

The item, before or after having the ink deposited thereon or metal matrix formed thereon, comprises a non-metal. The non-metal may be selected from a a polymeric material (e.g. plastic), a glass and a ceramic material. The non-metal may, for example be material, e.g. a ceramic material. The non-metal may be a material selected from silica ($SiO_2$) and alumina. The item may be a composite material comprising a mixture of a plurality of materials, e.g. materials selected from non-metals and metals. The item may be a composite material comprising a mixture of a plurality of materials, e.g. materials selected from a polymeric material, a glass, a ceramic material and a metal.

The non-metal may comprise, consist essentially of or be a plastic, which may be in any suitable form. The non-metal may comprise a plastic in sheet form, which may be in the form of a film, e.g. a film of at least 1 $\mu$m in thickness, optionally at least 5 $\mu$m in thickness, optionally from 1 $\mu$m to 5 mm in thickness. optionally from 1 $\mu$m to 1 mm in thickness, optionally from 1 $\mu$m to 500 $\mu$m in thickness, optionally from 1 $\mu$m to 100 $\mu$m in thickness, optionally from 1 $\mu$m to 50 $\mu$m in thickness, optionally from 5 $\mu$m to 50 $\mu$m in thickness. The plastic may be selected from polyamides (e.g. nylon), polycarbonate, polyester, polyethylene, polypropylene, polystyrene, polyurethane, polyvinylchloride, polyethylether ketone, and polyvinylidene chloride.

### 3D-printing

The item (before or after having the ink deposited thereon or metal matrix formed thereon) may be a 3D printed item or a precursor material for forming a 3D-printed item. The precursor material for forming a 3D-printed item may be termed a 3D-printable material. The precursor material may be in particulate form, such that the particles can be fused together, e.g. by sintering, or bound together with a suitable adhesive substance, or substance that is curable or sinterable to form a matrix around the particles of the precursor material. The item may comprise a metal or non-metal 3D-printed or a metal or non-metal 3D-printable material. The 3D printed item may comprise a 3D-printed or 3D-printable metal, such as a 3D-printed alloy. The 3D-printed metal may have been sintered, e.g. by selective laser sintering or direct metal laser sintering. The item (before or after having the ink deposited thereon or metal matrix formed thereon) may be a 3D-printed item or a a 3D-printable material comprising an alloy selected from stainless steel (e.g. 17-4 and 15-5 stainless steel), maraging steel, cobalt chromium, Inconel (e.g. Inconel 625 and 718), the aluminium alloy: $AlSi_{10}Mg$ and the

titanium alloy: $Ti_6Al_4V$.

The item, before having the ink deposited thereon, may comprise a 3D-printable material in particulate form, such as particles of a material that can be sintered, e.g. particles of an alloy as described above, and the ink as described herein, which may include a security element, may be printed on the 3D-printable material, such that the ink penetrates between the particles, and the metal matrix then formed, optionally such that the security element, if present, is embedded in the metal matrix between the particles. The metal matrix may serve to bind the particles together. Optionally, one or more layers of a 3D-printed item may be produced in this manner, and these layers may constitute all or just part of a 3D-printed item.

The method may involve 3D printing an item, and then forming a layer on an item by: depositing on the item an ink containing a security element, e.g. luminescent particles, and a species for forming a metal matrix to form the layer, which comprises a metal matrix having embedded therein the security element.

The method may involve 3D printing an item, and then forming a layer on an item by:

(i) depositing on the item an ink comprising a liquid carrier, the liquid carrier having suspended therein a security element, e.g. luminescent particles, and dispersed therein (e.g. dissolved or suspended therein) a metal compound
(ii) effecting conversion of the metal of the metal compound to a metal matrix comprising the metal in elemental or alloyed form, with the metal matrix having embedded therein the security element.

The item (before or after having the ink deposited thereon or metal matrix formed thereon) may be in the form of a disc and comprise, consist essentially of, or consist of a first metal. The disc may have a diameter, as measured across a face of the disc, of at least 0.5 cm, optionally at least 1 cm, optionally at least 2 cm, optionally at least 4 cm, optionally at least 5 cm, optionally at least 6 cm, optionally at least 9 cm, optionally at least 10 cm, optionally at least 15 cm, optionally at least 20 cm, optionally at least 30 cm, optionally at least 40 cm. The disc may have a diameter, as measured across a face of the disc, of from 0.5 cm to 50 cm, optionally from 0.5 cm to 40 cm, optionally from 0.5 cm to 30 cm, optionally from 0.5 cm to 20 cm, optionally from 0.5 cm to 10 cm, optionally from 0.5 cm to 5 cm, optionally from 0.5 cm to 3 cm. If the disc has a regular shape, the diameter may be the largest dimension across a face of the disc. The disc may have a thickness of from 0.3 mm to 10 mm, optionally from 0.3 mm to 5 mm, optionally from 0.3 mm to 2 mm.

### *Depositing*

The depositing may involve forming a layer of the ink on a surface of the item. The ink is in liquid form and contains a liquid carrier, and the depositing involves depositing the ink in liquid form on a surface of the item, and removing the liquid carrier. The removal of the liquid carrier may result in a solid layer comprising the security element (e.g. the luminescent particles) and the species for forming a metal matrix. In an embodiment, the depositing involves printing the ink on the item.

The layer comprising the metal matrix having embedded therein the security element (e.g. the luminescent particles) may be present in the form of a continuous or a discontinuous layer across at least one side of the item, e.g. discontinuous being a pattern of areas of the first metal on at least one side of the item. The item may be have been coated or printed with the first layer in discontinuous layer across at least one side of the item, e.g. by forming a pattern of areas on at least one side of the item, e.g. an array of dots, lines or other shapes, across at least one side of the item.

### *Printing and coating*

The depositing, e.g. printing or coating, may involve any form of printing or coating. The printing may be selected from ink-jet printing, offset printing, screen printing, gravure printing, flexo printing, photolithography, pad-printing, spray coating, dip-coating, spin coating, brush coating or any other form of coating.

The depositing or printing may involve printing selectively on the item to create a pattern. The layer comprising the metal matrix having embedded therein the security element (e.g. the luminescent particles) may be in the form of a symbol, word or number of any language on a surface of the item. The printing could be designed to be indistinguishable from the substrate below or could be visually conspicuous to yield an overt feature.

The printing may involve offset printing, which may involve transferring the ink from a plate, which may be a flat or a cylindrical plate, to an intermediate transfer member, sometimes termed a blanket, and then to the printing surface.

The printing may involve gravure printing, which may involve transferring the ink from an engraved image carrier, e.g. a cylinder, to the item, optionally via an intermediate transfer member.

The printing may involve flexo printing, sometimes termed flexography, by applying the ink to a flexible relief plate, and then applying this to the item to transfer the ink to the item.

The printing may involve ink-jet printing, which may involve applying the ink by jetting droplets of the ink onto the item from nozzles in an ink-jet printing device. In an alternative embodiment, the ink-jet printing may involve applying

the ink by first jetting it onto an intermediate transfer member, such as a roller, and then transferring the ink from the intermediate transfer member onto the item. The ink-jet printing may form a pattern or image on the item in accordance with a digital pattern or image sent to the printing device. The ink-jet printing device may be a drop-on-demand printing device, and may be a thermal ink-jet device or a piezoelectric ink-jet device.

The printing may involve screen printing, which may involve applying the ink via a screen comprising a mesh, some areas of which are impermeable to the ink, these areas sometimes being termed a blocking stencil. In the technique, an elongate member, such as a blade or squeegee, is moved across the screen to fill the apertures of the screen with the ink, which then passes through the apertures to the item, optionally on a return sweep of the member across the screen.

The printing may involve photolithography, which may involve applying the ink to the surface of the item, selectively forming the metal matrix in certain areas of the ink, and then removing the remaining ink, after the formation of the metal matrix.

The printing may involve pad-printing, which may involve applying the ink by a pad, which may be a silicone pad, optionally in an indirect offset (gravure) printing process.

The printing may involve spray coating, dip-coating, brush coating of the ink on the item, which may involve, respectively, spraying the ink onto the item, dipping the item into the ink and brushing the ink onto the item.

*Heating*

After depositing the ink on the item, the ink may be heated. The heating removes any liquid carrier present in the ink and/or effect formation of the metal matrix comprising the first metal in elemental or alloyed form having embedded therein the security element (e.g. the luminescent particles).

The species for forming a metal matrix comprises a precursor compound for forming a metal matrix, such as a metal compound or a metal complex. The precursor compound degrades to form the first metal in elemental or alloyed form. In a metal complex comprising a ligand, this may involve the chemical conversion of the ligand to one or more compounds that do not include the first metal.

The ink may be heated to a temperature of at least 50 °C, optionally at least 80 °C, optionally at least 100 °C, optionally at least 120 °C, optionally at least 130 °C, optionally at least 140 °C, optionally at least 150 °C, optionally at least 200 °C, optionally at least 250 °C, optionally at least 300 °C, optionally at least 350 °C, optionally at least 400 °C, optionally at least 450 °C, optionally at least 500 °C, optionally at least 550 °C, optionally at least 600 °C, optionally at least 650 °C, optionally at least 700 °C, optionally at least 750 °C, optionally at least 800 °C. The ink may be heated to a temperature 1000 °C or less, optionally 900 °C or less, optionally 800 °C or less, optionally 700 °C or less, optionally 600 °C or less, optionally 500 °C or less, optionally 400 °C or less, optionally 300 °C or less, optionally 200 °C or less. The heating may be carried out for as long as desired, depending on whether just drying is desired or if sintering/decomposition is desired. The heating may be carried out for a period of at least 1 minute, optionally at least 5 minutes, optionally at least 10 minutes, optionally at least 15 minutes, optionally at least 20 minutes, optionally at least 25 minutes, optionally at least 30 minutes.

The temperature may be selected depending on the operation being carried out. For example, if only removal of the solvent by evaporation is desired, a temperature that is raised is chosen, but the temperature below that which would effect degradation of the precursor to form the metal matrix. In an embodiment, the ink is heated to an first temperature, which effects removal of the liquid carrier from the ink, and then the temperature is raised to a second temperature, which is higher than the first temperature, the second temperature being sufficient to effect degradation of the precursor to form the metal matrix.

*Effecting Decomposition*

As mentioned, the species for forming a metal matrix comprises a precursor compound for forming a metal matrix, such as a metal compound or a metal complex, the precursor compound degrades to form the first metal in elemental or alloyed form. The decomposition is effected by heating the ink, optionally after removing the solvent, and the heating of the ink may involve heating to a temperature mentioned above, e.g. a temperature of at least 70 °C, optionally a temperature of at least 80 °C, optionally a temperature of at least 100 °C, optionally at least 120 °C, optionally at least 130 °C, optionally at least 140 °C, optionally at least 150 °C, optionally at least 200 °C, optionally at least 250 °C, optionally at least 300 °C, optionally at least 350 °C, optionally at least 400 °C, optionally at least 450 °C, optionally at least 500 °C, optionally at least 550 °C, optionally at least 600 °C, optionally at least 650 °C, optionally at least 700 °C, optionally at least 750 °C, optionally at least 800 °C. The decomposition may be effected by heating the ink, optionally after removing the solvent, and the heating of the ink may involve heating to a temperature mentioned above, e.g. a temperature 1000 °C or less, optionally 900 °C or less, optionally 800 °C or less, optionally 700 °C or less, optionally 600 °C or less, optionally 500 °C or less, optionally 400 °C or less, optionally 300 °C or less, optionally 200 °C or less. The temperature may be chosen depending on the nature of the metal compound or metal complex. The heating may

be carried out for a period of at least 15 minutes, optionally at least 20 minutes, optionally at least 25 minutes, optionally at least 30 minutes.

**Ink composition**

In an aspect, there is provided an ink composition comprising:

a liquid carrier,
a security element, which may be dispersed in (e.g. dissolved or suspended in) the liquid carrier and
a species for forming a metal matrix, which is:
a metal compound dissolved in the liquid carrier, the metal compound being convertible to a metal matrix comprising the metal of the metal complex in elemental or alloyed form wherein the metal compound is thermally decomposable, such that, on decomposition, it produces the metal matrix comprising the metal of the metal compound in elemental or alloyed form.

Herein is also disclosed, an ink composition comprising:

a liquid carrier,
luminescent particles, which are suspended in the liquid carrier and
a species for forming a metal matrix.

The liquid carrier, the security element (e.g. the luminescent particles) and species for forming a metal matrix may be as described herein.

**Item**

The item may be any object having a surface on which the ink may be deposited and a metal matrix formed. The item may be porous or non-porous. If the item is porous, there may be open pores at its surface and the ink may penetrate the pores and the metal matrix, optionally with the security feature therein, may form in the pores. In an aspect, there is provided an item having a layer thereon of a first metal, wherein a security element is embedded in the first metal. Disclosed herein is an item having a layer thereon of a first metal, wherein luminescent particles are embedded in the first metal. The item may be as described herein. The layer comprising the first metal may be formed by the method as described herein. The first metal may be in the form of a metal matrix and may have been deposited or printed on the item in accordance with a method described herein. The layer may be a printed layer of the first metal having the security element embedded therein. The layer may be a printed layer of the first metal having luminescent particles embedded therein. The layer be in the form of a pattern as described herein. The layer comprising the first metal may cover part of or all of at least one surface of the item. The layer comprising the first metal may cover part of or all of all of the surfaces of the item. The layer comprising the first metal may cover at least 50% of the surface area of at least one face of the item, optionally at least 60% of the surface area of at least one face of the item, optionally at least 70% of the surface area of at least one face of the item, optionally at least 80% of the surface area of at least one face of the item, optionally at least 90% of the surface area of at least one face of the item, optionally at least 95% of the surface area of at least one face of the item. The layer comprising the first metal may cover at least 50% of the surface area of the whole item, optionally at least 60% of the surface area of the whole item, optionally at least 70% of the surface area of the whole item, optionally at least 80% of the surface area of the whole item, optionally at least 90% of the surface area of the whole item, optionally at least 95% of the surface area of the whole item. The layer comprising the first metal may be present in the form of a continuous or a discontinuous layer across at least one side of the item, e.g. discontinuous being a pattern of areas of the first metal on at least one side of the item. The item may be printed with the first layer in discontinuous layer across at least one side of the item, e.g. by forming a pattern of printed areas on at least one side of the item, e.g. an array of dots, lines or other shapes, across at least one side of the item. The layer comprising the first metal may be in the form of a symbol, word or number of any language on a surface of the item.

The item may be any item described herein. Disclosed herein is an item having a layer thereon of a first metal, wherein a security element is embedded in the first metal, wherein the first metal is a precious metal selected from gold, silver, platinum, palladium, ruthenium, osmium, rhenium, rhodium and iridium. Optionally, the item, excluding the layer of the first metal, comprises, consists essentially of, or consists of a second metal. Disclosed herein is an item having a layer thereon of a first metal, wherein luminescent particles are embedded in the first metal, wherein the first metal is a precious metal selected from gold, silver, platinum, palladium, ruthenium, osmium, rhenium, rhodium and iridium. Optionally, the item, excluding the layer of the first metal, comprises, consists essentially of, or consists of a second metal. Optionally, the second metal is a precious metal selected from gold, silver, platinum, palladium, ruthenium,

osmium, rhenium, rhodium and iridium. Optionally, the first metal and the second metal are the same. Optionally, the first metal and second metal both comprise gold. Optionally, the item is coated on substantially all sides with the layer of the first metal. Optionally, the item is in the form of a bar, ingot, disc, coin, round or grain consisting essentially of or consisting of a second metal selected from gold, silver, platinum, palladium, ruthenium, osmium, rhenium, rhodium and iridium, the second metal having thereon the layer of the first metal having a security element embedded therein. Optionally, the item is in the form of a bar, ingot, disc, coin, round or grain consisting essentially of or consisting of a second metal selected from gold, silver, platinum, palladium, ruthenium, osmium, rhenium, rhodium and iridium, the second metal having thereon the layer of the first metal having luminescent particles embedded therein. The item may producible by a method described herein.

As mentioned, the present inventors have also found that the application of inks as described herein, with or without the security element, e.g. the luminescent particles, to items, e.g. items used in the minting industry, can be an effective alternative to plating such items.

Herein is also disclosed, a method for forming a layer on an item, the method comprising:
depositing on the item an ink containing a species for forming a metal matrix, and optionally forming the metal layer on the item. The ink may or may not further contain a security element (e.g. luminescent particles), and, if the ink does contain the security element and the metal layer formed on the item, the metal layer has embedded therein the security element. The item may be selected bar, ingot, disc, coin, round or grain and/or comprise a second metal, as described herein. The item may be any other item as described herein. The ink and any component thereof and the method may be as described herein.

Herein is also disclosed, a method for forming a layer on an item, the method comprising:
depositing on the item an ink containing a species for forming a metal matrix to form the layer comprising a metal matrix having embedded therein the luminescent particles. The ink may or may not further contain luminescent particles. The item may be selected bar, ingot, disc, coin, round or grain and/or comprise a second metal, as described herein. The item may be any other item as described herein. The ink and any component thereof and the method may be as described herein.

Herein is also disclosed, an ink composition comprising:
a liquid carrier, and
a species for forming a metal matrix. The ink and any component thereof and the method of using the ink may be as described herein.

Herein is also disclosed, a method for forming a layer on an item, the method comprising:

(i) depositing on the item an ink comprising a liquid carrier, the liquid carrier having dispersed therein (e.g. dissolved or suspended therein) a metal compound and
(ii) effecting conversion of the metal of the metal compound to a metal matrix comprising the metal in elemental or alloyed form. The ink may further comprise a security element dispersed in (e.g. dissolved or suspended in) the liquid carrier, and, if so, the metal matrix may have embedded therein the security element. The ink may further comprise luminescent particles suspended in the liquid carrier, and, if so, the metal matrix may have embedded therein the luminescent particles. The item may be selected bar, ingot, disc, coin, round or grain and/or comprise a second metal, as described herein. The item may be any other item as described herein. The ink and any component thereof and the method may be as described herein.

Herein is also disclosed, an item having thereon
a printed layer comprising a metal matrix. The metal matrix may or may not have embedded therein a security element. The metal matrix may or may not have embedded therein luminescent particles. The item may be selected bar, ingot, disc, coin, round or grain and/or comprise a second metal, as described herein. The item may be any other item as described herein. The ink and any component thereof and the method may be as described herein.

Embodiments of the present invention will now be further described with reference to the following non-limiting Examples (also referred to herein as "experiments," "trial runs," "trials," and "runs") and accompanying Figures.

## Examples

### Example 1

In this example, a rare earth doped garnet having a D50 of about 1 μm has been added to a metallo-organic decomposition (MOD) ink at a concentration of 1-5% (W/W), although lower and higher concentrations can be used depending on the application and detection solution being used. The MOD ink contained a gold complex in a liquid carrier. This was a commercially available gold metallo-organic ink from Gwent Group, under the product code G2020520D1. The gold content was approximately 15wt%. The gold complex was in a liquid carrier comprising p-menth-1-en-8-ol and oil of rosemary. Other suitable inks containing a precious metal (to which the luminescent particles can be added) are available commercially, e.g. precious metal inks from Johnson Matthey and gold ink from from fuel cell materials.

The MOD ink-luminescent particle (rare earth doped garnet) mixture was mixed by hand although a three roll mill would be the dispersion equipment of choice in a fully scaled up process. Upon completion of the mixing whereby no large particulate was observed the Gold MOD ink was screen printed onto an alumina ($Al_2O_3$) substrate used a stainless steel 325 TPI (threads per inch, where an inch is 25.4 mm) screen and a polyurethane squeegee which was 70-75 shore hardness.

In this screen printing technique, a mesh was used to transfer ink onto a substrate, except in areas made impermeable to the ink by a blocking stencil. A blade or squeegee was moved across the screen to fill the open mesh apertures with ink, and a reverse stroke then caused the screen to touch the substrate momentarily along a line of contact. This caused the ink to wet the substrate and be pulled out of the mesh apertures as the screen springs back after the blade has passed.

Alumina test slides were used to verify the requisite design had been printed. The ink was dried initially at 130 °C for 10 minutes. This initial phase is to fix the image and remove organic solvents from the matrix. This was then subsequently dried in a furnace with a programme ramping from ambient temperature to 800°C over 30 minutes holding at the maximum temperature for 10minutes.

Two designs were used, a small block to demonstrate full coverage over a large area and a more intricate wire type design to demonstrate fine detail was possible also. These designs are illustrated in the photograph in Figure 1 (with the small block design shown on the right hand side and the intricate wire design shown on the left hand side). Figure 1 shows the alumina test slides printed with the images.

As the test slides had been successful the test substrate was introduced, it was a gold coin blank which was 32.69mm in diameter and was of 999.9 fineness. The same two designs were printed on the coin blank. The printed coin blanks are shown in the photograph of Figure 2 (the left-hand blank having been printed with the block design, the right-hand blank having been printed with the more intricate wire design).

To allow discrimination and visualisation of the ink a small proportion of carbon black (Monarch 430, cabot corp, 0.1%) was added to the ink before printing, otherwise the gold would be indistinguishable on the surface of the coin. This was processed and printed in an identical fashion to the alumina test slides. The carbon black was included purely for the test purposes, but would not be included typically in ink for authentication purposes.

A handheld detector tailored to the emission from the rare earth doped garnet used in these experiments was used to verify the presence of the additive within the printed layer. The use of this detector is illustrated in Fig. 3.

To confirm the validity of detection scanning electron microscopy was used to image the additive within the metal matrix. Fig. 4 shows the initial image taken of coin blank at low magnification. In this Figure, lines from printing ink can clearly be visualised as can black particulates from added Carbon black.

Figure 5 shows an SEM image at higher magnification than Figure 4. Figure 6 shows an accompanying energy dispersive X-ray spectroscopy spectra. It shows only the presence of Gold and Carbon on the surface of the coin blank.

Figure 7 shows a second EDX spectrum located on one suspected additive particle, i.e. the particle shown in the SEM spectrum of Fig. 8. The EDX spectrum confirms presence as significant deviations from purely gold spectra are present in the EDX spectra.

A further goal of the Example was to embellish the surface of the gold material in this instance without affecting the fineness of the gold.

To confirm fineness was preserved in this Example, X-Ray fluorescence spectroscopy (XRF) (FISCHERSCOPE® X-RAY XDV®-SDD) was used. The results showed that the fineness of the gold coin blanks was 999.9 both before and after the deposition of the gold ink containing the luminescent particles and formation of the metal matrix.

Example 2

In this example, several types of metallic ink were mixed with luminescent materials and coated onto substrates, then tested to show their efficacy. 3 types of ink were used in addition to the previous gold MOD ink described in Example 1. The three inks are:

**C2040712D5** - An inkjet printable silver MOD ink purchased from the Gwent group. The viscosity of this ink, before addition of the luminescent particles, is 13 mPa.s. Addition of the luminescent particles did not raise the viscosity significantly.

**C2140723D1*** - A nano-particulate copper inkjet ink used in the electronics industry, available from Gwent group. The viscosity of this ink, before addition of the luminescent particles, is 30 mPa.s. Addition of the luminescent particles did not raise the viscosity significantly. The average particle size (or D50) of the copper particles in this ink was less than 100 nm.

**Silver ink** - A particle free reactive silver ink manufactured according to Walker, S. B., & Lewis, J. A. (2012). Reactive silver inks for patterning high-conductivity features at mild temperatures. Journal of the American Chemical Society, 134(3), 1419-1421. https://doi.org/10.1021/ja209267c

* - C2140723D1 is a reference example

The reactive silver ink was prepared by stirring 5g Silver acetate (Aldrich), with ammonia (33%, 12.5ml), and water (DI, 4ml). This was stirred for 5 minutes on a magnetic stirrer. To this mixture formic acid (Aldrich, 99%, 1ml) was added dropwise. The resulting mixture was filtered through a 5 micron mesh. ). The viscosity of the ink, before addition of the luminescent particles, was about 2 mPa.s. To this ink, luminescent materials were added to a concentration of 5% w/w. The addition of the luminescent particles did not significantly raise the viscosity. The ink was again coated onto substrates with a paint brush and the ink was reacted at a temperature of 130°C. The resulting coating was analysed via EDX.

These inks were chosen because of their commercial availability or ease of synthesis and also because of their viscosity. Inkjet inks are formulated with inherently low viscosity and as such were more readily handled and formulated with the luminescent particles. This however does not preclude the use of this invention with offset or screen inks for instance, as some formulation work could alter the viscosity sufficiently to ensure their efficacy. As such these are simply non-limiting examples of the technology.

The inks were mixed with luminescent particles at concentrations of 5% w/w. The luminescent particles were the same as those described in Example 1. This was found to yield a detectable signal upon coating with no impact on the aesthetics of the coating(s).

To demonstrate the broad functionality of the inks, the materials were printed on a variety of substrates such as, cupronickel 75/25 + 84/16; copper, nickel and brass plated steel, alumina slides, glass, polyester film and so on.

The inks applied to the various substrates are shown in the accompanying Figures and described below. Inks were applied with a paint brush to demonstrate coatings, jettability of the inks is not in question as these inks are commercial products.

Figure 9A shows a silver MOD ink (C2040712D5) on brass plated steel; figure 9B shows the detection of luminescent particles using a hand-held detector. Figure 9C is an electron micrograph showing ink substrate interface of the item of Figure 9A. Figure 9D is an EDX spectrum of the substrate of the item of 9A showing cupronickel (from the point shown in Figure 9C marked 'Spectrum 1').

Figure 9E is an electron micrograph showing ink substrate interface of the item of Figure 9A. Figure 9F is an EDX spectrum of the coating of the item of 9A showing silver as the predominant element (from the point shown in Figure 9E marked 'Spectrum 2').

Figure 9G is a higher magnification electron micrograph than Figure 9E, focussed on the silver coating. Figure 9H is an EDX spectrum from the point marked 'Spectrum 1' on Figure 9G; with the higher magnification, this reveals the presence of luminescent particles.

Figure 10A shows a silver MOD ink (C2040712D5) on copper plated steel.

Figure 10B and 10C show, respectively, positive and negative responses using a hand-held detector to detect the luminescent particles.

Figures 10D shows an electron micrograph showing ink-substrate interface of the item of Figure 10A.

Figure 10E is an EDX spectrum of the substrate of the item of 10A showing copper as the predominant element (from the point shown in Figure 10D marked 'Spectrum 1').

Figures 10F shows an electron micrograph showing ink-substrate interface of the item of Figure 10A.

Figure 10G is an EDX spectrum of the coating of the item of 10A showing silver as the predominant element (from the point shown in Figure 10F marked 'Spectrum 2').

Figure 10H is a higher magnification electron micrograph than Figure 10F, but again focussed on the silver coating. Figure 10I is an EDX spectrum from the point marked 'Spectrum 2' on Figure 10H; with the higher magnification, this reveals the presence of luminescent particles.

Figure 11A shows silver MOD ink (C2040712D5) on 12 micron polyester film. The film is backing for a hot stamping foil. SEM images were not attempted as likelihood is PET film would be damaged during imaging. Figure 11 B shows a positive response using a hand-held detector to detect the luminescent particles in the ink on the polyester film.

Figure 12A shows a copper nanoparticle ink on a glass substrate. SEM imaging was not attempted as concave nature of substrate rendered it impossible and other exemplars were available._Figure 12B shows a positive response using a hand-held detector to detect the luminescent particles in the ink on the glass substrate.

Figure 13A shows a copper nanoparticle ink on a cupronickel 75/25 substrate. Figure 13B shows a positive response using a hand-held detector to detect the luminescent particles in the ink on the cupronickel 75/25 substrate of Figure 13A.

Figures 13C shows an electron micrograph showing ink-substrate interface of the item of Figure 13A. Figure

13D is an EDX spectrum of the substrate of the item of 13A showing copper and nickel as the predominant elements, i.e. the elements forming the cupronickel alloy (from the point shown in Figure 13C marked 'Spectrum 2').

Figures 13E shows an electron micrograph showing ink-substrate interface of the item of Figure 13A. Figure 13F is an EDX spectrum of the coating of the item of 13A showing copper as the predominant (from the point shown in Figure 13E marked 'Spectrum 1').

Figure 13G is a higher magnification electron micrograph than Figure 13E, but again focussed on the copper coating. Figure 13H is an EDX spectrum from the point marked 'Spectrum 1' on Figure 13G; with the higher magnification, this reveals the presence of luminescent particles.

Figure 14A shows a copper nanoparticle ink on an alumina slide.. Figure 14B shows a positive response using a hand-held detector to detect the luminescent particles in the ink on the alumina slide of Figure 14A. As with other substrates, the electron micrographs (not shown) illustrated the interface between the substrate and the coating, and EDX spectra showed that substrate contained aluminium and oxygen as the predominant elements in the substrate and copper as the predominant element in the coating. Only on higher magnification were the luminescent particles revealed in the coating.

In the case of the copper nanoparticle ink used above, to achieve full adhesion and conductivity (as may be required if a copper circuit were being printed), a sintering step should take place. However, since the purpose of the coating was primarily for authentication, no sintering step was carried out. The important steps, i.e. the incorporation of the luminescent particles in the ink, the coating of the ink on a substrate, with the formation of the metal layer, and subsequent detection of the luminescent particles, were demonstrated successfully in these Examples.

This sintering step is not required for the MOD inks and the drying conditions for the silver ink were drying at room temperature for 10 minutes followed by heating to 150°C for 1 hour. This yielded a silver deposit on the surface of the substrate. This deposit can sometimes form an oxide layer and we were able to polish the deposit on the Brass plated steel exemplar; this yielded a lustrous surface which still showed a signal for the luminescent particles and the process of polishing demonstrated the adhesion we had to the substrate as no silver ink was dislodged from the substrate.

Figure 15A shows the reactive silver ink on a brass substrate, with a detector showing a positive result for the detection of luminescent particles in the ink. Figure 15B shows the reactive silver ink on a brass substrate, with a detector showing a negative result for the detection of luminescent particles from a part of the brass substrate not having the ink on its surface.

Figures 15C shows an electron micrograph of the coating of the item of Figure 15A. Figure 15D is an EDX spectrum of the coating of the item of 15A showing silver as the predominant element, with few other peaks (from the point shown in Figure 13C marked 'Spectrum 2').

Figures 15E shows an electron micrograph of the coating of the item of Figure 15A. Figure 15F is an EDX spectrum of the coating of the item of 15A showing silver as the predominant element, with other peaks indicating the presence of luminescent particles (from the point shown in Figure 15E marked 'Spectrum 1').

## Example 3

Also demonstrated in this examples is the marking of 3D printed parts as a security feature using the inks as described herein. Selective Laser Sintering (SLS) is a technique used whereby a metallic powder is selectively sintered to form a larger structure. By its nature the materials produced will have significant porosity. The present inventors have found that the inks of the present disclosure can deposit in the pores, without significantly affecting the surface or structure of the 3D printed object, yet the luminescent particles are detectable.

The ink could be applied during the actual sintering process or added post process depending on the requirement.

In this Example, a sample material was obtained from Renishaw PLC, a leading supplier of metal 3D printing apparatus. The item in question was a bottle opener printed in a Cobalt Chromium alloy, CoCr-0404. The ink utilised was the MOD ink from the Gwent group, with luminescent particles dispersed therein, as described in Example 2. The ink was applied with a brush and deposited using identical conditions to those in Example 2.

Figure 16A shows the 3D-printed item with the MOD ink having been deposited thereon, with a negative result from a detector on a part of the item that was uncoated.

Figure 16B shows the 3D-printed item with the MOD ink having been deposited thereon, with a positive result from a detector on a part of the item that was coated with the ink.

Figures 16C shows an electron micrograph showing ink-substrate interface of the item of Figure 16A. Figure 16D is an EDX spectrum of the substrate of the item of 16A showing the elements detected in the substrate (from the point shown in Figure 16C marked 'Spectrum 1').

Figures 16E shows an electron micrograph showing ink-substrate interface of the item of Figure 16A. Figure 16F is an EDX spectrum of the coating of the item of 16A showing silver as the predominant element, with other peaks from the luminescent particles (from the point shown in Figure 16E marked 'Spectrum 2').

Figure 16G Figure 13G is a higher magnification electron micrograph than Figure 13E, but again focussed on the copper coating. Figure 13H is an EDX spectrum from the point marked 'Spectrum 1' on Figure 13G; with the higher magnification, this reveals the presence of luminescent particles.

**Conclusions:**

- A variety of different types of metallic ink have been coated onto a variety of differing substrates from 3D printed metals, to plastics and ceramics.
- The inks have been mixed with luminescent particles and in all examples the luminescent particles can be detected on the surface of the material with a handheld detector and also via EDX on the SEM.
- The inks were applied in a selective fashion to all substrates and at no point completely covered the substrate however if desired this is also possible.
- The coating techniques used were representative; the viscosities of the inks are such that inkjet printing is inherently feasible and other coating techniques could be utilised with minor modifications in viscosity.

## Claims

**1.** A method for forming a layer on an item, the method comprising:

depositing on the item an ink containing a security element and a species for forming a metal matrix to form the layer, which comprises a metal matrix having embedded therein the security element, wherein the species for forming a metal matrix comprises a metal compound of a first metal, wherein the ink further comprises a liquid carrier, and wherein the metal compound is dissolved in the liquid carrier;
wherein the metal compound is deposited on the item and then the liquid carrier is removed, and
wherein decomposition of the metal compound is effected by raising the temperature of the ink after deposition on the item to produce the metal matrix comprising the first metal in elemental or alloyed form.

**2.** A method according to claim 1, wherein the decomposition is effected by raising the temperature of the ink after deposition on the item to a temperature of at least 80 °C, optionally at least 100 °C.

**3.** A method according to claim 1 or claim 2, wherein the ink is printed on the item, optionally wherein the ink is printed on the item by a technique selected from ink-jet printing, offset printing, screen printing, gravure printing, flexo printing, photolithography, pad-printing, spray coating, dip-coating and brush coating.

**4.** A method according to any one of the preceding claims, wherein the metal of the species for forming a metal matrix comprises a first metal, such that the metal of the metal matrix is the first metal in elemental or alloy form, and the item, before depositing the ink thereon, comprises, consists essentially of, or consists of a second metal, optionally wherein the second metal is a precious metal selected from gold, silver, platinum, palladium, ruthenium, osmium, rhenium, rhodium and iridium and/or optionally wherein the first metal and second metal are the same, for example, wherein the first metal and second metal both comprise gold.

**5.** A method according to claim 4, wherein the item (before the ink is deposited thereon) is in the form of a bar, ingot, disc, round or grain consisting essentially of or consisting of a precious metal selected from gold, silver, platinum, palladium, ruthenium, osmium, rhenium, rhodium and iridium, optionally wherein the method involves first forming (e.g. casting or blanking) the bar, ingot, disc, round or grain and then depositing the ink thereon.

**6.** A method according to any one of claims 1 to 5, wherein the item comprises, consists essentially of or consists of a non-metal, optionally wherein the non-metal is selected from a polymeric material (e.g. plastic), a glass and a ceramic material.

**7.** A method according to any one of the previous claims, wherein the security element is selected from luminescent particles, a thermochromic substance, a photochromic substance, an electrochromic substance, a magnetic substance, a raman-active substance and an RFID tag.

**8.** A method according to any one of the preceding claims, wherein the security element comprises luminescent particles

having a D50 distribution, measured using laser light scattering, in accordance with ASTM UOP856-07, of 10 μm or less, optionally of from 0.1 μm to 5 μm, optionally of from 0.5 μm to 5 μm, optionally of from 0.5 μm to 2 μm. .

**9.** A method according to any one of the preceding claims, wherein the security element comprises luminescent particles comprising a material selected from an aluminate, a borate, a gallate, a niobate, vanadate, a garnet, a pervoskite, an oxysulfide, and combinations thereof, optionally wherein the garnet is selected from yttrium aluminum garnet (YAG), yttrium gallium garnet (YGG), yttrium iron garnet (YIG ), or gadolinium gallium garnet (GGG) and gadolinium scandium gallium garnet (GSGG).

**10.** An ink composition comprising

a liquid carrier,
a security element, which may be dispersed in (e.g. suspended or dissolved in) the liquid carrier, and
a species for forming a metal matrix which is
a metal compound dissolved in the liquid carrier, the metal compound being convertible to a metal matrix comprising the metal of the metal complex in elemental or alloyed form; and

wherein the metal compound is thermally decomposable, such that, on decomposition, it produces the metal matrix comprising the metal of the metal compound in elemental or alloyed form

**11.** An ink composition according to claim 10, wherein the security element comprises luminescent particles.

**12.** An ink composition according to claim 10 or claim 11, or a method according to claim 1, wherein the metal compound is a metal complex comprising the metal and one or more ligands, optionally wherein the one or more ligands are selected from a β-diketonate, a ketoiminate, an amidinate, an alkoxide, a phosphane, a carboxylate and an amine.

**13.** An ink composition according to claim 10, wherein metal compound thermally decomposes to the metal in elemental or alloyed form at temperature of at least 80 °C, optionally at least 100 °C.

**Patentansprüche**

**1.** Verfahren zum Bilden einer Schicht auf einem Gegenstand, wobei das Verfahren umfasst:

Aufbringen auf den Gegenstand einer Tinte mit einem Sicherheitselement und einer Spezies zum Bilden einer Metallmatrix, um die Schicht zu bilden, die eine Metallmatrix umfasst, in die das Sicherheitselement eingebettet ist, wobei die Spezies zum Bilden einer Metallmatrix eine Metallverbindung eines ersten Metalls umfasst, wobei die Tinte ferner einen flüssigen Träger umfasst und wobei die Metallverbindung in dem flüssigen Träger gelöst ist;
wobei die Metallverbindung auf dem Gegenstand aufgebracht wird und dann der flüssige Träger entfernt wird, und
wobei die Zersetzung der Metallverbindung durch Erhöhen der Temperatur der Tinte nach dem Aufbringen auf den Gegenstand bewirkt wird, um die Metallmatrix zu erzeugen, die das erste Metall in elementarer oder legierter Form umfasst.

**2.** Verfahren nach Anspruch 1, wobei die Zersetzung durch Erhöhen der Temperatur der Tinte nach dem Auftragen auf den Gegenstand auf eine Temperatur von mindestens 80 °C, optional mindestens 100 °C, bewirkt wird.

**3.** Verfahren nach Anspruch 1 oder Anspruch 2, wobei die Tinte auf den Gegenstand gedruckt wird, optional wobei die Tinte auf den Gegenstand durch eine Technik gedruckt wird, die aus Tintenstrahldruck, Offsetdruck, Siebdruck, Tiefdruck, Flexodruck, Fotolithographie, Tampondruck, Sprühbeschichtung, Tauchbeschichtung und Pinselbeschichtung ausgewählt ist.

**4.** Verfahren nach einem der vorhergehenden Ansprüche, wobei das Metall der Spezies zum Bilden einer Metallmatrix ein erstes Metall umfasst, sodass das Metall der Metallmatrix das erste Metall in elementarer Form oder in Form einer Legierung ist, und der Gegenstand vor dem Aufbringen der Tinte darauf ein zweites Metall umfasst, im Wesentlichen daraus besteht, oder aus einem zweiten Metall besteht, wobei es sich bei dem zweiten Metall optional um ein Edelmetall handelt, das aus Gold, Silber, Platin, Palladium, Ruthenium, Osmium, Rhenium, Rhodium und Iridium ausgewählt ist, und/oder wobei das erste Metall und das zweite Metall optional dasselbe sind, beispielsweise,

wenn das erste Metall und das zweite Metall beide Gold umfassen.

**5.** Verfahren nach Anspruch 4, wobei der Gegenstand (bevor die Tinte darauf aufgebracht wird) in Form eines Barrens, Ingots, einer Scheibe, eines Rondells oder eines Korns vorliegt, der/die im Wesentlichen aus einem Edelmetall, ausgewählt aus Gold, Silber, Platin, Palladium, Ruthenium, Osmium, Rhenium, Rhodium und Iridium, besteht oder daraus besteht, wobei das Verfahren optional beinhaltet, dass zuerst der Barren, das Ingot, die Scheibe, das Rondell oder das Korn geformt (z. B. gegossen oder gestanzt) und dann die Tinte darauf aufgebracht wird.

**6.** Verfahren nach einem der Ansprüche 1 bis 5, wobei der Gegenstand ein Nicht-Metall umfasst, im Wesentlichen daraus besteht oder daraus besteht, wobei das Nicht-Metall optional aus einem polymeren Material (z. B. Kunststoff), einem Glas und einem keramischen Material ausgewählt ist.

**7.** Verfahren nach einem der vorhergehenden Ansprüche, wobei das Sicherheitselement aus lumineszierenden Partikeln, einer thermochromen Substanz, einer photochromen Substanz, einer elektrochromen Substanz, einer magnetischen Substanz, einer Raman-aktiven Substanz und einem RFID-Tag ausgewählt ist.

**8.** Verfahren nach einem der vorhergehenden Ansprüche, wobei das Sicherheitselement lumineszierende Partikel mit einer D50-Verteilung, gemessen unter Verwendung von Laserlichtstreuung gemäß ASTM UOP856-07, von 10 $\mu$m oder weniger, optional von 0,1 $\mu$m bis 5 um, optional von 0,5 $\mu$m bis 5 um, optional von 0,5 $\mu$m bis 2 um aufweist.

**9.** Verfahren nach einem der vorhergehenden Ansprüche, wobei das Sicherheitselement lumineszierende Partikel umfasst, die ein Material umfassen, das aus einem Aluminat, einem Borat, einem Gallat, einem Niobat, Vanadat, einem Granat, einem Pervoskit, einem Oxysulfid, und Kombinationen davon ausgewählt ist, wobei der Granat gegebenenfalls aus Yttrium-Aluminium-Granat (YAG), Yttrium-Gallium-Granat (YGG), Yttrium-Eisen-Granat (YIG) oder Gadolinium-Gallium-Granat (GGG) und Gadolinium-Scandium-Gallium-Granat (GSGG) ausgewählt ist.

**10.** Tintenzusammensetzung, umfassend

einen flüssigen Träger,
ein Sicherheitselement, das in dem flüssigen Träger dispergiert (z. B. suspendiert oder gelöst) sein kann, und
eine Spezies zum Bilden einer Metallmatrix, die
eine Metallverbindung ist, die in dem flüssigen Träger gelöst ist, wobei die Metallverbindung in eine Metallmatrix umwandelbar ist, die das Metall des Metallkomplexes in elementarer oder legierter Form umfasst; und
wobei die Metallverbindung thermisch zersetzbar ist, sodass sie bei der Zersetzung die Metallmatrix erzeugt, die das Metall der Metallverbindung in elementarer oder legierter Form umfasst

**11.** Tintenzusammensetzung nach Anspruch 10, wobei das Sicherheitselement lumineszierende Partikel umfasst.

**12.** Tintenzusammensetzung nach Anspruch 10 oder Anspruch 11 oder ein Verfahren nach Anspruch 1, wobei die Metallverbindung ein Metallkomplex ist, der das Metall und einen oder mehrere Liganden umfasst, wobei der eine oder die mehreren Liganden optional aus einem $\beta$-Diketonat, einem Ketoiminat, einem Amidinat, einem Alkoxid, einem Phosphan, einem Carboxylat und einem Amin ausgewählt sind.

**13.** Tintenzusammensetzung nach Anspruch 10, wobei sich die Metallverbindung bei einer Temperatur von mindestens 80 °C, optional mindestens 100 °C, thermisch in das Metall in elementarer oder legierter Form zersetzt.

**Revendications**

**1.** Procédé de formation d’une couche sur un article, le procédé comprenant :

le dépôt sur l’article d’une encre contenant un élément de sécurité et une espèce destinée à former une matrice métallique pour former la couche, qui comprend une matrice métallique dans laquelle est incorporé l’élément de sécurité, dans lequel l’espèce destinée à former une matrice métallique comprend un composé métallique d’un premier métal, dans lequel l’encre comprend en outre un véhicule liquide, et dans lequel le composé métallique est dissous dans le véhicule liquide ;
dans lequel le composé métallique est déposé sur l’article, puis le véhicule liquide est retiré, et
dans lequel la décomposition du composé métallique est effectuée en augmentant la température de l’encre

après dépôt sur l'article pour produire la matrice métallique comprenant le premier métal sous forme élémentaire ou alliée.

2. Procédé selon la revendication 1, dans lequel la décomposition est effectuée en augmentant la température de l'encre après dépôt sur l'article à une température d'au moins 80°C, éventuellement d'au moins 100°C.

3. Procédé selon la revendication 1 ou la revendication 2, dans lequel l'encre est imprimée sur l'article, éventuellement dans lequel l'encre est imprimée sur l'article par une technique choisie parmi l'impression à jet d'encre, l'impression offset, la sérigraphie, l'héliogravure, la flexographie, la photolithographie, la tampographie, le revêtement par pulvérisation, le revêtement par trempage et le revêtement au pinceau.

4. Procédé selon l'une quelconque des revendications précédentes, dans lequel le métal de l'espèce destinée à former une matrice métallique comprend un premier métal, tel que le métal de la matrice métallique est le premier métal sous forme élémentaire ou d'alliage, et l'article, avant d'y déposer l'encre, comprend, est essentiellement constitué, ou est constitué d'un second métal, éventuellement dans lequel le second métal est un métal précieux choisi parmi l'or, l'argent, le platine, le palladium, le ruthénium, l'osmium, le rhénium, le rhodium et l'iridium et/ ou éventuellement dans lequel le premier métal et le second métal sont identiques, par exemple, dans lequel le premier métal et le second métal comprennent tous deux de l'or.

5. Procédé selon la revendication 4, dans lequel l'article (avant que l'encre ne soit déposée dessus) se présente sous la forme d'une barre, d'un lingot, d'un disque, d'un rond ou d'un grain constitué essentiellement ou constitué d'un métal précieux choisi parmi l'or, l'argent, le platine, le palladium, le ruthénium, l'osmium, le rhénium, le rhodium et l'iridium, éventuellement dans lequel le procédé implique d'abord de former (par exemple de couler ou découper) la barre, le lingot, le disque, le rond ou le grain puis de déposer l'encre dessus.

6. Procédé selon l'une quelconque des revendications 1 à 5, dans lequel l'article comprend, est constitué essentiellement ou est constitué d'un matériau non métallique, éventuellement dans lequel le matériau non métallique est choisi parmi un matériau polymère (par exemple le plastique), un verre et un matériau céramique.

7. Procédé selon l'une quelconque des revendications précédentes, dans lequel l'élément de sécurité est choisi parmi des particules luminescentes, une substance thermochrome, une substance photochrome, une substance électrochrome, une substance magnétique, une substance à effet raman et une étiquette RFID.

8. Procédé selon l'une quelconque des revendications précédentes, dans lequel l'élément de sécurité comprend des particules luminescentes ayant une distribution D50, mesurée par diffusion de la lumière laser, conformément à la norme ASTM UOP856-07, de 10 um ou moins, éventuellement de 0,1 um à 5 um, éventuellement de 0,5 um à 5 um, éventuellement de 0,5 um à 2 um.

9. Procédé selon l'une quelconque des revendications précédentes, dans lequel l'élément de sécurité comprend des particules luminescentes comprenant un matériau choisi parmi un aluminate, un borate, un gallate, un niobate, un vanadate, un grenat, une pervoskite, un oxysulfure, et leurs combinaisons, éventuellement dans lequel le grenat est choisi parmi le grenat d'yttrium-aluminium (YAG), le grenat d'yttrium-gallium (YGG), le grenat de fer-yttrium (YIG) ou le grenat de gadolinium-gallium (GGG) et le grenat de gadolinium-scandium-gallium (GSGG).

10. Composition d'encre comprenant

un véhicule liquide,
un élément de sécurité, qui peut être dispersé (par exemple mis en suspension ou dissous) dans le véhicule liquide, et
une espèce destinée à former une matrice métallique qui est
un composé métallique dissous dans le véhicule liquide, le composé métallique étant convertible en une matrice métallique comprenant le métal du complexe métallique sous forme élémentaire ou alliée ; et
dans laquelle le composé métallique est thermiquement décomposable, de sorte que, lors de la décomposition, il produit la matrice métallique comprenant le métal du composé métallique sous forme élémentaire ou alliée.

11. Composition d'encre selon la revendication 10, dans laquelle l'élément de sécurité comprend des particules luminescentes.

**12.** Composition d'encre selon la revendication 10 ou la revendication 11, ou procédé selon la revendication 1, dans lequel le composé métallique est un complexe métallique comprenant le métal et un ou plusieurs ligands, éventuellement dans lequel les un ou plusieurs ligands sont choisis parmi un β-dicétonate, un cétoiminate, un amidinate, un alcoolate, un phosphane, un carboxylate et une amine.

**13.** Composition d'encre selon la revendication 10, dans laquelle le composé métallique se décompose thermiquement en métal sous forme élémentaire ou alliée à une température d'au moins 80°C, éventuellement d'au moins 100°C.

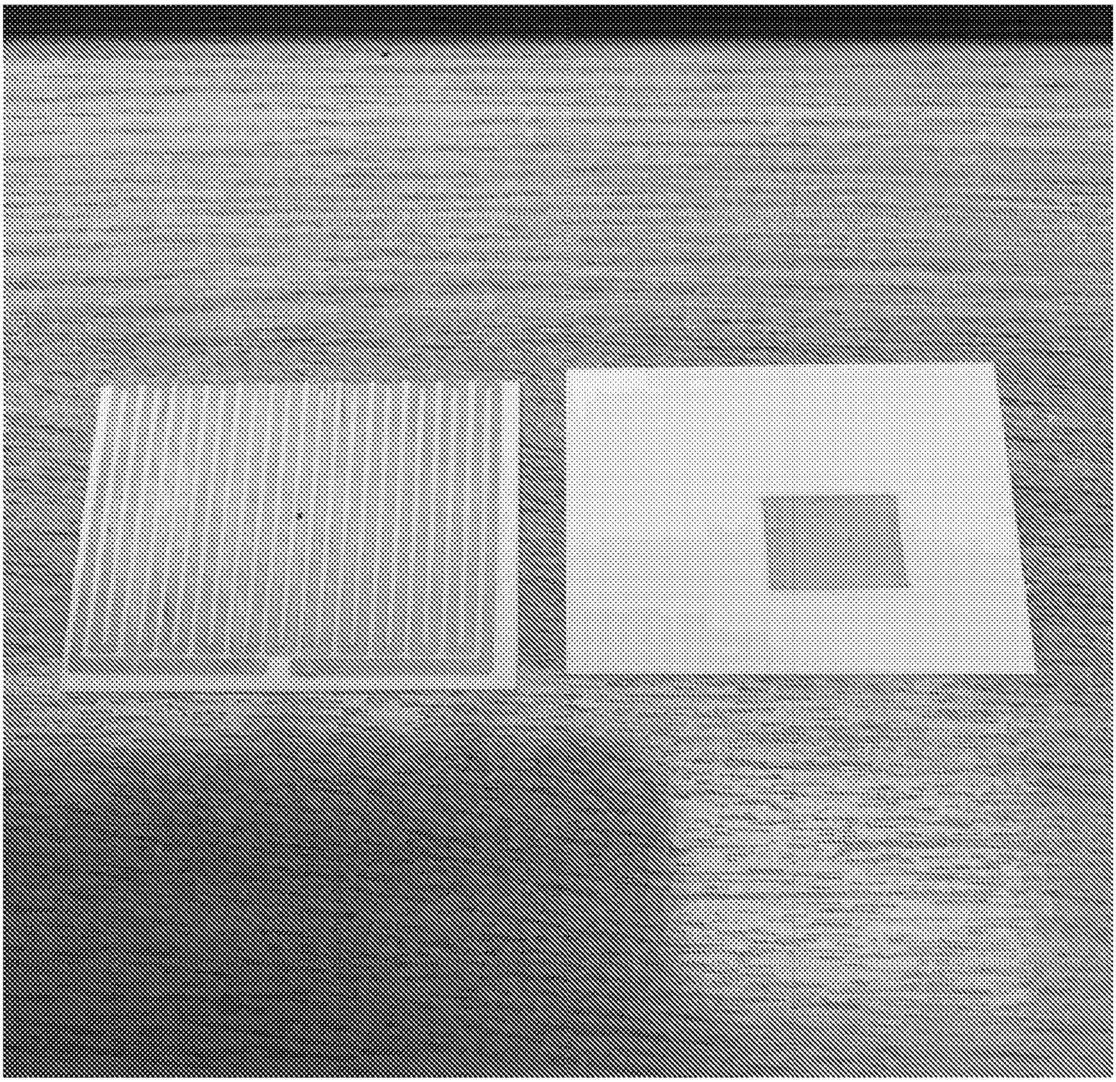

Fig. 1

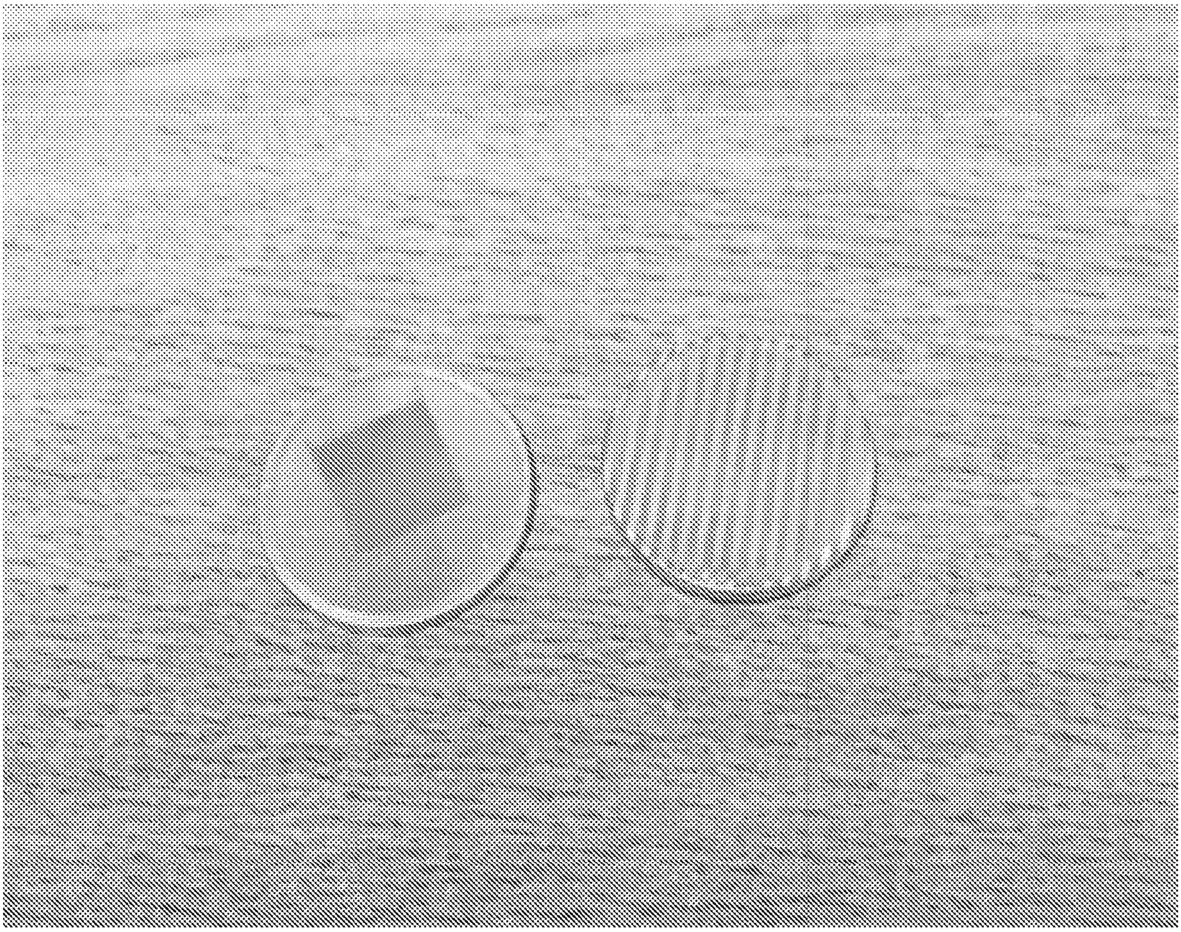

Fig. 2

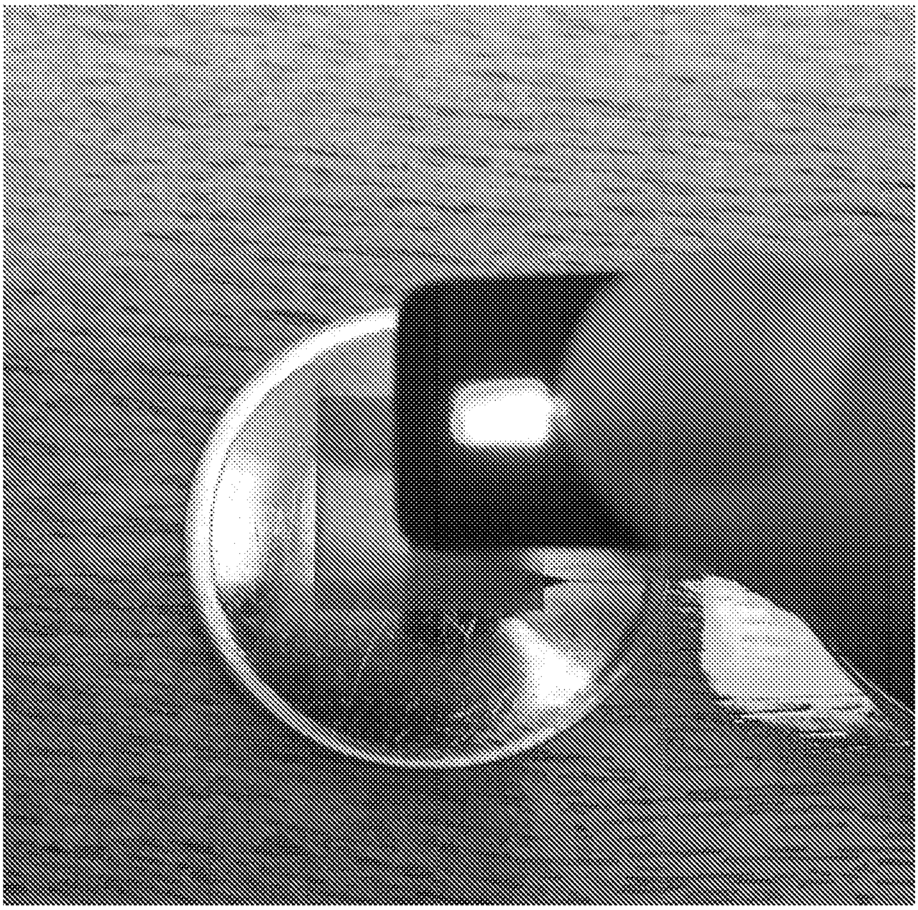

Fig. 3

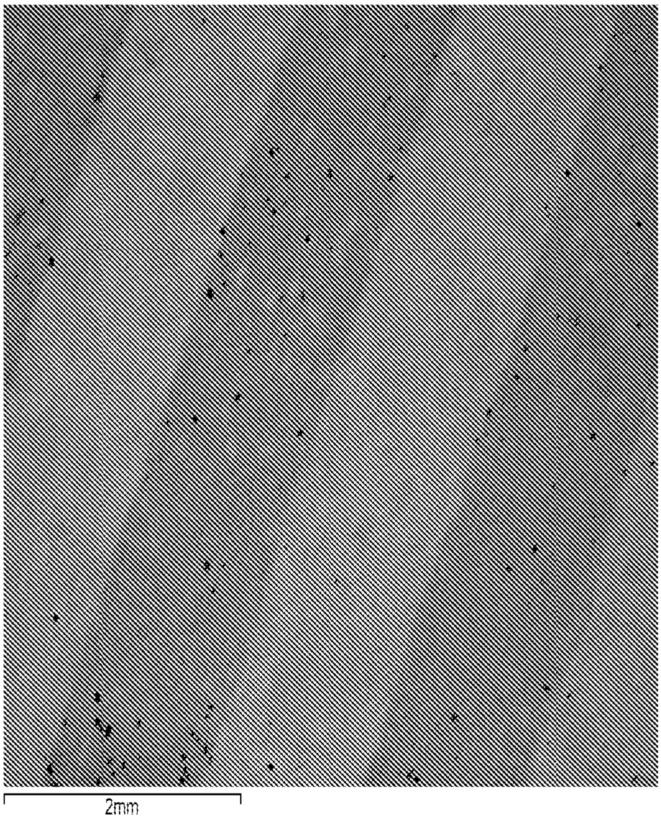


Fig. 4

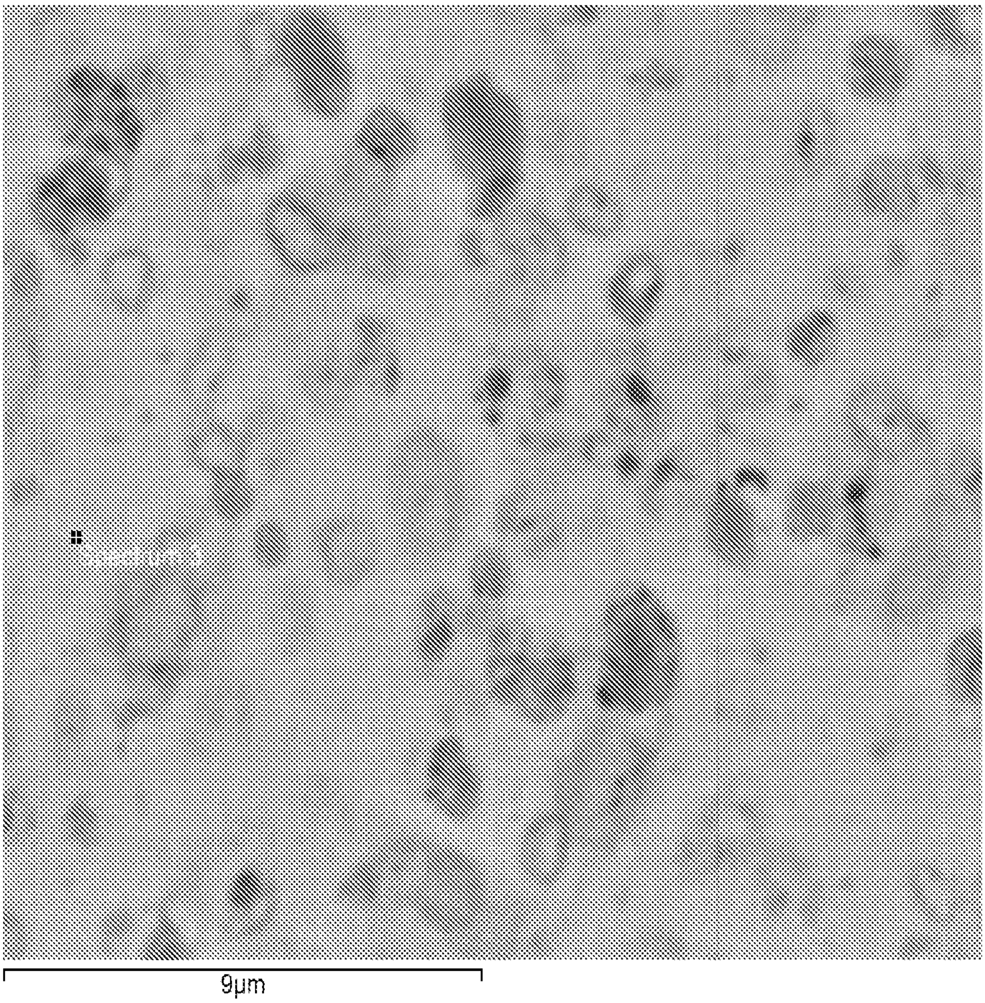


Fig. 5

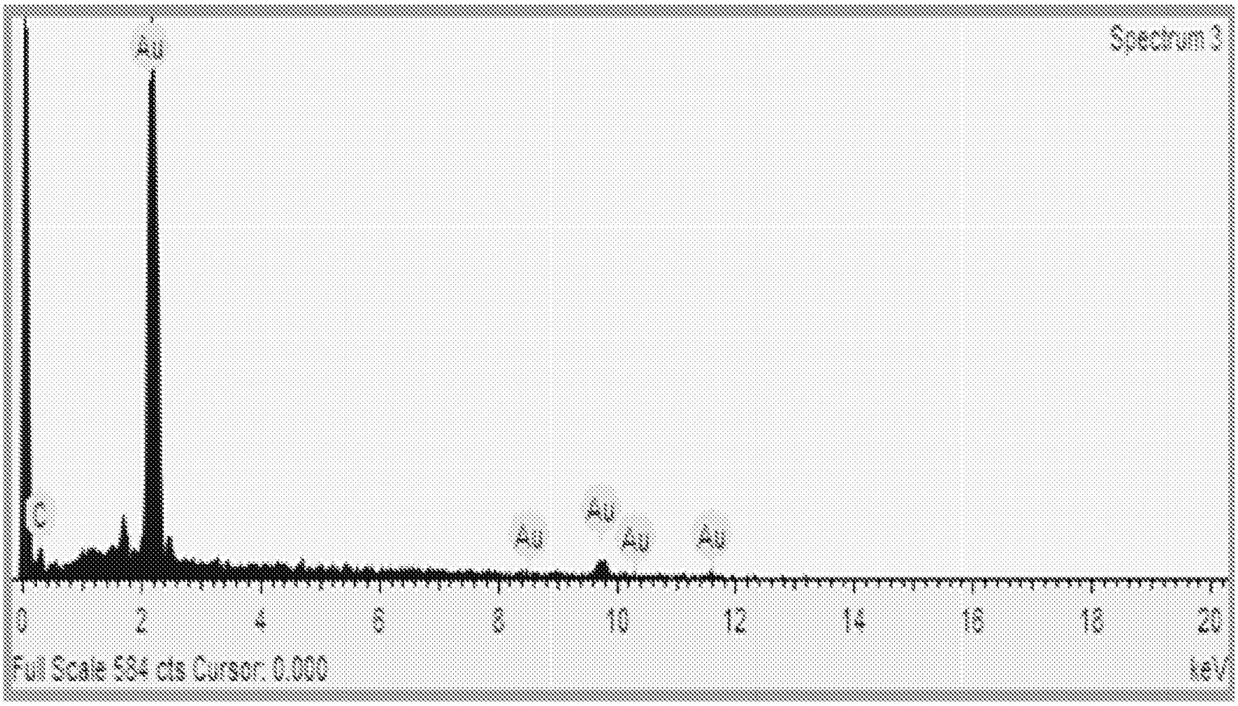
Spectrum 3
Au
C
Au
Au
Au
Au
0
2
4
6
8
10
12
14
16
18
20
Full Scale 584 cts Cursor: 0.000
keV

Fig. 6

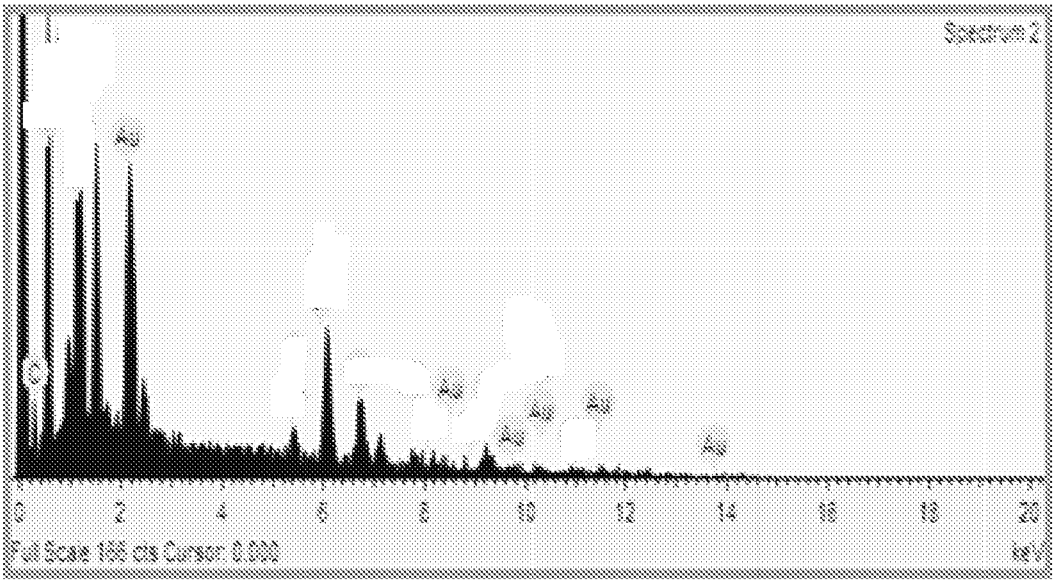


Fig. 7

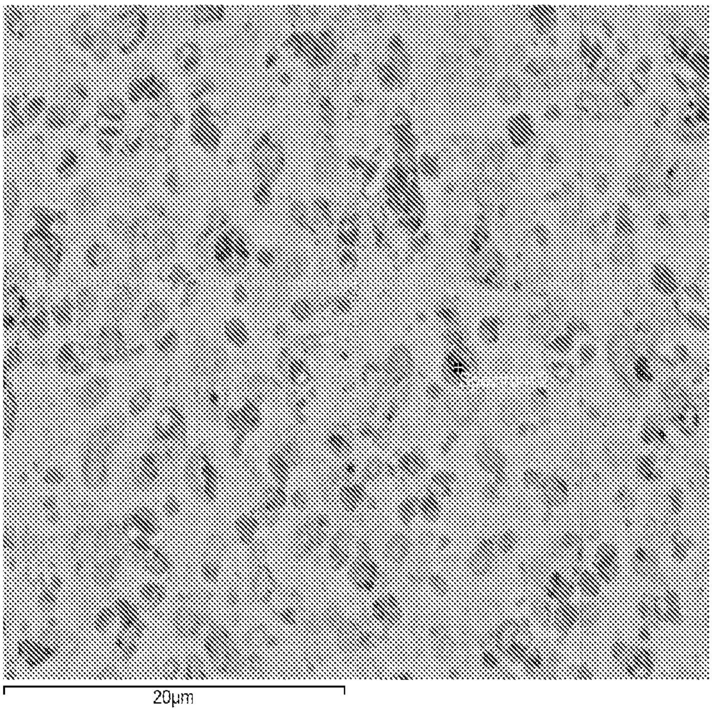


Fig. 8

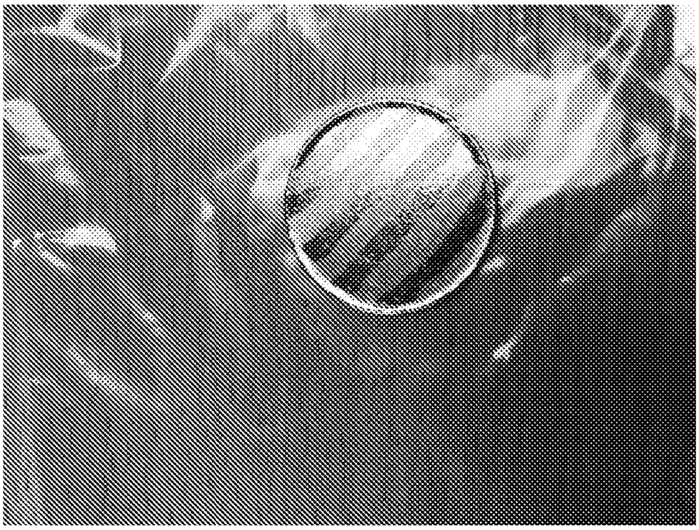

Fig. 9A

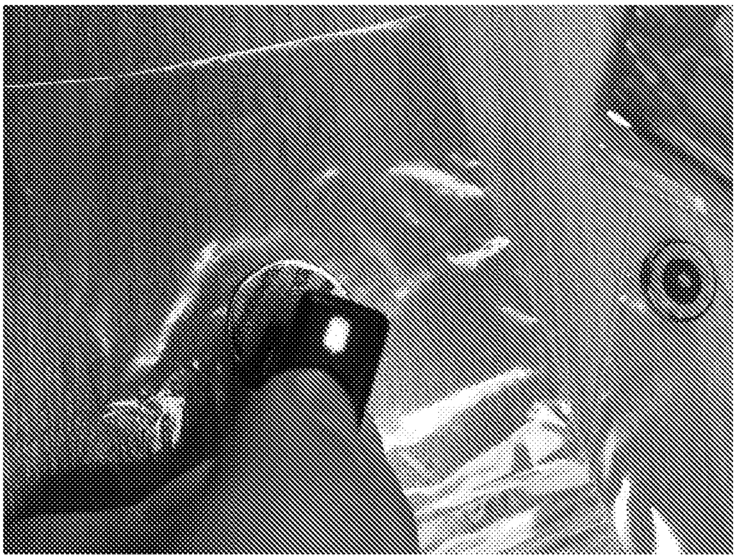

Fig. 9B

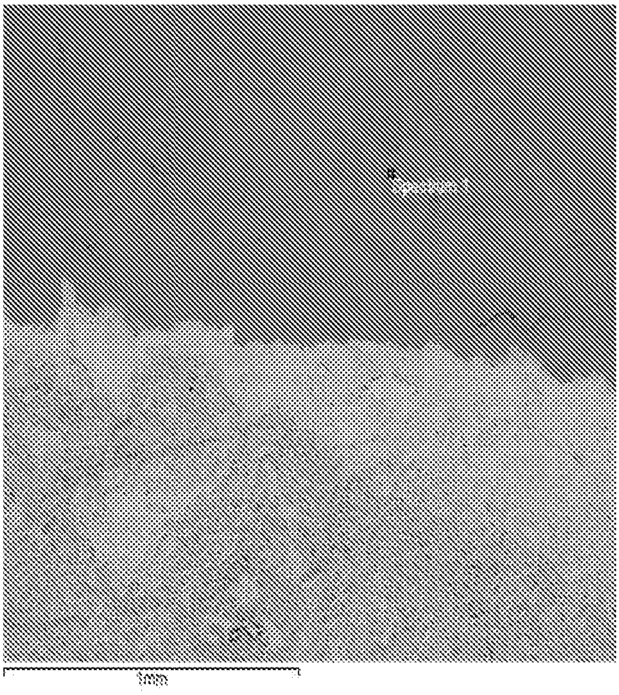
Spectrum 1
1mm

Fig. 9C

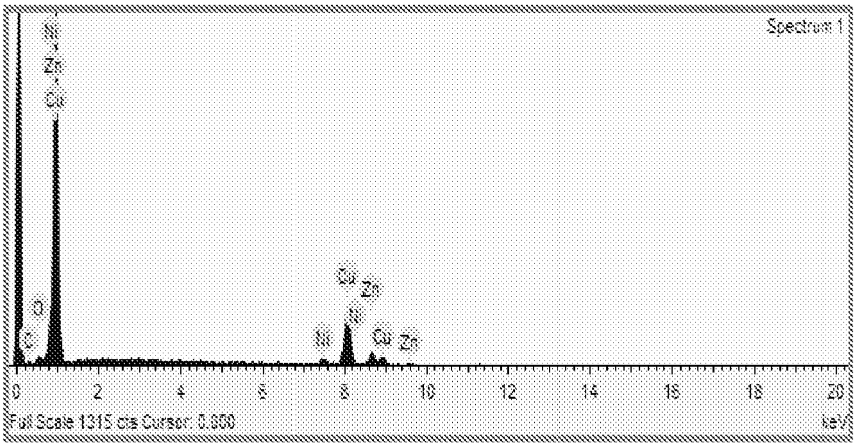
Spectrum 1
Ni
Zn
Cu
O
C
Cu
Zn
Ni
Ni
Cu
Zn
0
2
4
8
10
12
14
16
20
Full Scale 1315 cts Cursor: 0.000
keV

Fig. 9D

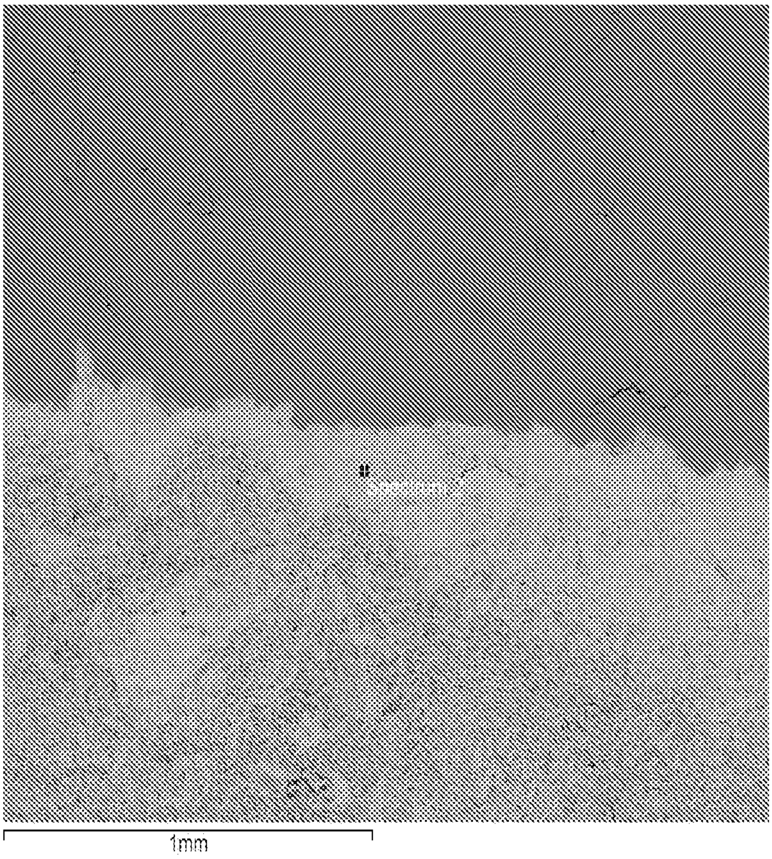


Fig. 9E

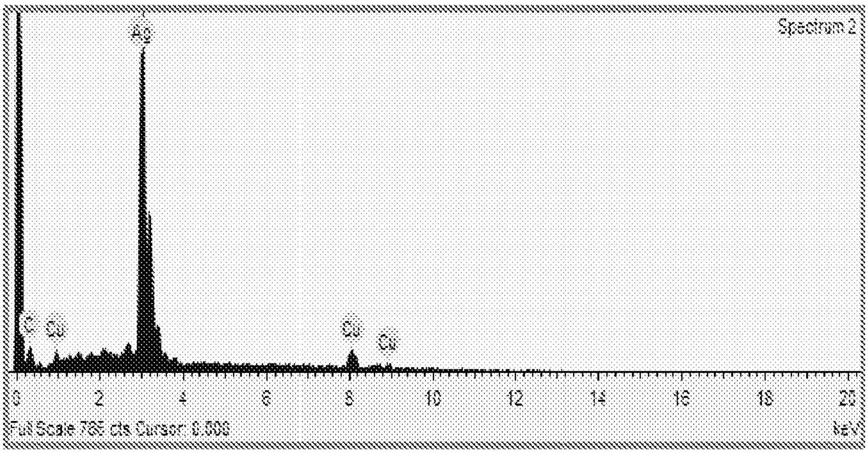


Fig. 9F

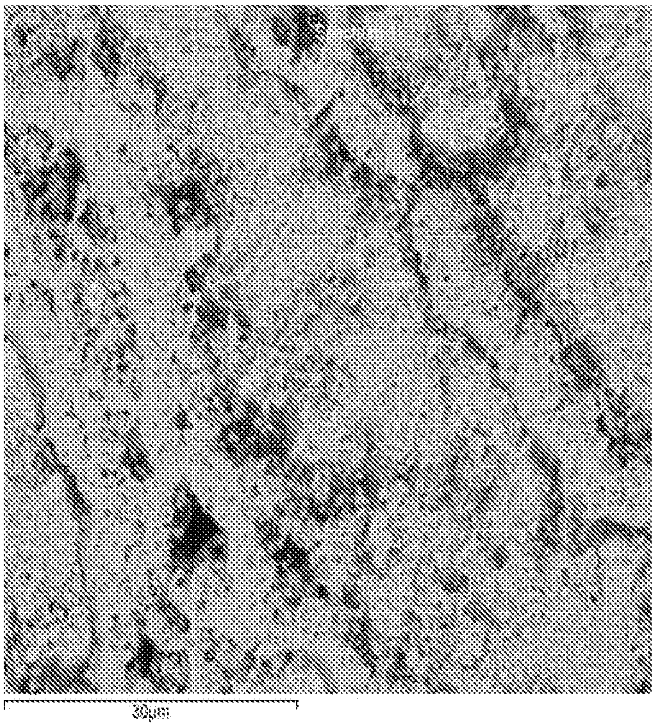
30μm

Fig. 9G

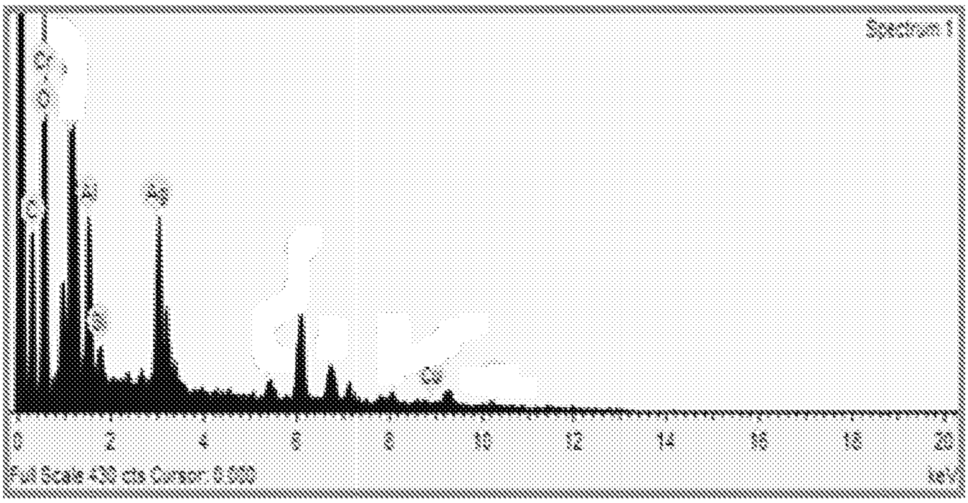
Spectrum 1
Cr
O
Cr
Al
Ag
Si
Ca
0
2
4
6
8
10
12
14
16
18
20
Full Scale 430 cts Cursor: 0.000
keV

Fig. 9H

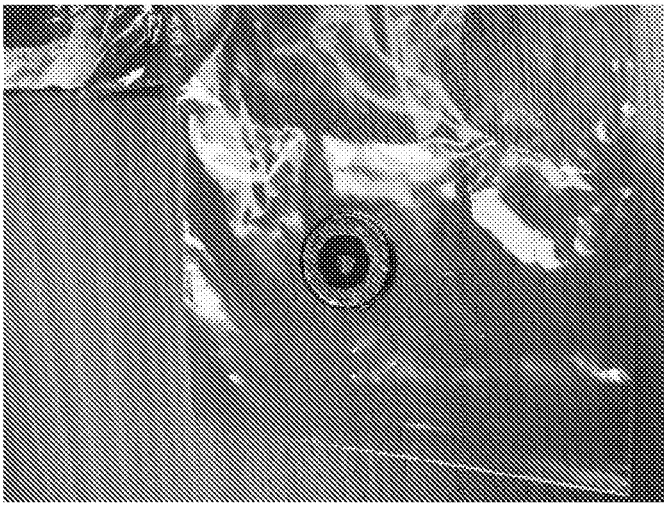

Fig. 10A

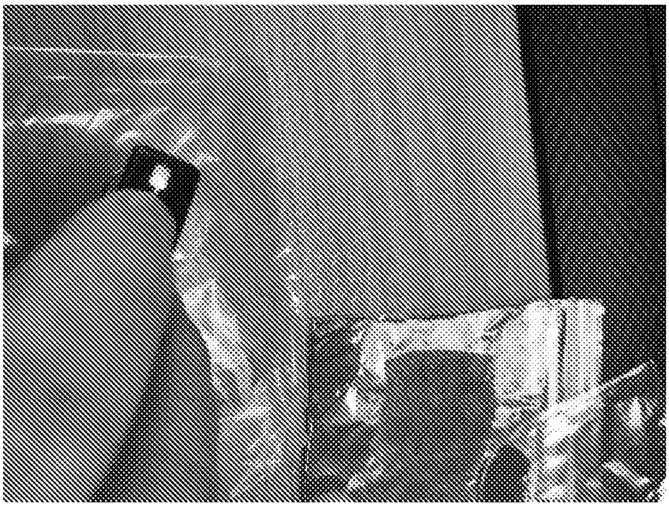

Fig. 10B

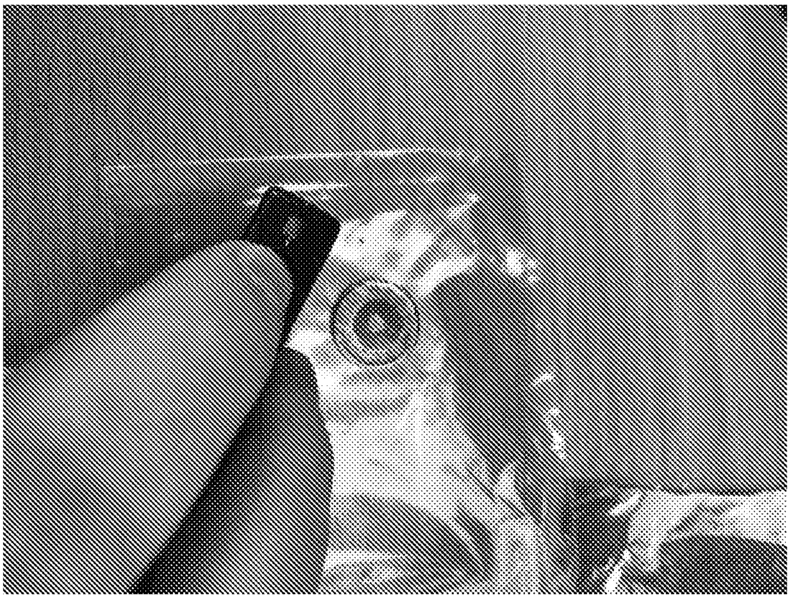

Fig. 10C

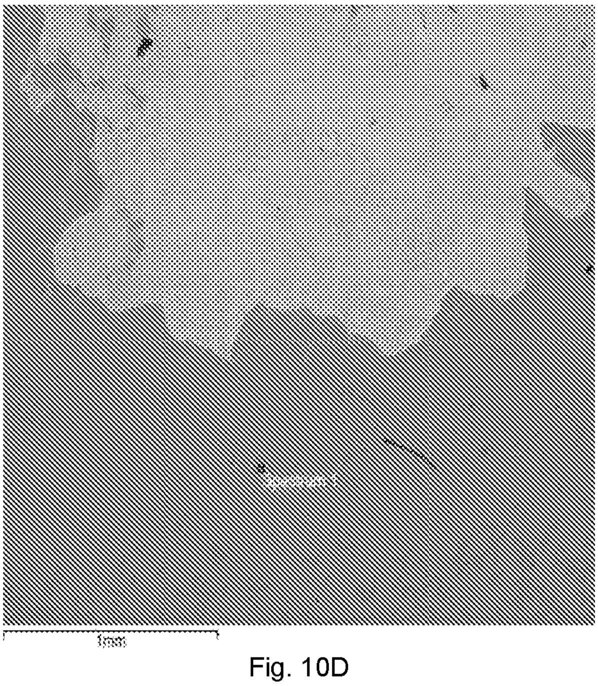


Fig. 10D

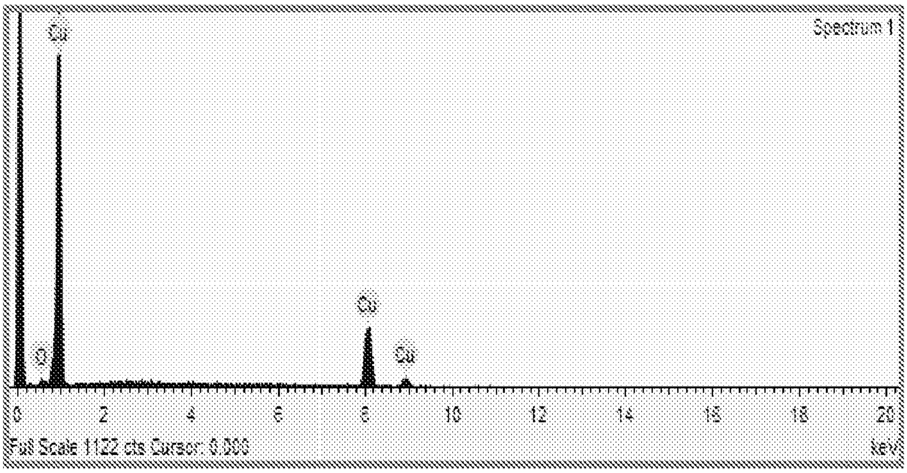


Fig. 10E

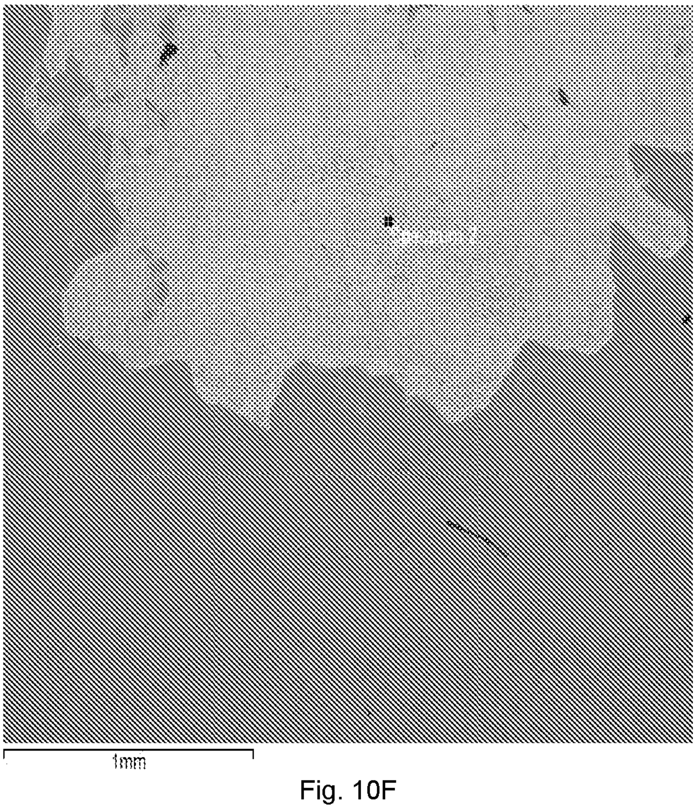


Fig. 10F

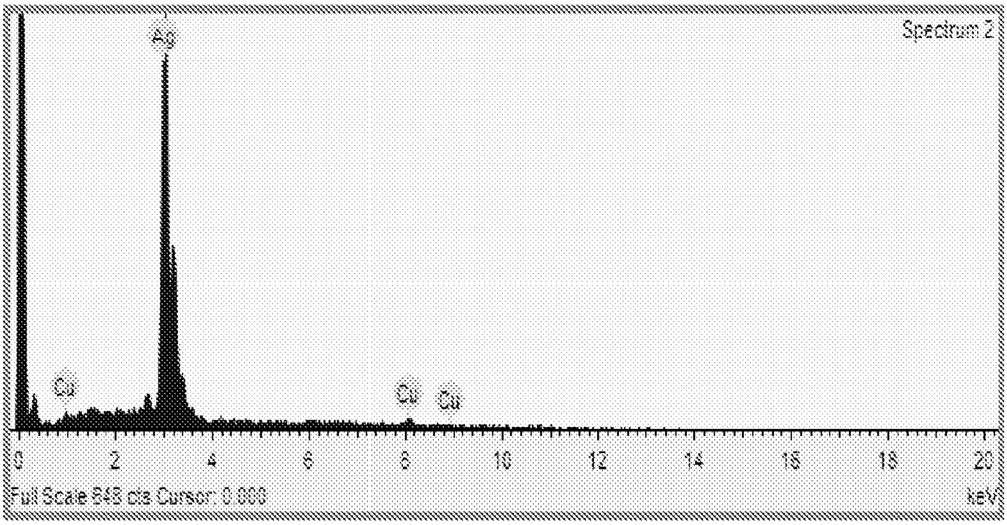


Fig. 10G

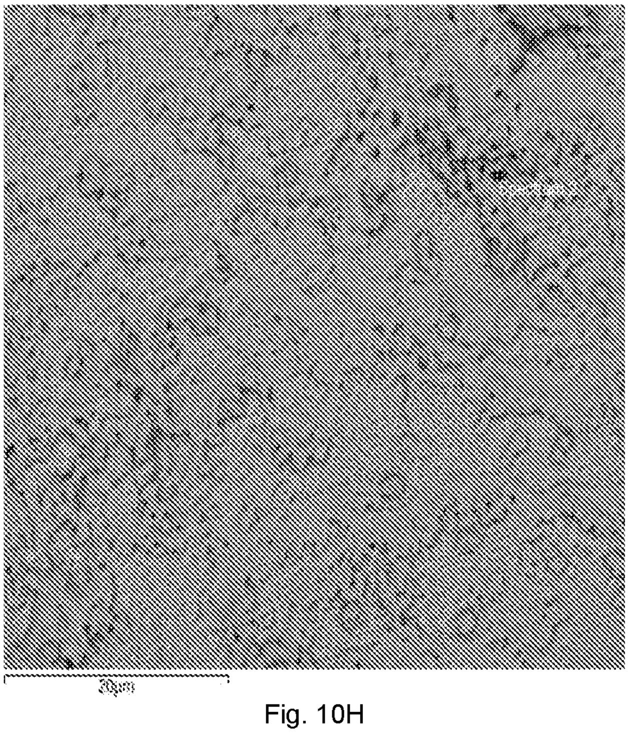


Fig. 10H

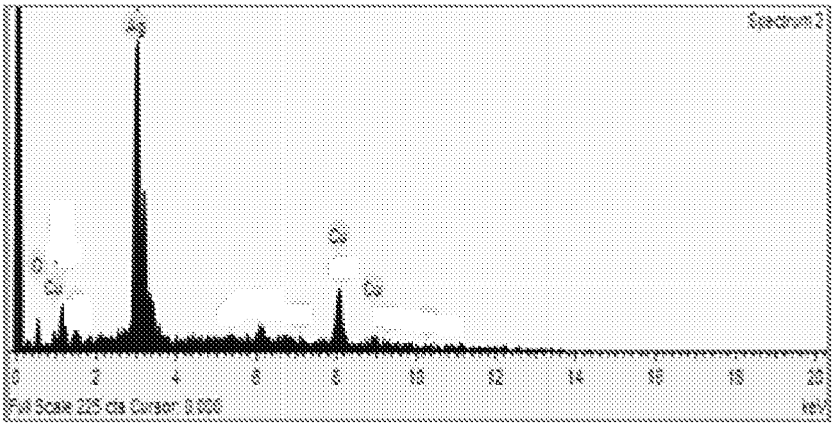


Fig. 10I

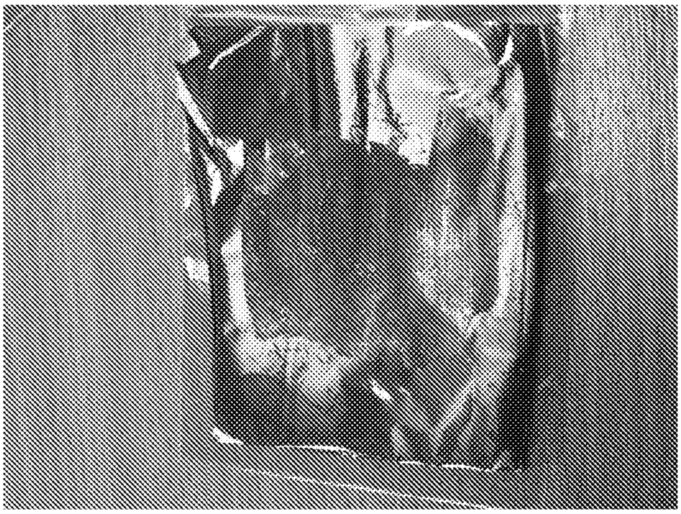

Fig. 11A

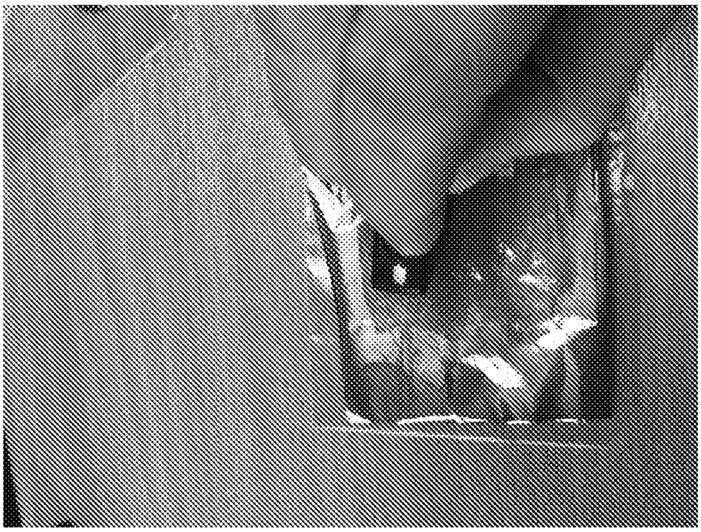

Fig. 11B

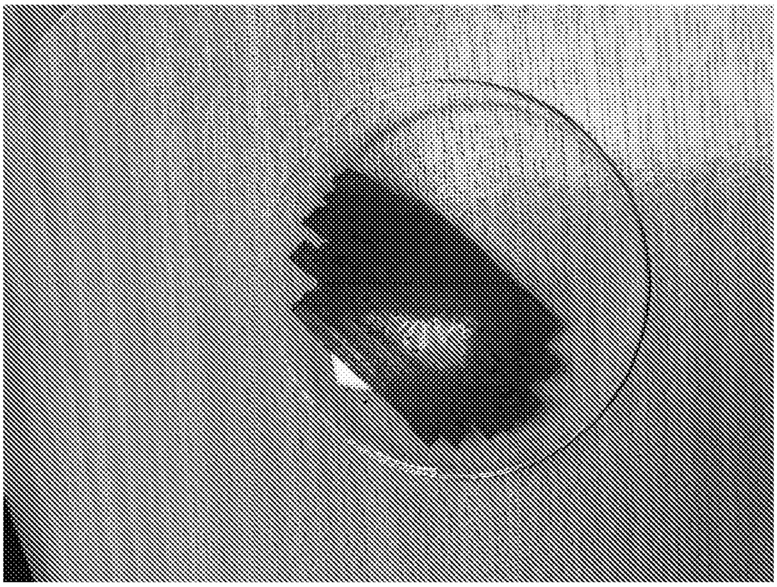

Fig. 12A

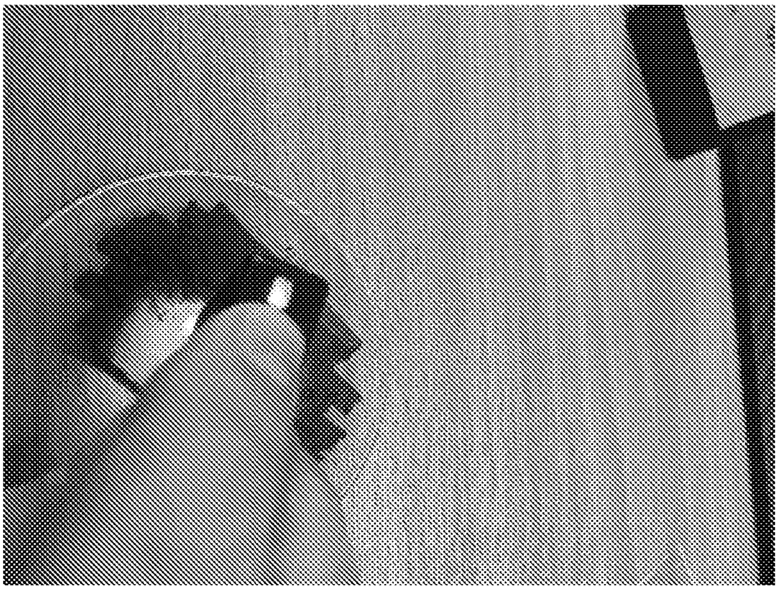

Fig. 12B

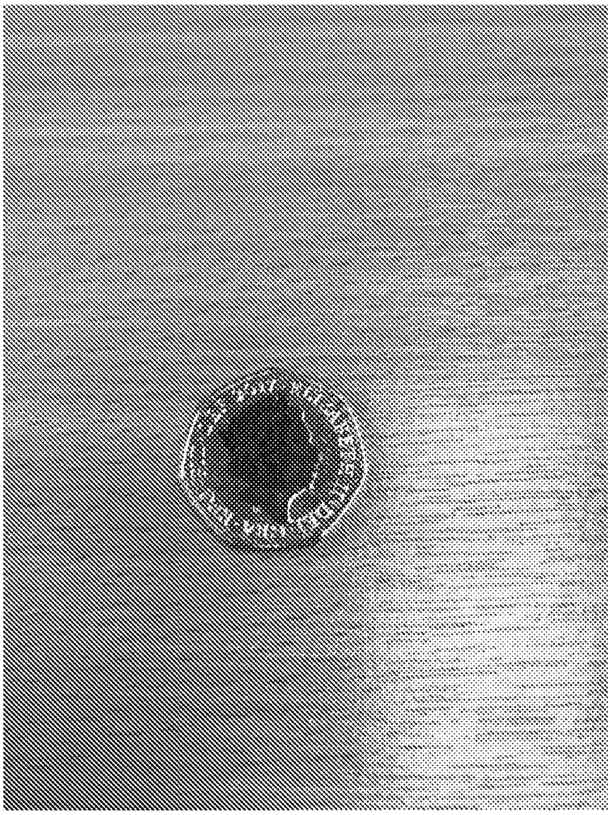

Fig. 13A

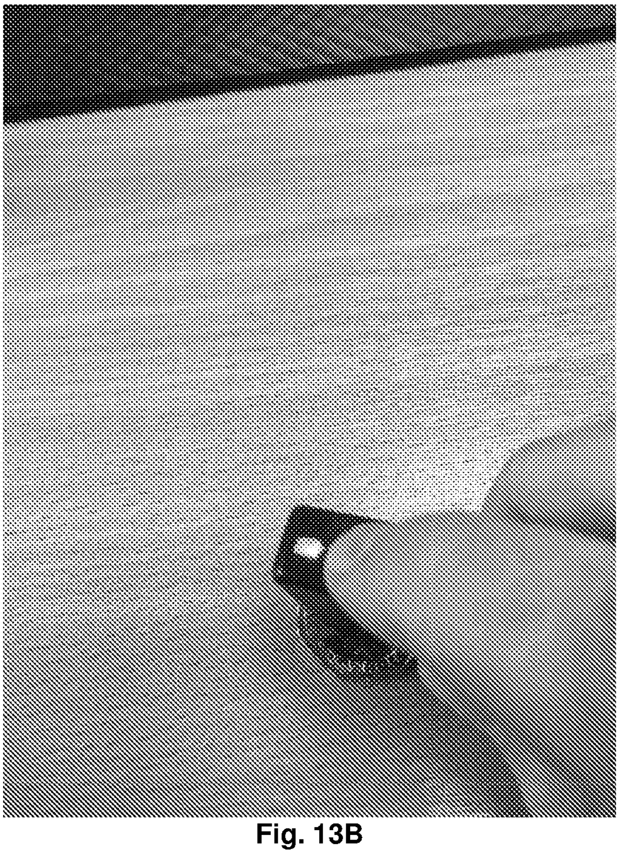

Fig. 13B

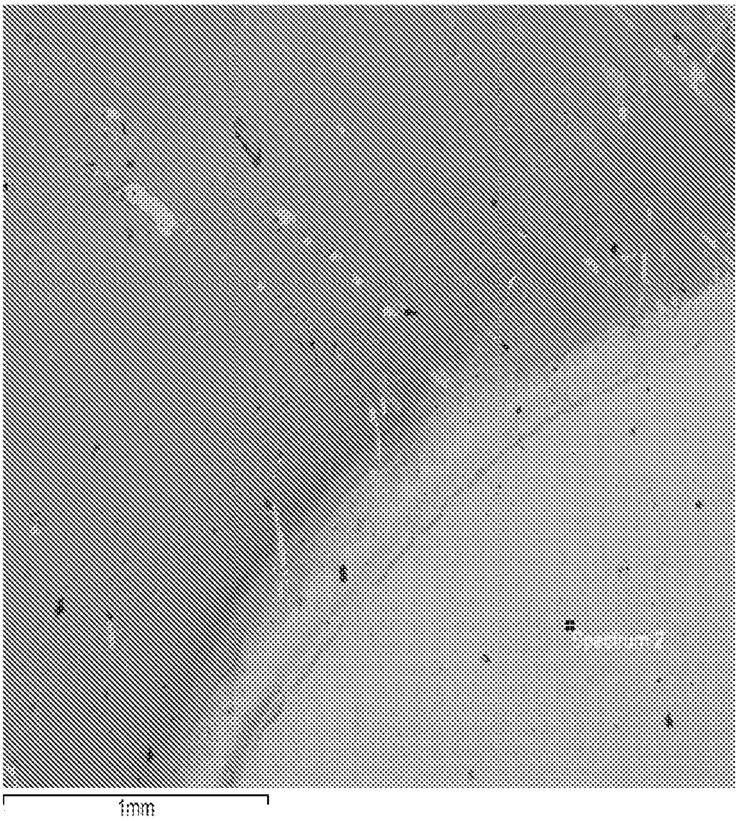


Fig. 13C

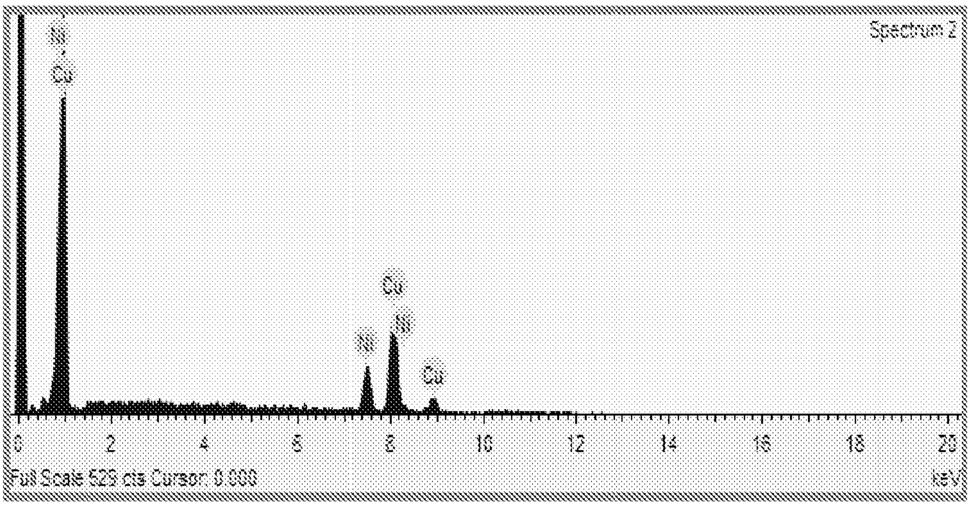


Fig. 13D

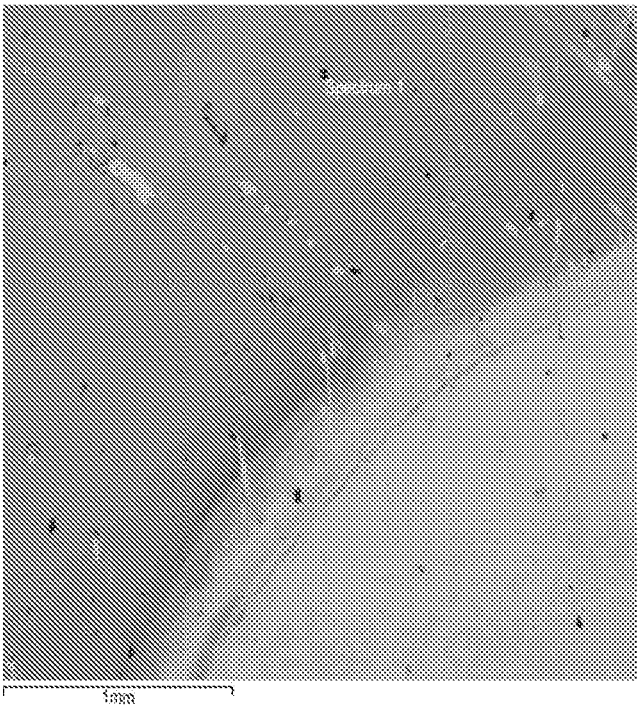


Fig. 13E

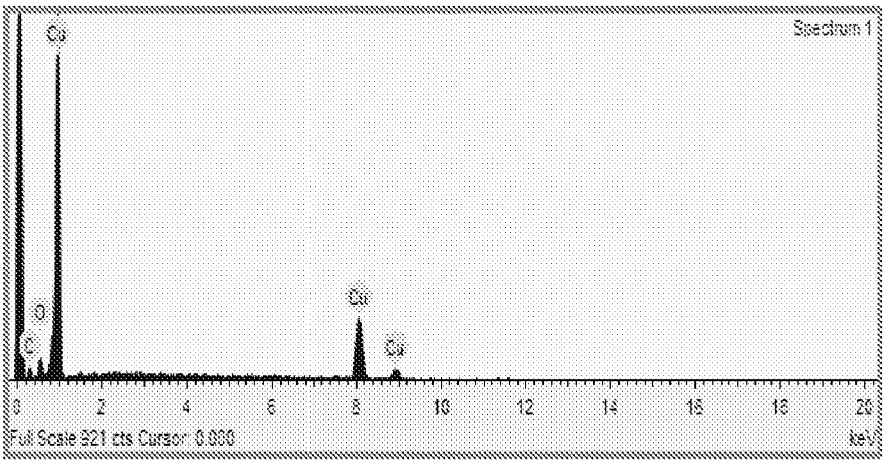


Fig. 13F

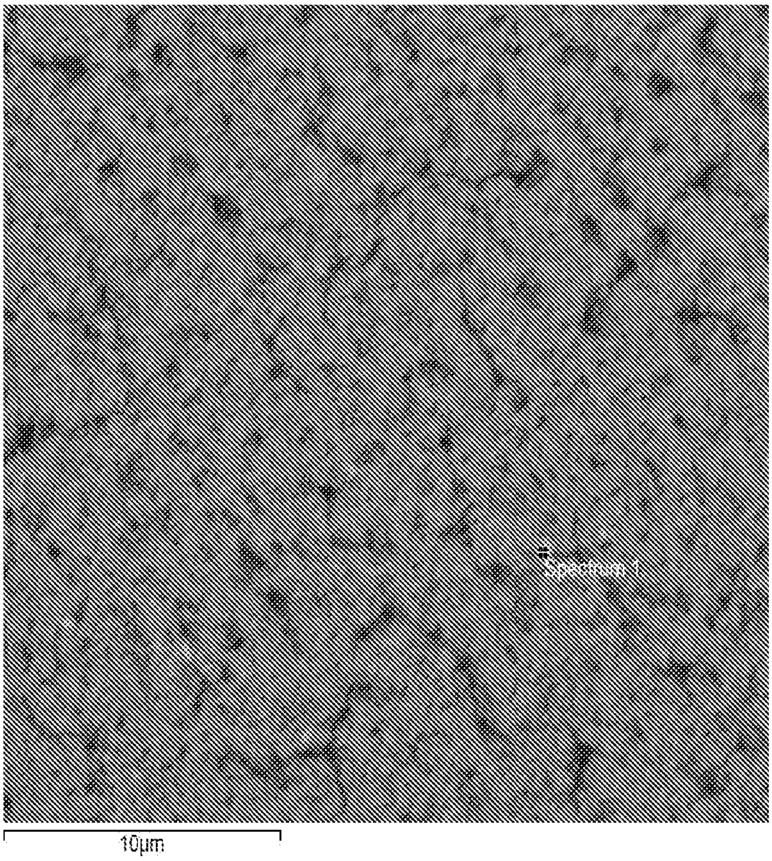


Fig. 13G

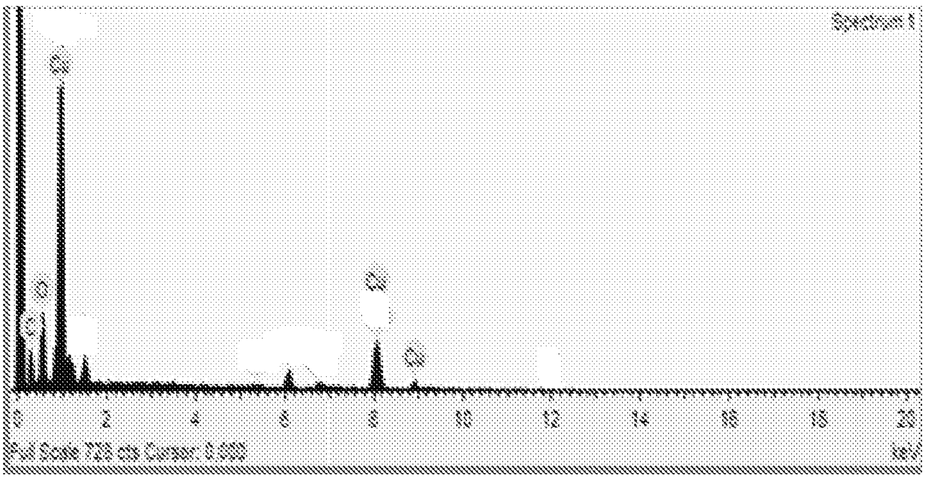


Fig. 13H

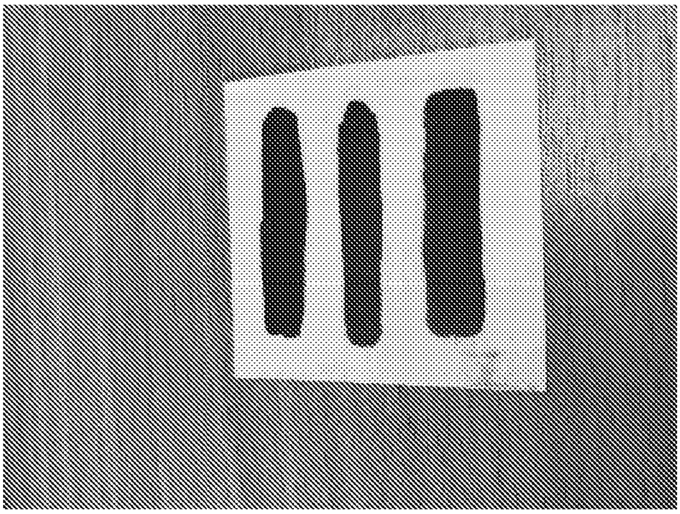

Fig. 14A

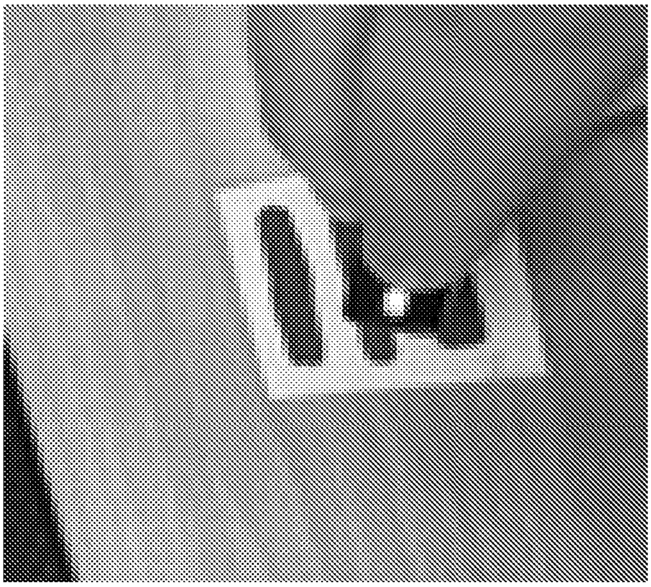

Fig. 14B

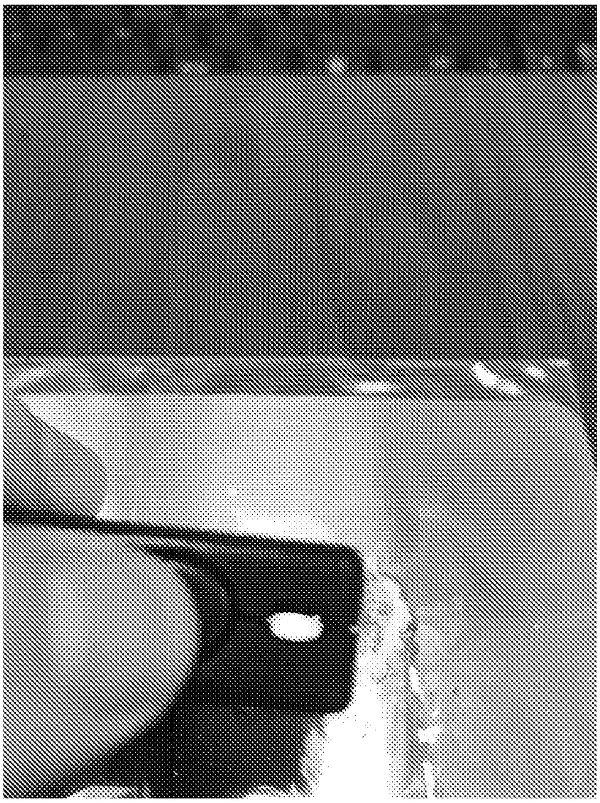

Fig. 15A

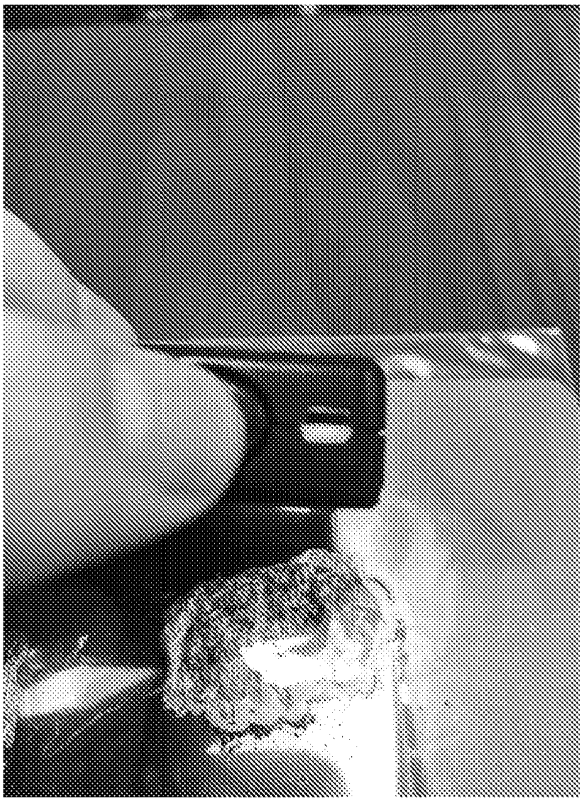

Fig. 15B

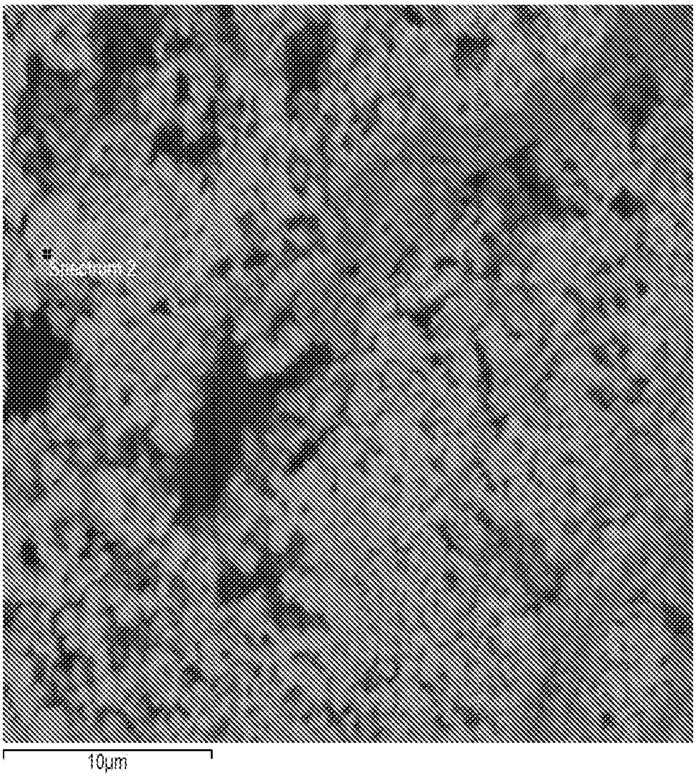


Fig. 15C

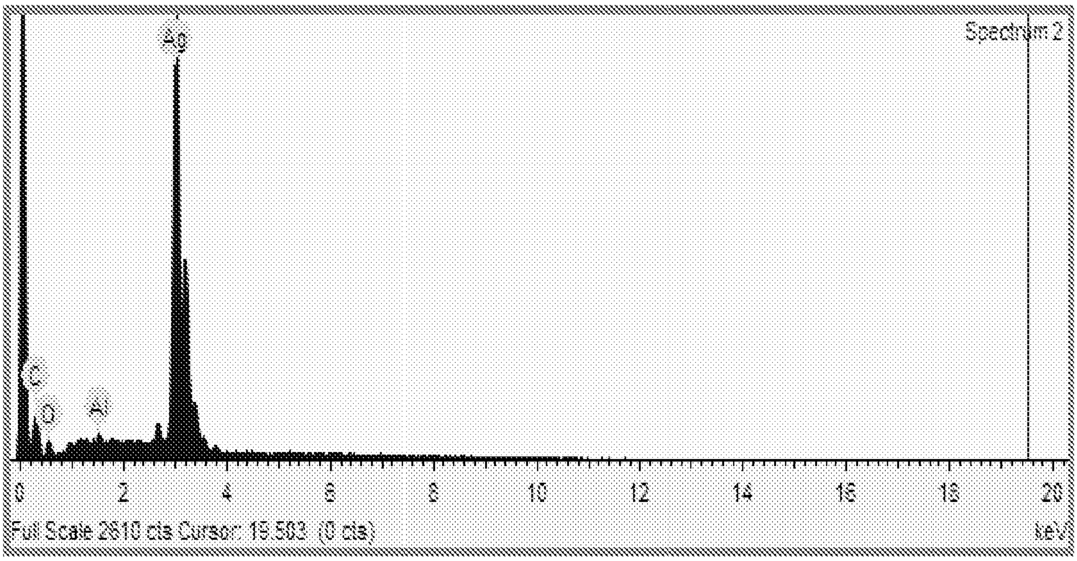


Fig. 15D

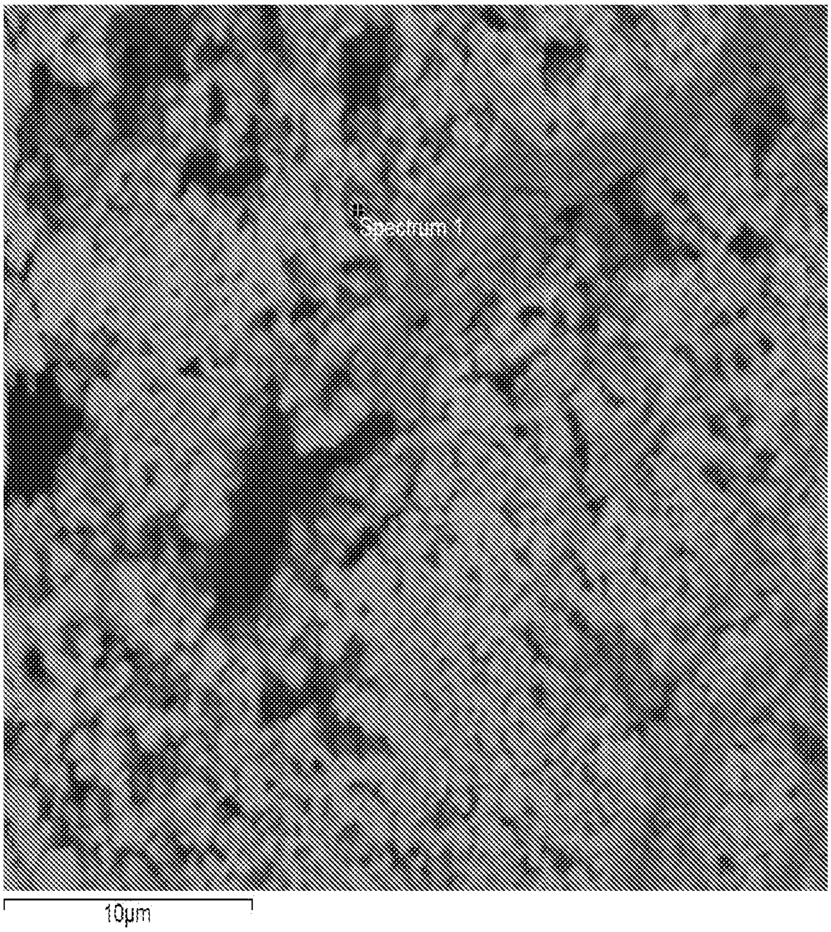


Fig. 15E

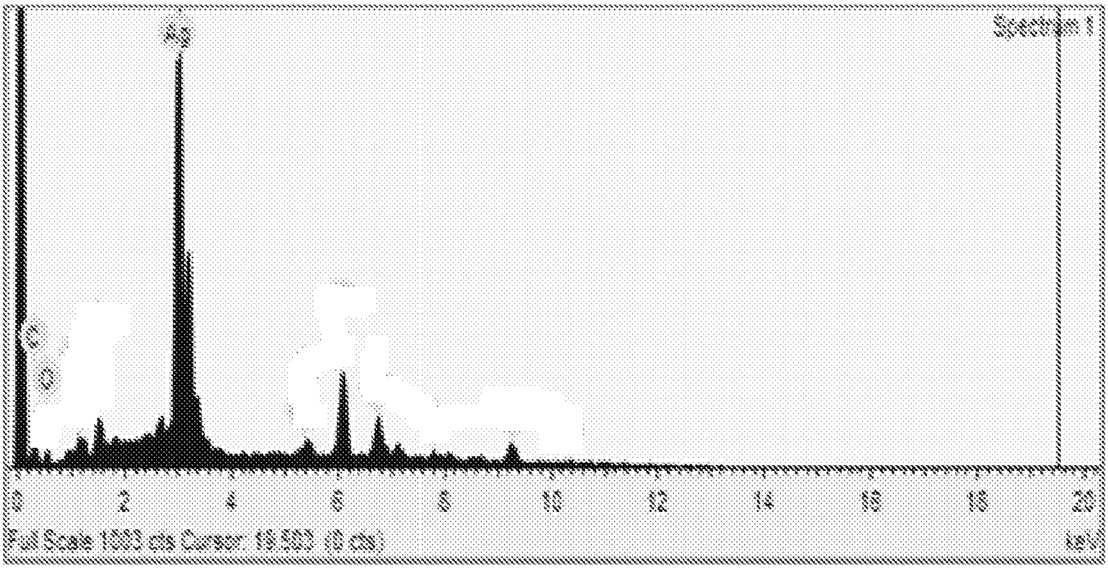


Fig. 15F

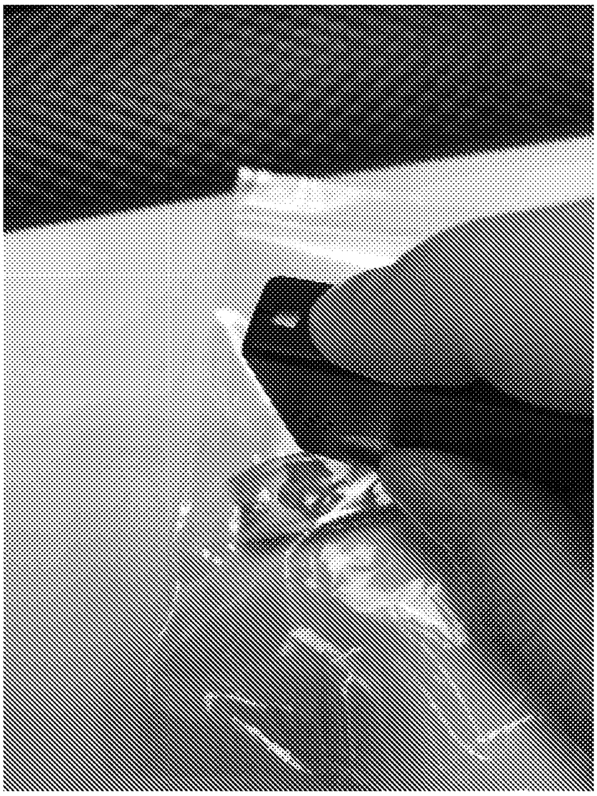

Fig. 16A

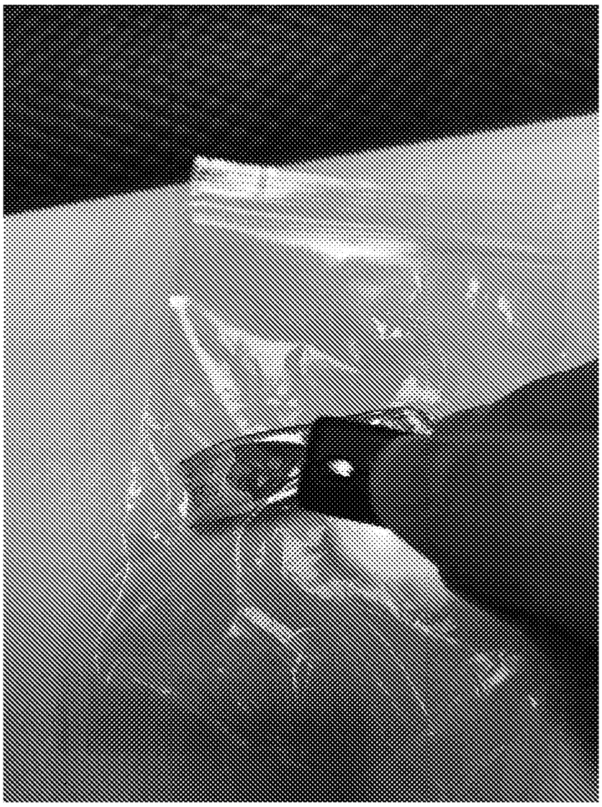

Fig. 16B

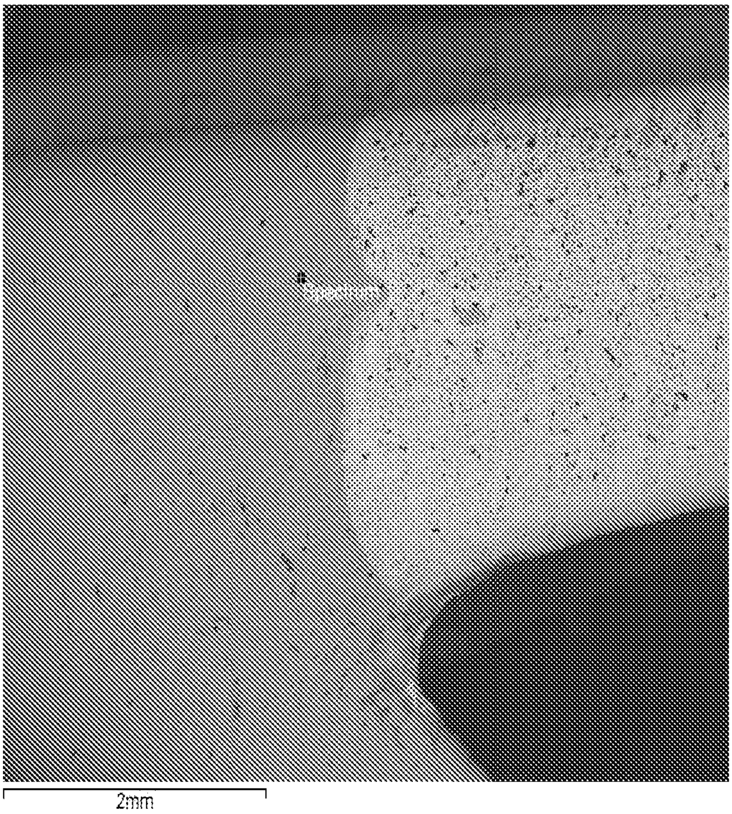


Fig. 16C

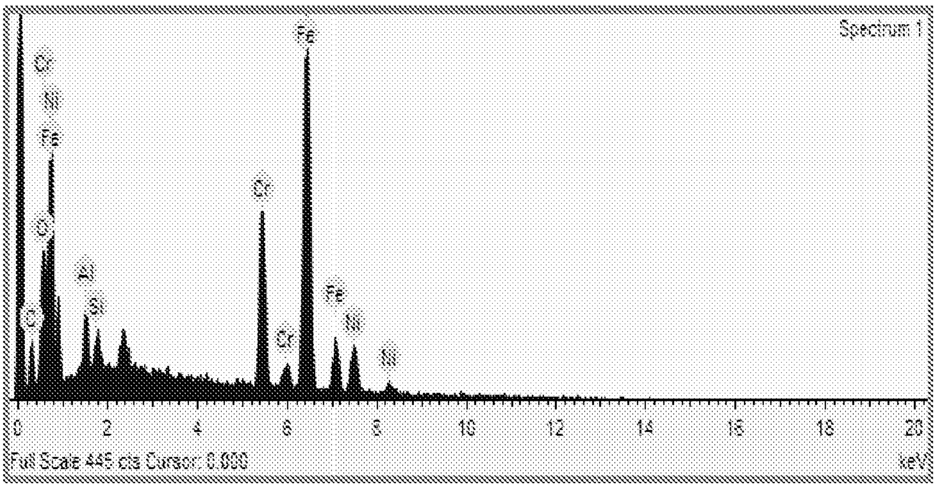


Fig. 16D

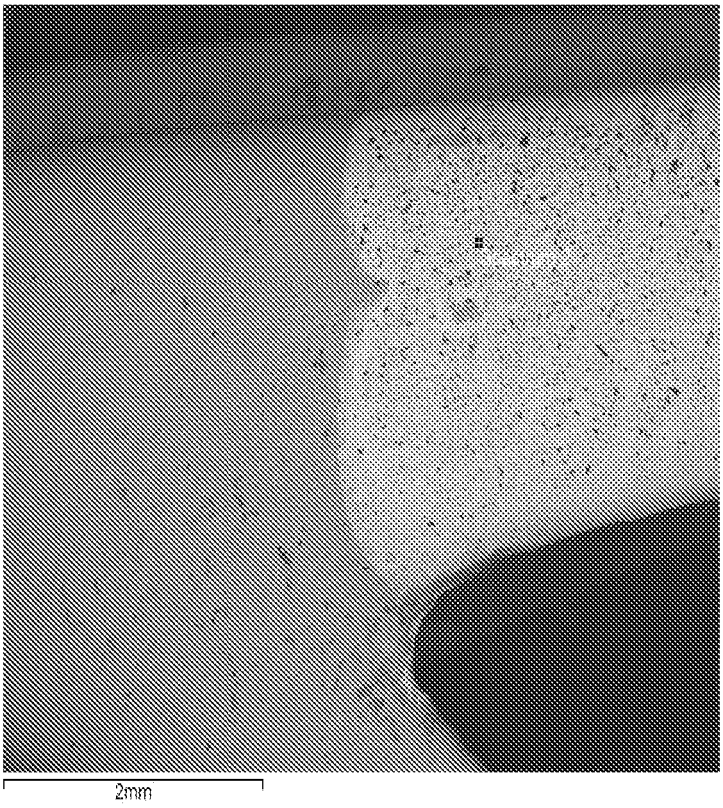


Fig. 16E

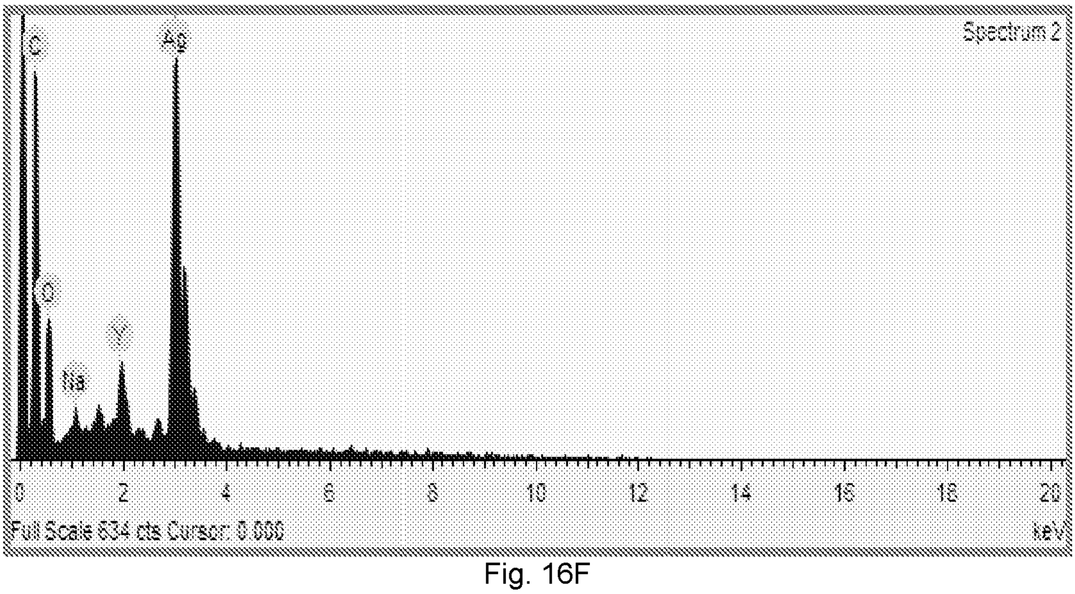


Fig. 16F

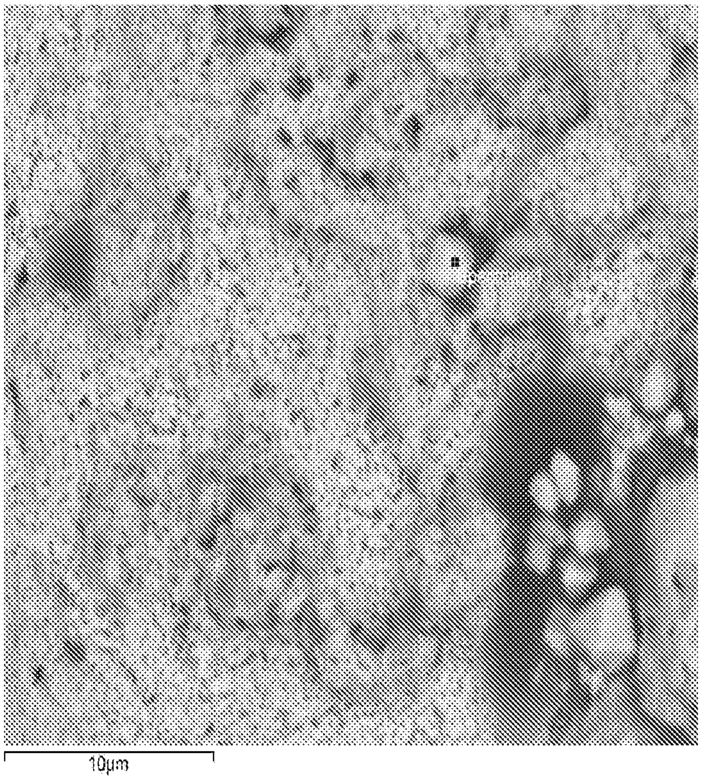


Fig. 16G

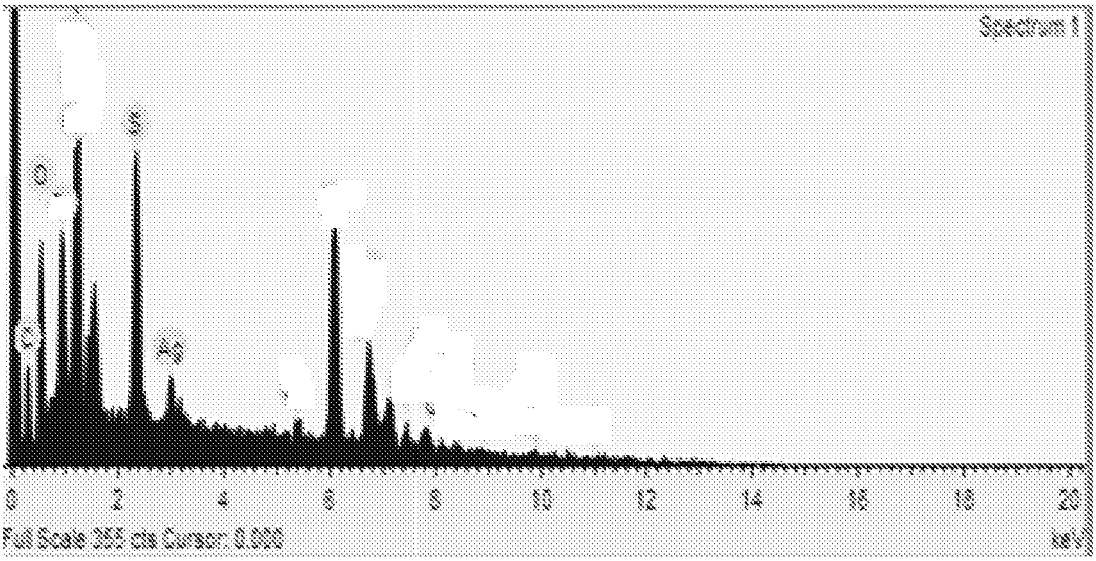


Fig. 16H

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0253543 A
- US 2007281140 A
- US 2007190298 A
- WO 0239135 A
- WO 2009096492 A
- WO 2014181127 A

### Non-patent literature cited in the description

- **R.C. ROPP.** Luminescence and the Solid State
- **WALKER, S. B. ; LEWIS, J. A.** Reactive silver inks for patterning high-conductivity features at mild temperatures. *Journal of the American Chemical Society,* 2012, vol. 134 (3), 1419-1421, https://doi.org/10.1021/ja209267c